# EUROPEAN PATENT APPLICATION

(11) **EP 4 651 104 A1**
(43) Date of publication of application: **19.11.2025**
(21) Application number: 25176219.1
(22) Date of filing: 13.05.2025
(51) Int. Cl.: G06V 30/20, G06V 30/32, G06F 3/04883

(54) **HANDWRITING**

(30) Priority: 13.05.2024 US 202463646516 P; 09.06.2024 US 202463657885 P; 07.05.2025 US 202519201522
(71) Applicant: Apple Inc., Cupertino, CA 95014 (US)
(72) Inventor: DIXON, Ryan S., Cupertino, California, 95014 (US); REMPFLER, Markus, Cupertino, California, 95014 (US); DESELAERS, Thomas, Cupertino, California, 95014 (US); THIMBLEBY, William J., Cupertino, California, 95014 (US); DELAYE, Adrien, Cupertino, California, 95014 (US); CONDON, Michael P., Cupertino, California, 95014 (US)
(74) Representative: Simmons & Simmons

(57) **Abstract**

The present disclosure generally relates to handwritten content. Some techniques are for generating a different representation of text in accordance with some embodiments. Other techniques are for reflowing content differently based on a corresponding location of content in accordance with some embodiments. Other techniques are for automatically refining a representation of text in accordance with some embodiments. Other techniques are for pre-generating representations of corrections for a representation of text before receiving a request for a correction in accordance with some embodiments. Other techniques are for obtaining a representation of text based on an existing representation of text in accordance with some embodiments. Other techniques are for reflowing content using obtained reflowable content in accordance with some embodiments.

## Description

### CROSS-REFERENCE TO RELATED APPLICATIONS

This application claims priority to U.S. Provisional Patent Application Serial No. 63/657,885, entitled "HANDWRITING" filed June 9, 2024, and to U.S. Provisional Patent Application Serial No. 63/646,516, entitled "HANDWRITING" filed May 13, 2024, which are hereby incorporated by reference in their entireties for all purposes.

### BACKGROUND

Users often interact with electronic devices in many different manners. However, current techniques for interacting with such electronic devices via handwriting is often ineffective and/or inefficient. Accordingly, there is a need for improved techniques related to handwritten content.

### SUMMARY

Current techniques related to handwritten content are generally ineffective and/or inefficient. For example, some techniques require users to manually transcribe handwritten content into typed text. This disclosure provides more effective and/or efficient techniques related to handwritten content using an example of a machine learning model that can recognize and/or synthesize handwritten content. It should be recognized that other types of models can be used with techniques described herein. For example, a set of heuristic rules can be used to recognize and/or synthesize handwritten content using techniques described herein. In addition, techniques optionally complement or replace other techniques related to handwritten content.

Some techniques described herein include synthesizing handwritten text based on existing handwritten text. For example, a system process can receive a request from an application to synthesize a representation of text, such as a request to paste typed or handwritten text, beautify existing handwritten text, or generate handwritten text for a selected proofreading change. In response, the system process can synthesize different representations of the text using a machine learning model and provides the representation to the application. Other techniques described herein relate to understanding handwritten text for reflowing. For example, when receiving a representation of content in a document, a system process can identify a set of reflowable tokens within the content. After identifying the set of reflowable tokens, the system process can receive a request for reflowable tokens corresponding to a location within the document. The system process can then send a different set of reflowable tokens depending on the location. Other techniques described herein include automatically refining handwritten text. For example, an application can repeatedly request handwriting recognition and selectively request a new version of the handwriting. Through this iterative process, the handwritten text can be refined based on recognition results. Other techniques described herein include pre-recognizing handwriting for proofreading. For example, in conjunction with requesting handwriting recognition, an application can receive correction candidates in a non-handwritten format. Simultaneously, the system process can generate synthesized representations for the correction candidates before receiving a request for a synthesized representation of a selected correction.

In some embodiments, a method that is performed at a system process of a device is described. In some embodiments, the method comprises: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a non-transitory computer-readable storage medium storing one or more programs configured to be executed by one or more processors of a device executing a system process is described. In some embodiments, the one or more programs includes instructions for: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a transitory computer-readable storage medium storing one or more programs configured to be executed by one or more processors of a device executing a system process is described. In some embodiments, the one or more programs includes instructions for: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a device executing a system process is described. In some embodiments, the device comprises one or more processors and memory storing one or more programs configured to be executed by the one or more processors. In some embodiments, the one or more programs includes instructions for: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a device executing a system process is described. In some embodiments, the device comprises means for performing each of the following steps: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a computer program product is described. In some embodiments, the computer program product comprises one or more programs configured to be executed by one or more processors of a device executing a system process. In some embodiments, the one or more programs include instructions for: receiving, from a first application, a request to synthesize a representation of text; in response to receiving the request to synthesize a representation of the text: in accordance with a determination that a first set of one or more criteria is satisfied, synthesizing, using a diffusion model, a first representation of the text; and in accordance with a determination that a second set of one or more criteria, different from the first set of one or more criteria, is satisfied, synthesizing, using the diffusion model, a second representation of the text different from the first representation of the text; after synthesizing the first representation of the text, providing, to the first application, the first representation of the text; and after synthesizing the second representation of the text, providing, to the first application, the second representation of the text.

In some embodiments, a method that is performed at a device executing a system process is described. In some embodiments, the method comprises: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a non-transitory computer-readable storage medium storing one or more programs configured to be executed by one or more processors of a device executing a system process is described. In some embodiments, the one or more programs includes instructions for: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a transitory computer-readable storage medium storing one or more programs configured to be executed by one or more processors of a device executing a system process is described. In some embodiments, the one or more programs includes instructions for: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a device executing a system process is described. In some embodiments, the device comprises one or more processors and memory storing one or more programs configured to be executed by the one or more processors. In some embodiments, the one or more programs includes instructions for: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a device executing a system process is described. In some embodiments, the device comprises means for performing each of the following steps: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a computer program product is described. In some embodiments, the computer program product comprises one or more programs configured to be executed by one or more processors of a system process of a device. In some embodiments, the one or more programs include instructions for: receiving a representation of content in a document; in response to receiving the representation of the content in the document, identifying, using the representation, one or more reflowable tokens within the content; after identifying the one or more reflowable tokens within the content, receiving a request for reflowable tokens corresponding to a respective location within the document; and in response to receiving the request for reflowable tokens corresponding to the respective location within the document: in accordance with a determination that the respective location is a first location, providing a first set of one or more reflowable tokens included in the one or more reflowable tokens; and in accordance with a determination that the respective location is a second location different from the first location, providing a second set of one or more reflowable tokens included in the one or more reflowable tokens, wherein the second set of one or more reflowable tokens is different from the first set of one or more reflowable tokens.

In some embodiments, a method that is performed at a first process of a computer system that is in communication with an input device is described. In some embodiments, the method comprises: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a non-transitory computer-readable storage medium storing one or more programs configured to be executed by one or more processors of a computer system executing a first process is described. In some embodiments, the computer system is in communication with an input device. In some embodiments, the one or more programs includes instructions for: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a transitory computer-readable storage medium storing one or more programs configured to be executed by one or more processors of a computer system executing a first process is described. In some embodiments, the computer system is in communication with an input device. In some embodiments, the one or more programs includes instructions for: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a computer system configured to communicate with an input device is described. In some embodiments, the computer system is executing a system process. In some embodiments, the computer system comprises one or more processors and memory storing one or more programs configured to be executed by the one or more processors. In some embodiments, the one or more programs includes instructions for: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a computer system configured to communicate with an input device is described. In some embodiments, the computer system is executing a system process. In some embodiments, the computer system comprises means for performing each of the following steps: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a computer program product is described. In some embodiments, the computer program product comprises one or more programs configured to be executed by one or more processors of a computer system that is in communication with an input device. In some embodiments, the computer system is executing a system process. In some embodiments, the one or more programs include instructions for: detecting, via the input device, an input corresponding to a first set of one or more handwritten strokes; in response to detecting the input corresponding to the first set of one or more handwritten strokes, sending, to a second process of the computer system different from the first process of the computer system, a request to recognize the first set of one or more handwritten strokes; after sending the request to recognize the first set of one or more handwritten strokes, receiving, from the second process, a first transcription corresponding to the first set of one or more handwritten strokes; after receiving the first transcription corresponding to the first set of one or more handwritten strokes, detecting, via the input device, an input corresponding to a second set of one or more handwritten strokes, wherein the input corresponding to the second set of one or more handwritten strokes is separate from the input corresponding to the first set of one or more handwritten strokes; in response to detecting the input corresponding to the second set of one or more handwritten strokes, sending, to the second process, a request to recognize the second set of one or more handwritten strokes; after sending the request to recognize the second set of one or more handwritten strokes, receiving, from the second process, a second transcription corresponding to at least the second set of one or more handwritten strokes; in response to receiving the second transcript corresponding to at least the second set of one or more handwritten strokes: in accordance with a determination that a first set of one or more criteria is satisfied, sending, to a third process of the computer system, a request to generate a representation of the first set of one or more handwritten strokes and the second set of one or more handwritten strokes, wherein the third process is different from the first process; and in accordance with a determination that a second set of one or more criteria, different from the first set of one or more criteria, is satisfied, forgoing send of, to the third process of the computer system, the request to generate a representation of the first set of one or more handwritten strokes and the second set of one or more handwritten strokes; while displaying the first set of one or more handwritten strokes and the second set of one or more handwritten strokes and after sending the request to generate a representation of the first set of one or more handwritten strokes and the second set of one or more handwritten strokes, receiving, from the third process, a first representation of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes; and in response to receiving the first representation of the first set of one or more handwritten strokes and the second set of one or more handwritten strokes, replacing display of the first set of one or more handwritten strokes and the second set of one or more handwritten strokes with display of the first representation of the first set of one or more handwritten strokes and the second set of one or more handwritten strokes.

In some embodiments, a method that is performed at a first application of a device is described. In some embodiments, the method comprises: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a non-transitory computer-readable storage medium storing one or more programs configured to be executed by one or more processors of a device executing a first application is described. In some embodiments, the one or more programs includes instructions for: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a transitory computer-readable storage medium storing one or more programs configured to be executed by one or more processors of a device executing a first application is described. In some embodiments, the one or more programs includes instructions for: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a device executing a first application is described. In some embodiments, the device comprises one or more processors and memory storing one or more programs configured to be executed by the one or more processors. In some embodiments, the one or more programs includes instructions for: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a device executing a first application is described. In some embodiments, the device comprises means for performing each of the following steps: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a computer program product is described. In some embodiments, the computer program product comprises one or more programs configured to be executed by one or more processors of a device executing a first application. In some embodiments, the one or more programs include instructions for: requesting handwriting recognition; in conjunction with requesting handwriting recognition, receiving a set of one or more correction candidates; after receiving the set of one or more correction candidates, sending a request for a synthesized representation of a correction candidate of the set of one or more correction candidates; and after receiving the synthesized representation of the correction candidate, displaying the synthesized representation of the correction candidate.

In some embodiments, a method that is performed at an application of a device is described. In some embodiments, the method comprises: obtaining a first representation of text; generating a first request to synthesize the first representation of text; and providing the first request to an operating system via a text synthesis API for synthesizing, using a diffusion model, different representations of text based on information associated with the first request.

In some embodiments, a non-transitory computer-readable storage medium storing one or more programs configured to be executed by one or more processors of a device executing an application is described. In some embodiments, the one or more programs includes instructions for: obtaining a first representation of text; generating a first request to synthesize the first representation of text; and providing the first request to an operating system via a text synthesis API for synthesizing, using a diffusion model, different representations of text based on information associated with the first request.

In some embodiments, a transitory computer-readable storage medium storing one or more programs configured to be executed by one or more processors of a device executing an application is described. In some embodiments, the one or more programs includes instructions for: obtaining a first representation of text; generating a first request to synthesize the first representation of text; and providing the first request to an operating system via a text synthesis API for synthesizing, using a diffusion model, different representations of text based on information associated with the first request.

In some embodiments, a device executing an application is described. In some embodiments, the device comprises one or more processors and memory storing one or more programs configured to be executed by the one or more processors. In some embodiments, the one or more programs includes instructions for: obtaining a first representation of text; generating a first request to synthesize the first representation of text; and providing the first request to an operating system via a text synthesis API for synthesizing, using a diffusion model, different representations of text based on information associated with the first request.

In some embodiments a device executing an application is described. In some embodiments, the device comprises means for performing each of the following steps: obtaining a first representation of text; generating a first request to synthesize the first representation of text; and providing the first request to an operating system via a text synthesis API for synthesizing, using a diffusion model, different representations of text based on information associated with the first request.

In some embodiments, a computer program product is described. In some embodiments, the computer program product comprises one or more programs configured to be executed by one or more processors of a device executing an application. In some embodiments, the one or more programs include instructions for: obtaining a first representation of text; generating a first request to synthesize the first representation of text; and providing the first request to an operating system via a text synthesis API for synthesizing, using a diffusion model, different representations of text based on information associated with the first request.

In some embodiments, a method that is performed at an application of a device is described. In some embodiments, the method comprises: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

In some embodiments, a non-transitory computer-readable storage medium storing one or more programs configured to be executed by one or more processors of a device executing an application is described. In some embodiments, the one or more programs includes instructions for: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

In some embodiments, a transitory computer-readable storage medium storing one or more programs configured to be executed by one or more processors of a device executing an application is described. In some embodiments, the one or more programs includes instructions for: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

In some embodiments, a device executing an application is described. In some embodiments, the device comprises one or more processors and memory storing one or more programs configured to be executed by the one or more processors. In some embodiments, the one or more programs includes instructions for: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

In some embodiments, a device executing an application is described. In some embodiments, the device comprises means for performing each of the following steps: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

In some embodiments, a computer program product is described. In some embodiments, the computer program product comprises one or more programs configured to be executed by one or more processors of a device executing an application. In some embodiments, the one or more programs include instructions for: providing a representation of handwriting content in a document to an operating system via an API call to a handwriting API for manipulating handwritten content; obtaining a set of one or more reflowable tokens corresponding to a response to the API call; obtaining user input corresponding to a reflow of the representation of handwriting content; and reflowing the representation of handwriting content using the obtained set of one or more reflowable tokens.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

### DESCRIPTION OF THE FIGURES

For a better understanding of the various described embodiments, reference should be made to the Detailed Description below, in conjunction with the following drawings in which like reference numerals refer to corresponding parts throughout the figures.
FIG. 1A is a block diagram illustrating a compute system in accordance with some embodiments.
FIG. 1B is a flow diagram illustrating a method for an application in accordance with some embodiments.
FIG. 1C is a flow diagram illustrating another method for an application in accordance with some embodiments.
FIG. 1D is a block diagram illustrating a device in accordance with some embodiments.
FIG. 2 is a block diagram illustrating a device with interconnected subsystems in accordance with some embodiments.
FIG. 3 illustrates an architecture for synthesizing handwritten text based on existing handwritten text in accordance with some embodiments.
FIG. 4 is a flow diagram illustrating a method for generating a different representation of text in accordance with some embodiments.
FIG. 5 illustrates an exemplary architecture for understanding handwritten text for reflowing in accordance with some embodiments.
FIG. 6 is a flow diagram illustrating a method for reflowing content differently based on a corresponding location of content in accordance with some embodiments.
FIG. 7 illustrates an exemplary architecture for automatically refining handwritten text in accordance with some embodiments.
FIGS. 8A-8B are flow diagrams illustrating a method for automatically refining a representation of text based in accordance with some embodiments.
FIG. 9 illustrates an exemplary architecture for providing proofreading suggestions and/or corrections for handwritten text in accordance with some embodiments.
FIG. 10 is a flow diagram illustrating a method for pre-generating representations of corrections for a representation of text before receiving a request for a correction in accordance with some embodiments.
FIG. 11 is a flow diagram illustrating a method for obtaining a representation of text based on an existing representation of text in accordance with some embodiments.
FIG. 12 is a flow diagram illustrating a method for reflowing content using obtained reflowable content in accordance with some embodiments.
FIG. 13A-13AG illustrate exemplary user interfaces for handwriting features in accordance with some embodiments.

### DETAILED DESCRIPTION

The following description sets forth exemplary methods, parameters, and the like. It should be recognized, however, that such description is not intended as a limitation on the scope of the present disclosure but is instead provided as a description of exemplary embodiments.

Methods described herein can include one or more steps that are contingent upon one or more conditions being satisfied. It should be understood that a method can occur over multiple iterations of the same process with different steps of the method being satisfied in different iterations. For example, if a method requires performing a first step upon a determination that a set of one or more criteria is met and a second step upon a determination that the set of one or more criteria is not met, a person of ordinary skill in the art would appreciate that the steps of the method are repeated until both conditions, in no particular order, are satisfied. Thus, a method described with steps that are contingent upon a condition being satisfied can be rewritten as a method that is repeated until each of the conditions described in the method are satisfied. This, however, is not required of system or computer readable medium claims where the system or computer readable medium claims include instructions for performing one or more steps that are contingent upon one or more conditions being satisfied. Because the instructions for the system or computer readable medium claims are stored in one or more processors and/or at one or more memory locations, the system or computer readable medium claims include logic that can determine whether the one or more conditions have been satisfied without explicitly repeating steps of a method until all of the conditions upon which steps in the method are contingent have been satisfied. A person having ordinary skill in the art would also understand that, similar to a method with contingent steps, a system or computer readable storage medium can repeat the steps of a method as many times as needed to ensure that all of the contingent steps have been performed.

Although the following description uses terms "first," "second," etc. to describe various elements, these elements should not be limited by the terms. In some embodiments, these terms are used to distinguish one element from another. For example, a first subsystem could be termed a second subsystem, and, similarly, a second subsystem device or a subsystem device could be termed a first subsystem device, without departing from the scope of the various described embodiments. In some embodiments, the first subsystem and the second subsystem are two separate references to the same subsystem. In some embodiments, the first subsystem and the second subsystem are both subsystems, but they are not the same subsystem or the same type of subsystem.

The terminology used in the description of the various described embodiments herein is for the purpose of describing particular embodiments only and is not intended to be limiting. As used in the description of the various described embodiments and the appended claims, the singular forms "a,'' "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when," "upon," "in response to determining," "in response to detecting," or "in accordance with a determination that" depending on the context. Similarly, the phrase "if it is determined" or "if [a stated condition or event] is detected" is, optionally, construed to mean "upon determining," "in response to determining," "upon detecting [the stated condition or event]," "in response to detecting [the stated condition or event]," or "in accordance with a determination that [the stated condition or event]" depending on the context.

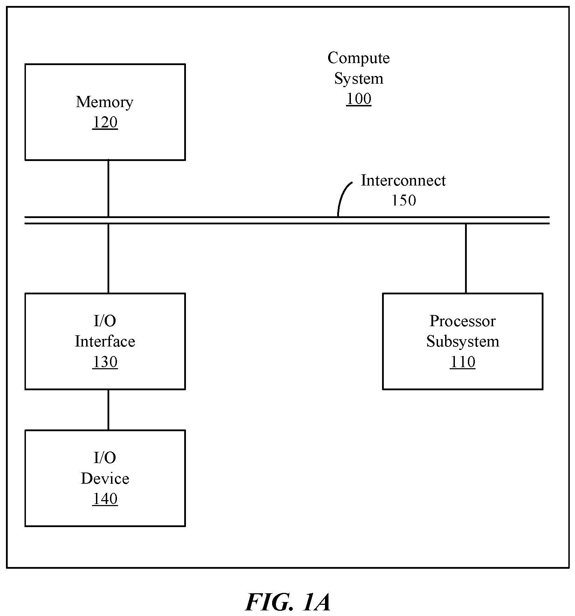

Turning to FIG. 1A, a block diagram of compute system 100 is illustrated. Compute system 100 is a non-limiting example of a compute system that can be used to perform functionality described herein. It should be recognized that other computer architectures of a compute system can be used to perform functionality described herein.

In the illustrated example, compute system 100 includes processor subsystem 110 communicating with (e.g., wired or wirelessly) memory 120 (e.g., a system memory) and I/O interface 130 via interconnect 150 (e.g., a system bus, one or more memory locations, or other communication channel for connecting multiple components of compute system 100). In addition, I/O interface 130 is communicating with (e.g., wired or wirelessly) to I/O device 140. In some embodiments, I/O interface 130 is included with I/O device 140 such that the two are a single component. It should be recognized that there can be one or more I/O interfaces, with each I/O interface communicating with one or more I/O devices. In some embodiments, multiple instances of processor subsystem 110 can be communicating via interconnect 150.

Compute system 100 can be any of various types of devices, including, but not limited to, a system on a chip, a server system, a personal computer system (e.g., a smartphone, a smartwatch, a wearable device, a tablet, a laptop computer, and/or a desktop computer), a sensor, or the like. In some embodiments, compute system 100 is included or communicating with a physical component for the purpose of modifying the physical component in response to an instruction. In some embodiments, compute system 100 receives an instruction to modify a physical component and, in response to the instruction, causes the physical component to be modified. In some embodiments, the physical component is modified via an actuator, an electric signal, and/or algorithm. Examples of such physical components include an acceleration control, a break, a gear box, a hinge, a motor, a pump, a refrigeration system, a spring, a suspension system, a steering control, a pump, a vacuum system, and/or a valve. In some embodiments, a sensor includes one or more hardware components that detect information about a physical environment in proximity to (e.g., surrounding) the sensor. In some embodiments, a hardware component of a sensor includes a sensing component (e.g., an image sensor or temperature sensor), a transmitting component (e.g., a laser or radio transmitter), a receiving component (e.g., a laser or radio receiver), or any combination thereof. Examples of sensors include an angle sensor, a chemical sensor, a brake pressure sensor, a contact sensor, a non-contact sensor, an electrical sensor, a flow sensor, a force sensor, a gas sensor, a humidity sensor, an image sensor (e.g., a camera sensor, a radar sensor, and/or a LiDAR sensor), an inertial measurement unit, a leak sensor, a level sensor, a light detection and ranging system, a metal sensor, a motion sensor, a particle sensor, a photoelectric sensor, a position sensor (e.g., a global positioning system), a precipitation sensor, a pressure sensor, a proximity sensor, a radio detection and ranging system, a radiation sensor, a speed sensor (e.g., measures the speed of an object), a temperature sensor, a time-of-flight sensor, a torque sensor, and an ultrasonic sensor. In some embodiments, a sensor includes a combination of multiple sensors. In some embodiments, sensor data is captured by fusing data from one sensor with data from one or more other sensors. Although a single compute system is shown in FIG. 1A, compute system 100 can also be implemented as two or more compute systems operating together.

In some embodiments, processor subsystem 110 includes one or more processors or processing units configured to execute program instructions to perform functionality described herein. For example, processor subsystem 110 can execute an operating system, a middleware system, one or more applications, or any combination thereof.

In some embodiments, the operating system manages resources of compute system 100. Examples of types of operating systems covered herein include batch operating systems (e.g., Multiple Virtual Storage (MVS)), time-sharing operating systems (e.g., Unix), distributed operating systems (e.g., Advanced Interactive eXecutive (AIX), network operating systems (e.g., Microsoft Windows Server), and real-time operating systems (e.g., QNX). In some embodiments, the operating system includes various procedures, sets of instructions, software components, and/or drivers for controlling and managing general system tasks (e.g., memory management, storage device control, power management, or the like) and for facilitating communication between various hardware and software components. In some embodiments, the operating system uses a priority-based scheduler that assigns a priority to different tasks that processor subsystem 110 can execute. In such examples, the priority assigned to a task is used to identify a next task to execute. In some embodiments, the priority-based scheduler identifies a next task to execute when a previous task finishes executing. In some embodiments, the highest priority task runs to completion unless another higher priority task is made ready.

In some embodiments, the middleware system provides one or more services and/or capabilities to applications (e.g., the one or more applications running on processor subsystem 110) outside of what the operating system offers (e.g., data management, application services, messaging, authentication, API management, or the like). In some embodiments, the middleware system is designed for a heterogeneous computer cluster to provide hardware abstraction, low-level device control, implementation of commonly used functionality, message-passing between processes, package management, or any combination thereof. Examples of middleware systems include Lightweight Communications and Marshalling (LCM), PX4, Robot Operating System (ROS), and ZeroMQ. In some embodiments, the middleware system represents processes and/or operations using a graph architecture, where processing takes place in nodes that can receive, post, and multiplex sensor data messages, control messages, state messages, planning messages, actuator messages, and other messages. In such examples, the graph architecture can define an application (e.g., an application executing on processor subsystem 110 as described above) such that different operations of the application are included with different nodes in the graph architecture.

In some embodiments, a message sent from a first node in a graph architecture to a second node in the graph architecture is performed using a publish-subscribe model, where the first node publishes data on a channel in which the second node can subscribe. In such examples, the first node can store data in memory (e.g., memory 120 or some local memory of processor subsystem 110) and notify the second node that the data has been stored in the memory. In some embodiments, the first node notifies the second node that the data has been stored in the memory by sending a pointer (e.g., a memory pointer, such as an identification of a memory location) to the second node so that the second node can access the data from where the first node stored the data. In some embodiments, the first node would send the data directly to the second node so that the second node would not need to access a memory based on data received from the first node.

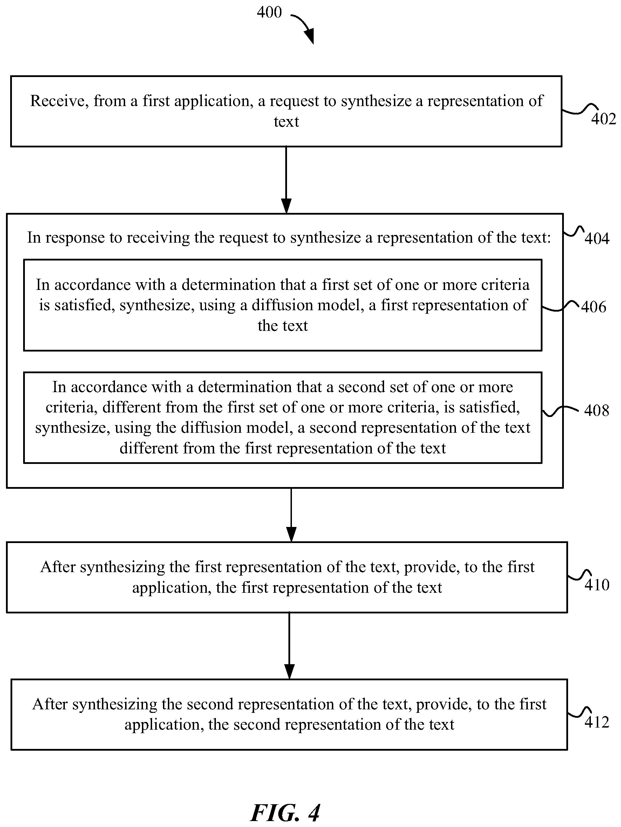

Memory 120 can include a computer readable medium (e.g., non-transitory or transitory computer readable medium) usable to store (e.g., configured to store, assigned to store, and/or that stores) program instructions executable by processor subsystem 110 to cause compute system 100 to perform various operations described herein. For example, memory 120 can store program instructions to implement the functionality associated with methods 400, 600, 800, 1000, 1100, and 1200 (FIGS. 4, 6, 8A-8B, 10, 11, and 12) described below.

Memory 120 can be implemented using different physical, non-transitory memory media, such as hard disk storage, floppy disk storage, removable disk storage, flash memory, random access memory (RAM-SRAM, EDO RAM, SDRAM, DDR SDRAM, RAMBUS RAM, or the like), read only memory (PROM, EEPROM, or the like), or the like. Memory in compute system 100 is not limited to primary storage such as memory 120. Compute system 100 can also include other forms of storage such as cache memory in processor subsystem 110 and secondary storage on I/O device 140 (e.g., a hard drive, storage array, etc.). In some embodiments, these other forms of storage can also store program instructions executable by processor subsystem 110 to perform operations described herein. In some embodiments, processor subsystem 110 (or each processor within processor subsystem 110) contains a cache or other form of on-board memory.

I/O interface 130 can be any of various types of interfaces configured to communicate with other devices. In some embodiments, I/O interface 130 includes a bridge chip (e.g., Southbridge) from a front-side bus to one or more back-side buses. I/O interface 130 can communicate with one or more I/O devices (e.g., I/O device 140) via one or more corresponding buses or other interfaces. Examples of I/O devices include storage devices (hard drive, optical drive, removable flash drive, storage array, SAN, or their associated controller), network interface devices (e.g., to a local or wide-area network), sensor devices (e.g., camera, radar, LiDAR, ultrasonic sensor, GPS, inertial measurement device, or the like), and auditory or visual output devices (e.g., speaker, light, screen, projector, or the like). In some embodiments, compute system 100 is communicating with a network via a network interface device (e.g., configured to communicate over Wi-Fi, Bluetooth, Ethernet, or the like). In some embodiments, compute system 100 is directly or wired to the network.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

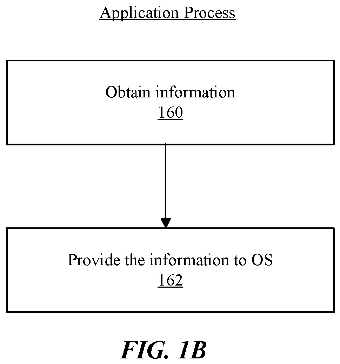

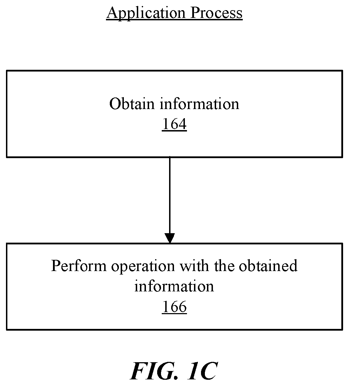

Implementations within the scope of the present disclosure include a computer-readable storage medium that encodes instructions organized as an application (e.g., application 170) that, when executed by one or more processing units, control an electronic device (e.g., device 168) to perform the method of FIG. 1B, the method of FIG. 1C, and/or one or more other processes and/or methods described herein.

It should be recognized that application 170 can be any suitable type of application, including, for example, one or more of: a messaging application, a maps application, a fitness application, a health application, a digital payments application, a media application, and/or a social network application. In some embodiments, application 170 is an application that is pre-installed on device 168 at purchase (e.g., a first party application). In other embodiments, application 170 is an application that is provided to device 168 via an operating system update file (e.g., a first party application or a second party application). In other embodiments, application 170 is an application that is provided via an application store. In some embodiments, the application store can be an application store that is pre-installed on device 168 at purchase (e.g., a first party application store). In other embodiments, the application store is a third-party application store (e.g., an application store that is provided by another application store, downloaded via a network, and/or read from a storage device).

Referring to FIG. 1B, application 170 obtains information (e.g., 160). In some embodiments, the information obtained at 160 includes positional information, time information, notification information, user information, environment information, electronic device state information, weather information, media information, historical information, event information, hardware information, and/or motion information. In some embodiments, in response to and/or after obtaining the information at 160, application 170 provides the information to operating system (e.g., 162).

Referring to FIG. 1C, application 170 obtains information (e.g., 164). In some embodiments, the information obtained at 164 includes positional information, time information, notification information, user information, environment information electronic device state information, weather information, media information, historical information, event information, hardware information and/or motion information. in response to and/or after obtaining the information at 164, application 170 performs an operation with the information (e.g., 166). In some embodiments, the operation performed at 166 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of operating system 180 based on the information.

In some embodiments, one or more steps of the method of FIG. 1B and/or the method of FIG. 1C is performed in response to a trigger. In some embodiments, the trigger includes detection of an event, a notification received from operating system 180, a user input, and/or a response to a call to an API provided by operating system 180.

In some embodiments, the instructions of application 170, when executed, control device 168 to perform the method of FIG. 1B and/or the method of FIG. 1C by calling an application programming interface (API) (e.g., API 176) provided by operating system 180. In some embodiments, application 170 performs at least a portion of the method of FIG. 1B and/or the method of FIG. 1C without calling API 176.

In some embodiments, one or more steps of the method of FIG. 1B and/or the method of FIG. 1C includes calling an API (e.g., API 176) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

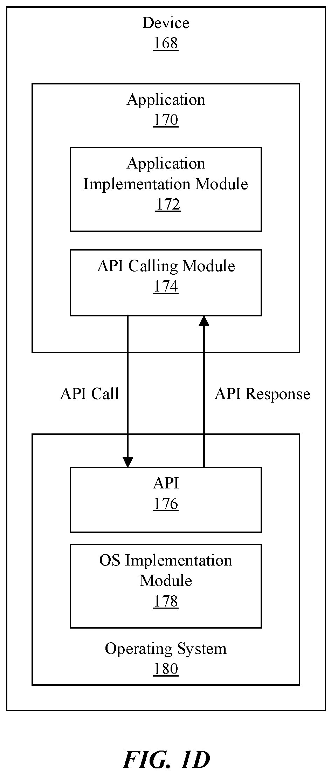

Referring to FIG. 1D, device 168 is illustrated. In some embodiments, device 168 is a personal computing device, a smart phone, a smart watch, a fitness tracker, a head mounted display (HMD) device, a media device, a communal device, a speaker, a television, and/or a tablet. As illustrated in FIG. 1D, device 168 includes application 170 and operating system 180. Application 170 includes application implementation module 172 and API calling module 174. Operating system 180 includes API 176 and OS implementation module 178. It should be recognized that device 168, application 170, and/or operating system 180 can include more, fewer, and/or different components than illustrated in FIG. 1D.

In some embodiments, application implementation module 172 includes a set of one or more instructions corresponding to one or more operations performed by application 170. For example, when application 170 is a messaging application, application implementation module 172 can include operations to receive and send messages. In some embodiments, application implementation module 172 communicates with API calling module to communicate with operating system 180 via API 176.

In some embodiments, API 176 is a software module (e.g., a collection of computer-readable instructions) that provides an interface that allows a different module (e.g., API calling module 174) to access and/or use one or more functions, methods, procedures, data structures, classes, and/or other services provided by OS implementation module 178 of operating system 180. For example, API-calling module 174 can access a feature of OS implementation module 178 through one or more API calls or invocations (e.g., embodied by a function or a method call) exposed by API 176 and can pass data and/or control information using one or more parameters via the API calls or invocations. In some embodiments, API 176 allows application 170 to use a service provided by a Software Development Kit (SDK) library. In other embodiments, application 170 incorporates a call to a function or method provided by the SDK library and provided by API 176 or uses data types or objects defined in the SDK library and provided by API 176. In some embodiments, API-calling module 174 makes an API call via API 176 to access and use a feature of OS implementation module 178 that is specified by API 176. In such embodiments, OS implementation module 178 can return a value via API 176 to API-calling module 174 in response to the API call. The value can report to application 170 the capabilities or state of a hardware component of device 168, including those related to aspects such as input capabilities and state, output capabilities and state, processing capability, power state, storage capacity and state, and/or communications capability. In some embodiments, API 176 is implemented in part by firmware, microcode, or other low level logic that executes in part on the hardware component.

In some embodiments, API 176 allows a developer of API-calling module 174 (which can be a third-party developer) to leverage a feature provided by OS implementation module 178. In such embodiments, there can be one or more API-calling modules (e.g., including API-calling module 174) that communicate with OS implementation module 178. In some embodiments, API 176 allows multiple API-calling modules written in different programming languages to communicate with OS implementation module 178 (e.g., API 176 can include features for translating calls and returns between OS implementation module 178 and API-calling module 174) while API 176 is implemented in terms of a specific programming language. In some embodiments, API-calling module 174 calls APIs from different providers such as a set of APIs from an OS provider, another set of APIs from a plug-in provider, and/or another set of APIs from another provider (e.g., the provider of a software library) or creator of the another set of APIs.

Examples of API 176 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a bluetooth API, an NFC API, a UWB API, a fitness API, a smart home API, contact transfer API, photos API, camera API, and/or image processing API. In some embodiments the sensor API is an API for accessing data associated with a sensor of device 168. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, OS implementation module 178 is an operating system software module (e.g., a collection of computer-readable instructions) that is constructed to perform an operation in response to receiving an API call via API 176. In some embodiments, OS implementation module 178 is constructed to provide an API response (via API 176) as a result of processing an API call. By way of example, OS implementation module 178 and API-calling module 180 can each be any one of an operating system, a library, a device driver, an API, an application program, or other module. It should be understood that OS implementation module 178 and API-calling module 174 can be the same or different type of module from each other. In some embodiments, OS implementation module 178 is embodied at least in part in firmware, microcode, or other hardware logic.

In some embodiments, OS implementation module 178 returns a value through API 176 in response to an API call from API-calling module 174. While API 176 defines the syntax and result of an API call (e.g., how to invoke the API call and what the API call does), API 176 might not reveal how OS implementation module 178 accomplishes the function specified by the API call. Various API calls are transferred via the one or more application programming interfaces between API-calling module 174 and OS implementation module 178. Transferring the API calls can include issuing, initiating, invoking, calling, receiving, returning, and/or responding to the function calls or messages. In other words, transferring can describe actions by either of API-calling module 174 or OS implementation module 178. In some embodiments, a function call or other invocation of API 176 sends and/or receives one or more parameters through a parameter list or other structure.

In some embodiments, OS implementation module 178 provides more than one API, each providing a different view of or with different aspects of functionality implemented by OS implementation module 178. For example, one API of OS implementation module 178 can provide a first set of functions and can be exposed to third party developers, and another API of OS implementation module 178 can be hidden (e.g., not exposed) and provide a subset of the first set of functions and also provide another set of functions, such as testing or debugging functions which are not in the first set of functions. In some embodiments, OS implementation module 178 calls one or more other components via an underlying API and thus be both an API calling module and an OS implementation module. It should be recognized that OS implementation module 178 can include additional functions, methods, classes, data structures, and/or other features that are not specified through API 176 and are not available to API calling module 174. It should also be recognized that API calling module 174 can be on the same system as OS implementation module 178 or can be located remotely and access OS implementation module 178 using API 176 over a network. In some embodiments, OS implementation module 178, API 176, and/or API-calling module 174 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

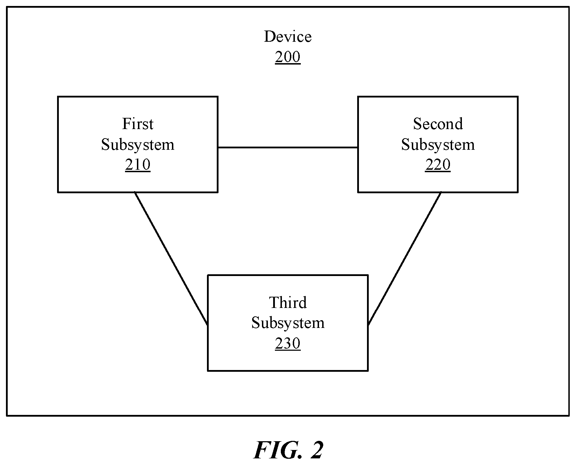

FIG. 2 illustrates a block diagram of device 200 with interconnected subsystems. In the illustrated example, device 200 includes three different subsystems (i.e., first subsystem 210, second subsystem 220, and third subsystem 230) communicating with (e.g., wired or wirelessly) each other, creating a network (e.g., a personal area network, a local area network, a wireless local area network, a metropolitan area network, a wide area network, a storage area network, a virtual private network, an enterprise internal private network, a campus area network, a system area network, and/or a controller area network). An example of a possible computer architecture of a subsystem as included in FIG. 2 is described in FIG. 1A (i.e., compute system 100). Although three subsystems are shown in FIG. 2, device 200 can include more or fewer subsystems.

In some embodiments, some subsystems are not connected to other subsystem (e.g., first subsystem 210 can be connected to second subsystem 220 and third subsystem 230 but second subsystem 220 cannot be connected to third subsystem 230). In some embodiments, some subsystems are connected via one or more wires while other subsystems are wirelessly connected. In some embodiments, messages are set between the first subsystem 210, second subsystem 220, and third subsystem 230, such that when a respective subsystem sends a message the other subsystems receive the message (e.g., via a wire and/or a bus). In some embodiments, one or more subsystems are wirelessly connected to one or more compute systems outside of device 200, such as a server system. In such examples, the subsystem can be configured to communicate wirelessly to the one or more compute systems outside of device 200.

In some embodiments, device 200 includes a housing that fully or partially encloses subsystems 210-230. Examples of device 200 include a home-appliance device (e.g., a refrigerator or an air conditioning system), a robot (e.g., a robotic arm or a robotic vacuum), and a vehicle. In some embodiments, device 200 is configured to navigate (with or without user input) in a physical environment.

In some embodiments, one or more subsystems of device 200 are used to control, manage, and/or receive data from one or more other subsystems of device 200 and/or one or more compute systems remote from device 200. For example, first subsystem 210 and second subsystem 220 can each be a camera that captures images, and third subsystem 230 can use the captured images for decision making. In some embodiments, at least a portion of device 200 functions as a distributed compute system. For example, a task can be split into different portions, where a first portion is executed by first subsystem 210 and a second portion is executed by second subsystem 220.

Attention is now directed towards techniques related to handwritten content. Such techniques are described in the context of a machine learning model (e.g., diffusion model described below) and/or pipeline that can synthesize, refine, reflow and/or proofread content. It should be recognized that other types of machine learning models and/or pipelines can be used with techniques described herein. For example, a neural network can be used with techniques described herein. In addition, techniques optionally complement or replace other techniques related to handwritten content.

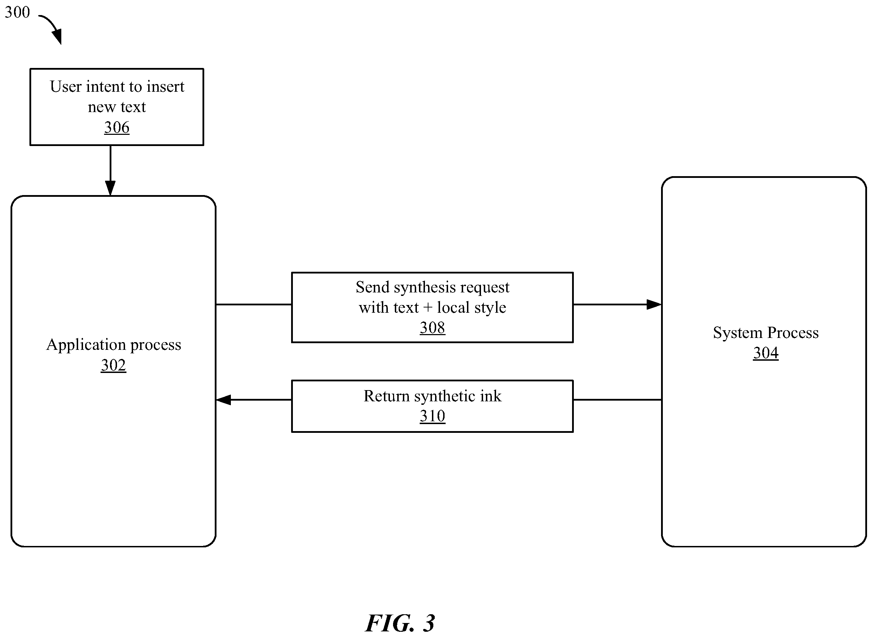

FIG. 3 illustrates an exemplary architecture for synthesizing handwritten text based on existing handwritten text in accordance with some embodiments. The exemplary architecture is used to illustrate the processes described below, including the processes in FIGS. 4, 6, 8A-8B, 10, 11, and 12. It should be recognized that some components of the exemplary architecture are, optionally, combined, changed, and/or omitted.

In some embodiments, architecture 300 includes application process 302 and system process 304. In some embodiments, application process 302 is a note-taking application that provides a canvas where a user can handwrite, type text, draw, and/or insert objects such as shapes, images, and/or videos. In some embodiments, system process 304 is a process for generating content such as synthesized text based on one or more inputs and/or one or more user intents. In some embodiments, application process 302 executes at a first device (e.g., a smart phone, a smart watch, a smart display, a tablet, a laptop, a fitness tracking device, a head-mounted display (HMD) device, a communal device, a media device, a speaker, a television, and/or a personal computing device) that in communication with a display generation component (e.g., a display screen, a projector, and/or a touch-sensitive display) and an input component (e.g., a camera, a depth sensor, a microphone, a hardware input mechanism, a rotatable input mechanism, a heart monitor, a temperature sensor, and/or a touch-sensitive surface). In some embodiments, system process 304 executes at the first device. In other embodiments, system process 304 executes at one or more computer devices (e.g., cloud server, data storage, and/or distributed computing cluster) that communicates with the first device over a network. It should be recognized that different applications and/or applications processes can use system process 304 as described herein.

In some embodiments, application process 302 detects (306) user intent to insert new text. The user intent can be detected through one or more methods, such as via a user handwriting new text (e.g., after a period of time without detecting handwriting and/or after a set of one or characters, words, and/or sentences have been written) and/or selecting an option and/or invoking a command to paste text, proofread text, change an appearance of handwritten text, convert typed text into handwriting, and/or insert new text. In response to detecting the user intent, application process 302 sends (308) synthesis request to system process 304. In some embodiments, the synthesis request includes text to be synthesized along with a local style. In some embodiments, the local style represents style characteristics of existing handwritten text in the document such as preceding and/or following paragraphs to where new text is to be inserted. For example, the local style can include stroke width, stroke curvature and/or shape, stroke ordering, stroke direction (e.g., writing direction), character shape, character size, slant angle, spacing between words and/or lines, and/or shape of connecting strokes between letters among other variables. In some embodiments, the synthesis request includes an image of text to be synthesized. In such embodiments, system process 304 can recognize text in the image.

In some embodiments, after receiving the synthesis request, system process 304 synthesizes the text (e.g., converts the text into handwritten text) using a global style and/or the local style provided in the synthesis request. In some embodiments, the global style is derived from a style sample repository (e.g., stored in a storage medium communicating with system process 304) (e.g., disk storage and/or in-memory storage) including representative samples of the user's handwriting style from one or more documents. In some embodiments, the global style includes the same example variables as the local style.

In some embodiments, system process 304 generates synthetic ink (e.g., handwritten text) that matches and/or closely resembles a style and/or visual characteristics of the user's global style and/or the local style included in synthesis request 308. For example, if the local style in the synthesis request is significantly different from the user's global style (e.g., surrounding text is printed while the user usually writes in cursive), system process 304 can put more weight on emulating the local style to ensure generated text blends in with surrounding text (e.g., preceding and/or following paragraphs), even though it deviates from the user's average cursive style. For another example, if the local style closely matches the user's global style (e.g., the user consistently writes in cursive, and the surrounding text is also in a similar cursive), system process 304 can prioritize the global style when generating the synthetic ink, since heavily optimizing for the local style may be unlikely to yield a meaningfully different visual result for synthesized text in this case. For another example, if system process 304 determines a lack of sufficient local style and/or global style information (e.g., the user has limited handwriting samples from one or more documents, and/or surrounding text is minimal), system process 304 can fall back on a general handwriting style learned from a diverse and/or large dataset of other users' handwriting samples, while still aiming to maintain consistency with any available local style. In some embodiments, system process 304 uses a machine learning model (e.g., diffusion model) to generate the synthetic ink (e.g., handwritten text). In some embodiments, the machine learning model is conditioned and/or trained on a dataset (e.g., global style) of handwriting samples of the user and learns to generate synthetic ink by iteratively refining and/or denoising an initial random output. In some embodiments, the machine learning model takes into account the global style, local style, and/or the text to be synthesized to produce the synthetic ink. In some embodiments, the synthetic ink (e.g., handwritten text) includes one or more individual computer-generated handwritten strokes. In some embodiments, each individual computer-generated handwritten stroke of the synthesized ink is independently selectable to perform an operation, such as move, change color, and/or change size. In some embodiments, the synthesized ink does not adapt to color and/or size when copying and pasting handwritten text. In some embodiments, the synthesized ink selectively adapts in color depending on what text is being copied and pasted. For example, if the text being copied is handwritten text, the synthetic ink might not be adapted to color while, if the text being copied is typed text, the synthesized ink might be adapted to color. In some embodiments, the synthesized ink adapts to color, size, style, and/or kerning. In some embodiments, the synthesized ink keeps and/or maintains a first set of one or more typographical emphasis (e.g., size, capitalization, and/or letter spacing) without keeping a second set of one or more typographical emphasis (e.g., bold italics, and/or underline). In some embodiments, the information that the machine learning model takes into account to generate the synthetic ink is tuned or optimized so that synthetic ink is likely to be pleasing to a human.

In some embodiments, system process 304 balances the local style and the global style based on their degree of alignment to ensure that the synthetic ink is visually cohesive with its surrounding context and/or is consistent with the user's handwriting patterns. In some embodiments, specific weights can be determined by the machine learning model during conditioning and/or training.

After synthesizing the new ink, system process 304 can generate word segmentation and/or alignment for synthesized ink 310. In some embodiments, word segmentation and/or alignment information maintains proper layout and/or spacing of handwritten text in a document and/or an appearance of a continuous handwritten passage when the handwritten text is pasted and/or inserted into the document. In some embodiments, the word segmentation specifies assignment of strokes of the synthesized ink to corresponding words to identify individual words within the synthesized ink (e.g., sentence, and/or paragraph of text). For example, if the text to be synthesized was "Hello world", the word segmentation would identify which strokes correspond to "Hello" and which strokes correspond to "world". In some embodiments, the alignment information specifies relative positioning and/or spacing of words. For example, the alignment information specifies how the words should be positioned relative to each other and/or surrounding text of where text is to be pasted and/or inserted.

System process 304 returns (310) synthetic ink to application process 302. In some embodiments, the synthetic ink is in a reflowable format to allow for easy insertion and/or pasting into a document and/or be adjusted to fit in available space. In some embodiments, the reflowable format includes word segmentation and/or alignment information that can be subsequently used by application process 302 to display the synthetic ink within the document and/or between surrounding text. In some embodiments, after receiving the synthetic ink, application process 302 inserts new strokes of the synthesized ink into the document. Additionally, application process 302 can reflow existing content and/or create additional space to accommodate inserted text (e.g., synthetic ink). In some embodiments, reflowing allows application process 302 to maintain consistency and/or overall layout and/or spacing of handwritten text (e.g., surrounding text and/or the synthetic ink) in the document.

FIG. 4 is a flow diagram illustrating a method (e.g., method 400) for generating a different representation of text in accordance with some embodiments. Some operations in method 400 are, optionally, combined, the orders of some operations are, optionally, changed, and some operations are, optionally, omitted.

As described below, method 400 provides an intuitive way for generating a different representation of text. Method 400 reduces the cognitive burden on a user, thereby creating a more efficient human-machine interface. For battery-operated computing devices, enabling a user to interact with such devices faster and more efficiently conserves power and increases the time between battery charges.

In some embodiments, method 400 is performed at a system process (e.g., a handwriting process and/or module and/or a content generation process and/or module) (e.g., 304) of a device (e.g., 1300). In some embodiments, the system process is part of and/or executing on behalf of an operating system of the device. In some embodiments, the system process facilitates communication between one or more applications of the device and one or more hardware components of the device. In some embodiments, the system process facilitates communication with secure processes and/or hardware-based processes (e.g., processes active while the device is locked and/or processes seeking to access a hardware component of the device). In some embodiments, the device is a watch, a phone, a tablet, a fitness tracking device, a processor, a head-mounted display (HMD) device, a communal device, a media device, a speaker, a television, an electronic device, and/or a personal computing device.

The system process receives (402), from a first application (e.g., a note-taking application, a word-processing application, a document-processing application, a presentation application, an email application, a form processing application such as a PDF viewer and/or editor, a game, a messaging application, a maps application, a fitness application, a health application, a digital payments application, a media application, and/or a social network application) (e.g., 302), a request to synthesize a representation of text (e.g., a set of one or more handwritten and/or typed words) (e.g., automatically-generated visual content and/or generative visual content) (e.g., 308, 714, 912, 605c, 605g, 605i, 605o, 605s, 605x, 605aa, 605ab, 605ac, 605ae, and/or 605af). In some embodiments, the request to synthesize a representation of the text is received from software corresponding to the first application and/or a framework (e.g., a software framework) that is used by the first application. In some embodiments, the framework is loaded in a process space of the first application. In some embodiments, the request to synthesize a representation of the text corresponds to and/or is a request to paste copied text (e.g., typed and/or handwritten text). In some embodiments, the request to synthesize a representation of the text corresponds to and/or is a request to changing an appearance of and/or refining existing handwritten text. In some embodiments, the request to synthesize a representation of the text corresponds to and/or is a request to generate handwritten text for a selected proofreading change to existing handwritten text. In some embodiments, the first application is different from the system process. In some embodiments, the first application is executing on the device. In some embodiments, the first application is executing on another device different from the device.

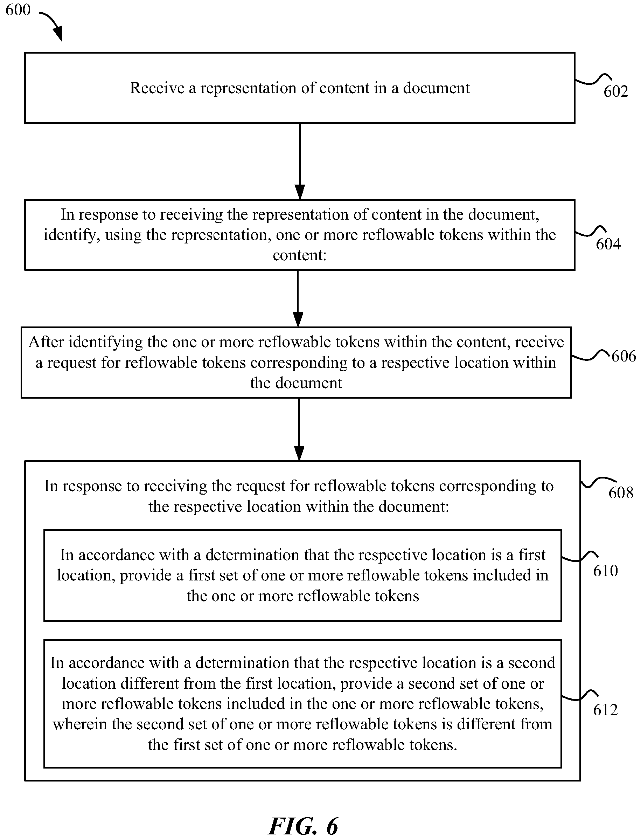

In response to (404) receiving the request to synthesize a representation of the text, in accordance with a determination that a first set of one or more criteria (e.g., local style, global style, and/or an operation being asked to be performed by the request to synthesize the representation of the text) is satisfied, the system process synthesizes (406), using a diffusion model (e.g., a conditional-based diffusion model) (e.g., used by an AI process or a generative AI process), a first representation (e.g., a first synthesized and/or computer-generated representation) (e.g., as illustrated in FIGS. 6H, 6J, 6T, 6Y, 6AB, 6AC, 6AD, and/or 6AG) of the text. In some embodiments, the first representation of the text is in a style corresponding to and/or consistent with a style identified in the request to synthesize a representation of text and/or a style corresponding to a user of the device.

In response to (404) receiving the request to synthesize the representation of the text, in accordance with a determination that a second set of one or more criteria, different from the first set of one or more criteria, is satisfied, the system process synthesizes (408), using the diffusion model, a second representation (e.g., a first synthesized and/or computer-generated representation) (e.g., as illustrated in FIGS. 6H, 6J, 6T, 6Y, 6AB, 6AC, 6AD, and/or 6AG) of the text (e.g., without synthesizing the first representation of the text) different from the first representation of the text. In some embodiments, the second representation of the text is in a style corresponding to and/or consistent with a style identified in the request to synthesize a representation of text and/or a style corresponding to a user of the device.

After (and/or in response to) synthesizing the first representation of the text, the system process provides (410) (and/or sends), to the first application, the first representation of the text (e.g., for display by the first application).

After (and/or in response to) synthesizing the second representation of the text, the system process provides (412) (and/or sends) (e.g., 310, 716, and/or 914), to the first application, the second representation of the text (e.g., for display by the first application).

In some embodiments, the request to synthesize a representation of the text corresponds to (and/or is) a request to paste the text (e.g., typed or handwritten text, such as from a pasteboard).

In some embodiments, the request to synthesize a representation of the text corresponds to (and/or is) a request to change an appearance of handwritten text.

In some embodiments, the device is in communication with (and/or includes) one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, receiving the request to synthesize a representation of the text includes detecting, via the one or more input devices, a selection input corresponding to a user interface element (e.g., a virtual button, an icon, a widget, a control, and/or a window). In some embodiments, the selection input includes a tap input, a verbal input, an audible command, a gaze input, an air gesture input, a mouse click, and/or a submission of a user-interface element and/or a physical hardware element. In some embodiments, receiving the request to synthesize a representation of the text includes detecting, via the one or more input devices, a non-selection input corresponding to the user interface element. In some embodiments, the non-selection input includes a verbal input, an audible request, an audible command, an audible statement, a swipe input, a hold-and-drag input, a gaze input, an air gesture input, and/or a mouse movement.

In some embodiments, the device is in communication with (and/or includes) one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface). In some embodiments, receiving the request to synthesize a representation of the text includes detecting, via the one or more input devices, a handwritten input corresponding to handwritten text (e.g., and waiting for a predefined period of time after detecting the handwritten input) (e.g., when a setting corresponding to modifying an appearance of handwritten text is enabled).

In some embodiments, the request to synthesize a representation of the text corresponds to (and/or is) a request to generate handwritten text for a selected proofreading change (e.g., a set of one or more words, such as a set of one or more typed words) to existing handwritten text (e.g., different from the selected proofreading change).

In some embodiments, the request to synthesize a representation of the text includes an indication of a local style of handwriting (e.g., surrounding the text, nearby the text, closest handwriting to the text, and/or in a document in which the request is from). In some embodiments, the local style of handwriting includes an appearance of one or more handwritten characters, a line thickness, a spacing between handwritten characters, and/or an orientation of one or more handwritten characters.

In some embodiments, the text is first text. In some embodiments, the system process receives, from a second application (e.g., a note-taking application, a word-processing application, a document-processing application, a presentation application, an email application, a form processing application such as a PDF viewer and/or editor, a game, a messaging application, a maps application, a fitness application, a health application, a digital payments application, a media application, and/or a social network application) (e.g., and not from the first application) different from the first application, a request to synthesize a representation of second text, wherein the request to synthesize a representation of the second text is separate (and/or different) from the request to synthesize a representation of the first text. In some embodiments, the second application is a different type of application (e.g., performs one or more operations that are different than able to be performed by) than the first application. In some embodiments, the first application has a first framework (e.g., corresponding to the request to synthesize a representation of the first text) loaded into a process space of the first application. In some embodiments, the second application has the first framework (e.g., corresponding to the request to synthesize a representation of the second text) loaded into a process space of the second application. In some embodiments, the process space of the second application is different from the process space of the first application. In some embodiments, in response to receiving the request to synthesize a representation of the second text, the system process synthesizes, using the diffusion model (and/or another diffusion model different from the diffusion model), a first representation of the second text. In some embodiments, the first representation of the second text is in a style corresponding to and/or consistent with a style identified in the request to synthesize a representation of the second text and/or a style corresponding to a user of the device. In some embodiments, after (and/or in response to) synthesizing the first representation of the second text, the system process provides (and/or sends), to the second application (e.g., and not to the first application), the first representation of the second text (e.g., for display by the second application).

In some embodiments, the first representation of the text includes one or more individual computer-generated handwritten strokes. In some embodiments, the first representation of the text includes a plurality of individual computer-generated handwritten strokes. In some embodiments, the second representation of the text includes one or more individual computer-generated handwritten strokes. In some embodiments, the second representation of the text includes a plurality of individual computer-generated handwritten strokes.

In some embodiments, the first representation of the text includes a plurality of individual computer-generated handwritten strokes. In some embodiments, each computer-generated handwritten stroke of the plurality of individual computer-generated handwritten strokes is independently selectable to perform an operation (e.g., move, change size, and/or change appearance, and/or change thickness) with respect to the computer-generated handwritten stroke (e.g., and not with respect to another computer-generated handwritten stroke of the plurality of individual computer-generated handwritten strokes). In some embodiments, while displaying, via one or more display generation components (e.g., a display screen, a projector, a head mounted display, and/or a touch-sensitive display) that is in communication with (and/or included in) the device, the first application detects, via one or more input devices (e.g., a camera, a depth sensor, a microphone, a hardware input mechanism, a rotatable input mechanism, a physical input mechanism, a button, a crown, a knob, a dial, a physical slider, an accelerometer, a mouse, a keyboard, a touchpad, and/or a touch-sensitive surface) that is in communication with (and/or included in) the device, an input (e.g., a swipe input and/or a non-swipe input) corresponding to a respective handwritten stroke of the plurality of individual computer-generated handwritten strokes. In some embodiments, a non-swipe input includes a verbal input, an audible request, an audible command, an audible statement, a tap input, a hold-and-drag input, a gaze input, an air gesture input, mouse movement, and/or a mouse click. In some embodiments, in response to detecting the input corresponding to the respective handwritten stroke and in accordance with a determination that the respective handwritten stroke is a first handwritten stroke, the first application performs an operation (e.g., move, change size, and/or change appearance, and/or change thickness) with respect to the first handwritten stroke. In some embodiments, in response to detecting the input corresponding to the respective handwritten stroke and in accordance with a determination that the respective handwritten stroke is a second handwritten stroke different from the first handwritten stroke, the first application performs the operation with respect to the second handwritten stroke (e.g., with or without performing the operation with respect to the first handwritten stroke).

In some embodiments, the request to synthesize a representation of the text includes the text (e.g., an identification of the text).

In some embodiments, the request to synthesize a representation of the text includes a transcription of handwritten text (e.g., transcribed text).

In some embodiments, the first representation of the text is generated to not share (e.g., does not share, is not adapted to, does not match, and/or includes a difference in) a color, a size, or a combination thereof of the handwritten text (e.g., when pasting copied handwritten text and/or adapting style). In some embodiments, the handwritten text is different (and/or separate) from the text. In some embodiments, the text is a first set of one or more colors and/or a first size. In some embodiments, the first representation of the text is a second set of one or more color, different from the first set of one or more colors, and/or a second size different from the first size.

In some embodiments, the request to synthesize a representation of the text includes an image of content. In some embodiments, the system process recognizes the text (e.g., identifies and/or generates a transcription of handwritten text) in the image (e.g., the request to synthesize a representation of the text does not include the text (and/or an identification of the text) (e.g., separate from the image)).

In some embodiments, the text is first text. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed), different from the first representation of the first text, includes (and/or has) a first set of one or more visual characteristics (e.g., a color, a size, an orientation, a line thickness, a style, a kerning, an amount of curvature, and/or a spacing between characters). In some embodiments, the first representation of the text is generated to include (e.g., is generated to share, shares, is adapted to, matches, and/or includes) the first set of one or more visual characteristics. In some embodiments, the second set of one or more criteria includes a criterion that the representation of the second text includes (and/or has) a second set of one or more visual characteristics (e.g., a color, a size, an orientation, a line thickness, a style, a kerning, an amount of curvature, and/or a spacing between characters) different from the first set of one or more characteristics. In some embodiments, the second representation of the text is generated to include (e.g., is generated to share, shares, is adapted to, matches, and/or includes) the second set of one or more visual characteristics (e.g., and to not include (e.g., is generated to not share, does not share, is not adapted to, does not match, and/or does not include) the first set of one or more visual characteristics).

In some embodiments, the text is first text. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed), different from the first representation of the first text, includes (and/or has) a first set of one or more colors. In some embodiments, the first representation of the text is generated to include (e.g., is generated to share, shares, is adapted to, matches, and/or includes) the first set of one or more colors. In some embodiments, the second set of one or more criteria includes a criterion that the representation of the second text includes (and/or has) a second set of one or more colors different from the first set of one or more colors. In some embodiments, the second representation of the text is generated to include (e.g., is generated to share, shares, is adapted to, matches, and/or includes) the second set of one or more colors (e.g., and to not include (e.g., is generated to not share, does not share, is not adapted to, does not match, and/or does not include) the first set of one or more colors).

In some embodiments, the text is first text. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed), different from the first representation of the first text, includes (and/or has and/or is) a first size. In some embodiments, the first representation of the text is generated to include (e.g., is generated to share, shares, is adapted to, be, matches, and/or includes) the first size. In some embodiments, the second set of one or more criteria includes a criterion that the representation of the second text includes (and/or has and/or is) a second size different from the first size. In some embodiments, the second representation of the text is generated to include (e.g., is generated to share, shares, is adapted to, be, matches, and/or includes) the second size (e.g., and to not include (e.g., is generated to not share, does not share, is not adapted to, not be, does not match, and/or does not include) the first size).

In some embodiments, the text is first text. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed), different from the first representation of the first text, includes (and/or has and/or is in) a first style (e.g., cursive or block lettering). In some embodiments, the first representation of the text is generated to include (e.g., is generated to share, shares, is adapted to, be in, matches, and/or includes) the first style. In some embodiments, the second set of one or more criteria includes a criterion that the representation of the second text includes (and/or has and/or is in) a second style (e.g., cursive or block lettering) different from the first style. In some embodiments, the second representation of the text is generated to include (e.g., is generated to share, shares, is adapted to, be in, matches, and/or includes) the second style (e.g., and to not include (e.g., is generated to not share, does not share, is not adapted to, not be in, does not match, and/or does not include) the first style).

In some embodiments, the text is first text. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed), different from the first representation of the first text, includes (and/or has) a first amount of kerning. In some embodiments, the first representation of the text is generated to include (e.g., is generated to share, shares, is adapted to, has, generated to have, matches, and/or includes) the first amount of kerning. In some embodiments, the second set of one or more criteria includes a criterion that the representation of the second text includes (and/or has) a second amount of kerning different from the first amount of kerning. In some embodiments, the second representation of the text is generated to include (e.g., is generated to share, is generated to have, shares, is adapted to, has matches, and/or includes) the second amount of kerning (e.g., and to not include (e.g., is generated to not share, is generated to not have, does not share, is not adapted to, does not have, does not match, and/or does not include) the first amount of kerning).

In some embodiments, in response to receiving the request to synthesize a representation of the text, wherein the request to synthesize a representation of the text is a request to past copied content, in accordance with a determination that the copied content is handwritten text, the system process synthesizes, using the diffusion model (and/or another diffusion model different from the diffusion model), a third representation of the text that is adapted to not include a set of one or more colors of the handwritten text. In some embodiments, in response to receiving the request to synthesize a representation of the text and in accordance with a determination that the copied content is handwritten text, the system process synthesizes, using the diffusion model (and/or another diffusion model different from the diffusion model), a third representation of the text that is adapted to include a set of one or more colors of the handwritten text. In some embodiments, in response to receiving the request to synthesize the representation of the text, wherein the request to synthesize the representation of the text is the request to past copied content, in accordance with a determination that the copied content is typed text, the system process synthesizes, using the diffusion model (and/or another diffusion model different from the diffusion model), a fourth representation of the text that is adapted to include a set of one or more colors of the typed text. In some embodiments, in response to receiving the request to synthesize a representation of the text and in accordance with a determination that the copied content is typed text, the system process synthesizes, using the diffusion model (and/or another diffusion model different from the diffusion model), a fourth representation of the text that is adapted to not include a set of one or more colors of the typed text.

In some embodiments, in response to receiving the request to synthesize a representation of the text, wherein the request to synthesize a representation of the text is a request to past copied content and in accordance with a determination that the copied content includes a first set of one or more typographical emphasis (e.g., size, capitalization, and/or letter spacing) and a second set of one or more typographical emphasis (e.g., bold, italics, and/or underline) different from the first set of one or more typographical emphasis, the system process synthesizes, using the diffusion model (and/or another diffusion model different from the diffusion model), a fifth representation of the text that is adapted to include the first set of one or more typographical emphasis without including the second set of one or more typographical emphasis.

In some embodiments, the text is first text. In some embodiments, the request to synthesize a representation of the text corresponds to (e.g., is for, associated with, detected via, and/or based on) a first document. In some embodiments, the first set of one or more criteria includes a criterion that a representation of second text (e.g., handwritten text in a document corresponding to the request to synthesize a representation of the first text) (e.g., a closest representation of text to a location where the first representation of the first text is to be displayed) of a second document includes (and/or has) a first set of one or more visual characteristics (e.g., a color, a size, an orientation, a line thickness, a style, a kerning, an amount of curvature, and/or a spacing between characters). In some embodiments, the first representation of the text is generated to include (e.g., is generated to share, shares, is adapted to, matches, and/or includes) the first set of one or more visual characteristics. In some embodiments, the second set of one or more criteria includes a criterion that the representation of the second text includes (and/or has) a second set of one or more visual characteristics (e.g., a color, a size, an orientation, a line thickness, a style, a kerning, an amount of curvature, and/or a spacing between characters) different from the first set of one or more characteristics. In some embodiments, the second representation of the text is generated to include (e.g., is generated to share, shares, is adapted to, matches, and/or includes) the second set of one or more visual characteristics (e.g., and to not include (e.g., is generated to not share, does not share, is not adapted to, does not match, and/or does not include) the first set of one or more visual characteristics). In some embodiments, the representation of the second text is different from the first representation of the first text. In some embodiments, the second document is separate (and/or different) from the first document.

In some embodiments, after synthesizing the first representation of the text, the system process provides (e.g., sends and/or transmits), to the first application, the first representation of the text for display by the first application. In some embodiments, after synthesizing the second representation of the text, the system process provides (e.g., sends and/or transmits), to the first application, the second representation of the text for display by the first application.

In some embodiments, in conjunction with providing the first representation of the text for display by the first application (e.g., in the same message that includes the first representation and/or at the same time), the system process provides (e.g., sends and/or transmits), to the first application, an identification of word segmentation, an identification of alignment, or a combination thereof of the first representation of the text (e.g., for reflowing by the first application). In some embodiments, in conjunction with providing the second representation of the text for display by the first application (e.g., in the same message that includes the second representation and/or at the same time), the system process provides (e.g., sends and/or transmits), to the first application, an identification of word segmentation, an identification of alignment, or a combination thereof of the second representation of the text (e.g., for reflowing by the first application).

Note that details of the processes described above with respect to method 400 (e.g., FIG. 4) are also applicable in an analogous manner to other methods described herein. For example, method 600 optionally includes one or more of the characteristics of the various methods described above with reference to method 400. For example, system process of method 600 can be system process of method 400. For brevity, these details are not repeated herein.

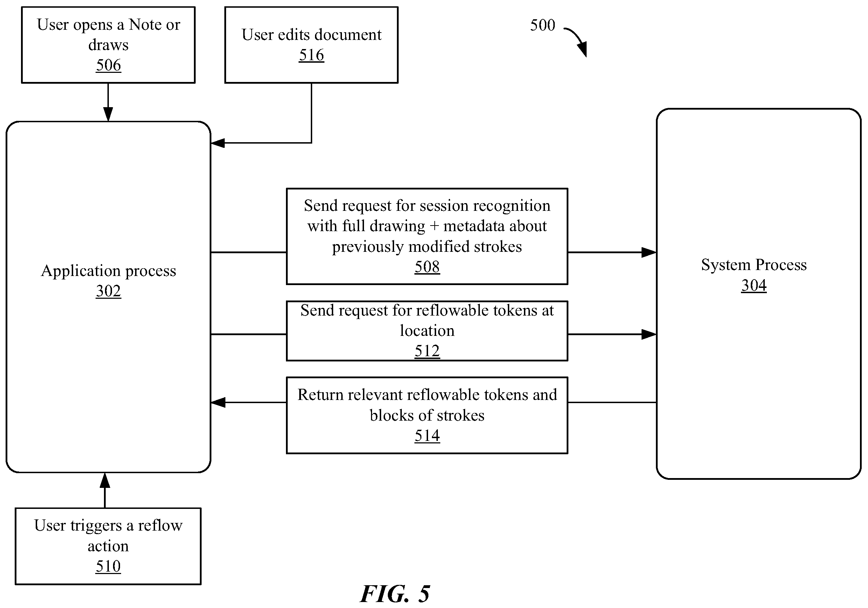

FIG. 5 illustrates an exemplary architecture for understanding handwritten text for reflowing in accordance with some embodiments. The exemplary architecture is used to illustrate the processes described below, including the processes in FIGS. 4, 6, 8A-8B, 10, 11, and 12. It should be recognized that some components of the exemplary architecture are, optionally, combined, changed, and/or omitted.

In some embodiments, architecture 500 includes application process 302 and system process 304 as described above. In some embodiments, application process 302 detects (506) a request for opening a note or drawing (e.g., of the first device). In some embodiments, the request for opening the note, where the user can handwrite, type text, draw, and/or insert shapes, triggers application process 302 to send (508) a request for a recognition session of handwritten text and/or drawings in the note to system process 304. In some embodiments, the request to the recognition session of handwritten text and/or drawings in the note includes content of the note, such as drawings and/or handwritten text that are comprised of strokes, along with metadata associated with previously modified strokes. In some embodiments, the strokes representing handwritten text and/or drawings can be encoded in different formats. For example, the strokes can be represented as a sequence of coordinate points, where each point represents a position on the stroke path. For another example, the strokes can be encoded as a series of curve segments, such as Bézier curves, which define the shape and/or curvature of the stroke. In some embodiments, additional information about each stroke, such as direction, and/or pressure can be included in the encoding. In some embodiments, the additional information about each stroke can help system process 304 distinguish between handwritten text and drawings, as handwritten text typically has more consistent stroke direction, speed, and/or pressure compared to drawings. In some embodiments, the strokes of handwritten text and/or drawings can be stored in different formats. For example, the strokes can be directly encoded into an image file format (e.g., PNG and/or JPEG) where each pixel in the image represents a point on the stroke path. In some embodiments, the strokes can be stored in a vector graphics file format (e.g., SVG and/or PDF) using mathematical equations and/or geometric primitives such as lines, curves, and/or shapes, rather than individual pixels, which allows the strokes to be scaled up or down without losing any detail or sharpness. In some embodiments, the strokes can be stored in a custom binary format designed for efficient storage and/or retrieval of stroke data. In some embodiments, in addition to handwritten text and/or drawings, the content can also include typed text, images, and/or other elements that are not comprised of strokes. For example, the content can include typed text entered using a keyboard, images inserted from files and/or captured using a camera, shapes and/or other objects added via an interface of application process 302.

In some embodiments, in the recognition session, system process 304 identifies and/or processes reflowable tokens within the handwritten text. In some embodiments, reflowable tokens are logical units of text, such as words or characters, that can be individually manipulated and/or repositioned during a reflow process. In some embodiments, metadata associated with each reflowable token in the request for the recognition session of handwritten text and/or drawings in the note, such as baseline or top line estimates, line wrapping information, and/or pre-spaces, enables system process 304 to maintain spatial relationships and/or alignment of handwritten text during the reflow process. In some embodiments, the metadata ensures that the reflowed text reflects an updated structure and/or available space in the document, note and/or canvas.

In some embodiments, system process 304 receives request 508 and performs a set of one or more operations to understand and/or process the handwritten text and/or metadata. In some embodiments, the set of operations includes stroke classification, line grouping, and/or principal line computation. In some embodiments, stroke classification identifies a type and/or characteristics of each stroke, such as whether it represents a text stroke or a drawing stroke. In some embodiments, line grouping organizes the strokes into logical lines of text. In some embodiments, principal line computation determines baselines and top lines for each line of text, that allow for proper alignment and/or reflowing.

In some embodiments, system process 304 uses a machine learning model (e.g., such as machine learning model described above with respect to FIG. 3) and/or pipeline to generate reflowable tokens and/or blocks of strokes. In some embodiments, the machine learning model is conditioned and/or trained on large datasets of handwritten samples to learn patterns, structures, and/or spatial relationships within handwritten text. In some embodiments, the machine learning model is trained to recognize individual characters, words, and/or lines, as well as their relative positions and alignments relative to each other. In some embodiments, the machine learning model refines an understanding of how to segment and/or tokenize handwritten text into logical units (e.g., reflowable tokens) (e.g., characters, words, and/or sentences) (e.g., as described above with respect to FIG. 5) that can be independently manipulated while preserving an original meaning and/or structure of the handwritten text. In some embodiments, the machine learning model learns to identify optimal break points between words and/or lines to allow for an intelligent reflow of handwritten text based on available space and/or layout constraints in a document, note, and/or canvas.

In some embodiments, after processing the handwritten text, system process 304 returns (514) relevant reflowable tokens (e.g., text strokes) and blocks of strokes to application process 302. In some embodiments, each reflowable token includes baseline and top line estimates, line wrapping information, and/or pre-spaces, among other metadata.

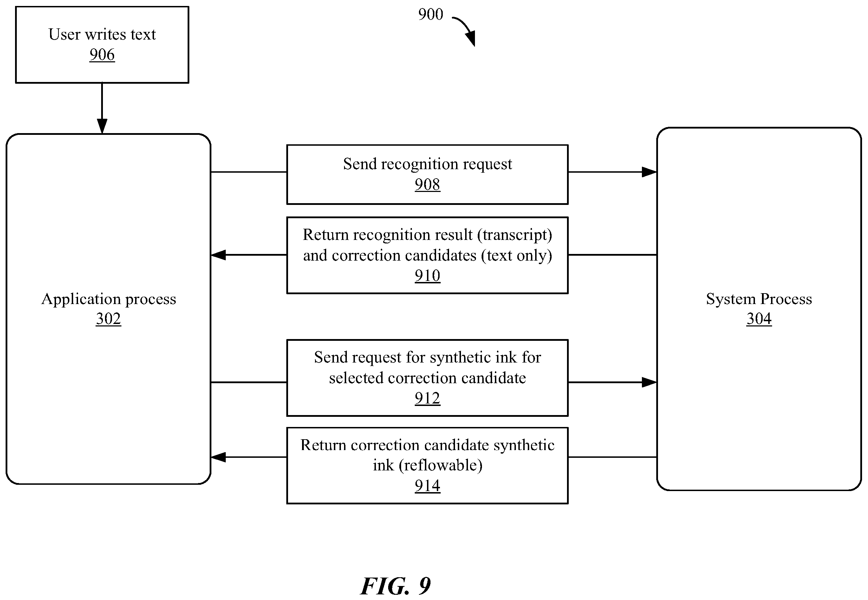

In some embodiments, application process 302 receives reflowable tokens and stores the reflowable tokens for future use. In some embodiments, the reflowable tokens enable application process 302 to perform one or more reflow actions based on user interactions, such as selecting strokes, explicitly reflowing a selection via a control and/or invoking a command, dropping an object over text, reflowing text around an object, triggering a proofreading process (e.g., as described below with respect to FIG. 9), deleting portions of content (e.g., via a scratch gesture), inserting space, and/or dynamically resizing an arbitrary selection of strokes.

In some embodiments, a user triggers (510) a reflow action, via one or more interactions. The one or more interactions can include continuous actions and/or discrete actions. In some embodiments, continuous actions include interactive modifications to content, such as inserting space within a paragraph and/or resizing a paragraph. In some embodiments, discrete actions include deleting handwriting (e.g., by scratching it out), cutting and pasting content, and/or using a proofreading feature (e.g., described below with respect to FIG. 9). In some embodiments, when a user performs one of the continuous and/or discrete actions, application process 302 sends (512) a request for reflowable tokens corresponding to a specified location and/or region affected by the reflow action to system process 304. In some embodiments, the request for reflowable tokens includes information about a location and/or type of reflow action being performed (e.g., as described above). In some embodiments, system process 304 processes the request for reflowable tokens and identifies relevant reflowable tokens associated with the specified location. In some embodiments, system process 304 then returns (514) selected reflowable tokens to application process 302.

In some embodiments, after receiving relevant reflowable tokens, application process 302 moves and/or adjusts tokens on a canvas after detecting (516) a user editing a document (e.g., document and/or canvas including handwritten text to be reflowed). In some embodiments, the user editing the document can involve repositioning tokens, changing a size of the tokens, and/or modifying alignment of the tokens to accommodate a new layout and/or space created by the reflowing process. In some embodiments, as the user continues to edit the document in user, application process 302 sends periodic updates (e.g., via 508) to system process 304 to keep session results synchronized between application process 302 and system process 304. In some embodiments, the periodic updates include information about modified strokes and/or any new changes and/or edits made to the document. In some embodiments, system process 304 uses the periodic updates to maintain an up-to-date understanding of the handwritten text. In some embodiments, system process 304 performs incremental updates to the stroke classification, line grouping, and/or principal line computation based on received changes to relevant strokes at a location. In some embodiments, an iterative process of querying reflowable tokens (e.g., 512), receiving relevant reflowable tokens (e.g., 514) based on user edits to a document (e.g., 516) continues as the user interacts with the document, note, and/or canvas. In some embodiments, the iterative process allows for real-time reflowing and/or adjustment of handwritten text based on user actions and/or interactions in client 302.

FIG. 6 is a flow diagram illustrating a method (e.g., method 600) for reflowing content differently based on a corresponding location of content in accordance with some embodiments. Some operations in method 600 are, optionally, combined, the orders of some operations are, optionally, changed, and some operations are, optionally, omitted.

As described below, method 600 provides an intuitive way for reflowing content differently based on a corresponding location of content. Method 600 reduces the cognitive burden on a user, thereby creating a more efficient human-machine interface. For battery-operated computing devices, enabling a user to interact with such devices faster and more efficiently conserves power and increases the time between battery charges.

In some embodiments, method 600 is performed at a system process (e.g., a handwriting process and/or module and/or a content generation process and/or module) (e.g., 304) of a device (e.g., 1300). In some embodiments, the system process is part of and/or executing on behalf of an operating system of the device. In some embodiments, the system process facilitates communication between one or more applications of the device and one or more hardware components of the device. In some embodiments, the system process facilitates communication with secure processes and/or hardware-based processes (e.g., processes active while the device is locked and/or processes seeking to access a hardware component of the device). In some embodiments, the device is a watch, a phone, a tablet, a fitness tracking device, a processor, a head-mounted display (HMD) device, a communal device, a media device, a speaker, a television, an electronic device, and/or a personal computing device.

The system process receives (602) (e.g., from a first application) (e.g., 308, 508, 710, and/or 908) a representation of (e.g., an image of, a video of, a copy of, and/or a list of one or more vectors within) content in (e.g., of and/or within) a document (e.g., a tangible and/or electronic record, such as a word processing document, a note, a spreadsheet, and/or a file). In some embodiments, the content and/or the representation of the content includes and/or is content in a text input user interface element as opposed to a document. In some embodiments, the representation is included in a request to synthesize a representation of text (e.g., as described above with respect to method 400). In some embodiments, the representation is sent to the system process in response to the document being opened and/or an input (e.g., a handwriting input and/or a non-handwriting input) being detected via the device. In some embodiments, a handwriting input includes an input that begins at a first location and ends at a second location. In some embodiments, a non-handwriting input includes a tap input, a verbal input, an audible command, a gaze input, an air gesture, a mouse click, a submission of a user-interface element and/or a physical hardware element, an audible request, an audible command, an audible statement, a swipe input, a hold-and-drag input, a gaze input, an air gesture, and/or a mouse movement. In some embodiments, the representation is received from software corresponding to the first application and/or a framework (e.g., a software framework) that is used by the first application. In some embodiments, the framework is loaded in a process space of the first application. In some embodiments, the first application is a note-taking application, a word-processing application, a document-processing application, a presentation application, an email application, a form processing application such as a PDF viewer and/or editor, a game, a messaging application, a maps application, a fitness application, a health application, a digital payments application, a media application, and/or a social network application. In some embodiments, the first application is different from the system process. In some embodiments, the first application is executing on the device. In some embodiments, the first application is executing on another device different from the device.

In response to (and/or after) receiving the representation of the content in the document, the system process identifies (604), using the representation, one or more reflowable (e.g., movable, independent, separate, and/or atomic) tokens (e.g., elements, user interface elements, items, parts, and/or objects) within the content. In some embodiments, a reflowable token of the one or more reflowable tokens is a handwritten stroke in the content in the document.

After identifying the one or more reflowable tokens within the content, the system process receives (606) (e.g., from the first application) (e.g., 512) a request for reflowable tokens corresponding to a respective location within the document. In some embodiments, the request for reflowable tokens corresponding to the respective location within the document includes an indication and/or an identification of the respective location. In some embodiments, the request for reflowable tokens corresponding to the respective location within the document corresponds to an input detected via the device (and/or an input device that is in communication with the device). In some embodiments, the input detected via the device includes a handwriting input and/or a non-handwriting input. In some embodiments, the input detected via the device corresponds to a request to change a size, a position, a width, and/or a height of a portion of the content.

In response to (608) receiving the request for reflowable tokens corresponding to the respective location within the document, in accordance with a determination that the respective location is a first location, the system process provides (610) (e.g., sends) (e.g., to the first application) (e.g., 514) a first set of one or more reflowable tokens included in the one or more reflowable tokens. In some embodiments, the first set of one or more reflowable tokens corresponds to the first location. In some embodiments, the first set of one or more reflowable tokens is at the first location.

In response to (608) receiving the request for reflowable tokens corresponding to the respective location within the document, in accordance with a determination that the respective location is a second location different from the first location, the system process provides (612) (e.g., sends) (e.g., to the first application) (e.g., 514) a second set of one or more reflowable tokens included in the one or more reflowable tokens (e.g., without providing the first set of one or more reflowable tokens), wherein the second set of one or more reflowable tokens is different from the first set of one or more reflowable tokens. In some embodiments, the second set of one or more reflowable tokens corresponds to the second location (e.g., and does not correspond to the second location). In some embodiments, the second set of one or more reflowable tokens is at the second location.

In some embodiments, a reflowable token of the first set of one or more reflowable tokens includes a stroke of handwritten text. In some embodiments, a reflowable token of the first set of one or more reflowable tokens includes a plurality of strokes of handwritten text.

In some embodiments, a reflowable token of the first set of one or more reflowable tokens corresponds to a plurality of lines of handwritten text. In some embodiments, a reflowable token of the first set of one or more reflowable tokens corresponds to a single line of handwritten text. In some embodiments, a reflowable token of the first set of one or more reflowable tokens corresponds to a single word of handwritten text. In some embodiments, a reflowable token of the first set of one or more reflowable tokens corresponds to a single character of handwritten text. In some embodiments, a reflowable token of the first set of one or more reflowable tokens corresponds to a single sentence of handwritten text. In some embodiments, a reflowable token of the first set of one or more reflowable tokens corresponds to a plurality of words of handwritten text. In some embodiments, a reflowable token of the first set of one or more reflowable tokens corresponds to a plurality of characters of handwritten text. In some embodiments, a reflowable token of the first set of one or more reflowable tokens corresponds to a plurality of sentences of handwritten text.

In some embodiments, the content includes (and/or is) handwritten text. In some embodiments, identifying the one or more reflowable tokens within the content includes transcribing the handwritten text.

In some embodiments, the representation of the content is a first representation of the content. In some embodiments, after receiving the first representation of the content in the document, the system process receives (e.g., from the first application) a second representation of (e.g., an image of, a video of, a copy of, and/or a list of one or more vectors within) the content in the document, wherein the second representation of the content is different from the first representation of the content. In some embodiments, in response to (and/or after) receiving the second representation of the content in the document, the system process updates, using the second representation, the one or more reflowable (e.g., movable, independent, separate, and/or atomic) tokens (e.g., elements, user interface elements, items, parts, and/or objects) within the content (e.g., to reflect a change in the content in the document) (e.g., after updating the one or more reflowable tokens, the one or more reflowable tokens are different from before updating the one or more reflowable tokens).

In some embodiments, identifying the one or more reflowable tokens within the content includes identifying a line of handwritten text within the content (e.g., with line wrapping information). In some embodiments, identifying the one or more reflowable tokens within the content includes identifying a plurality of lines of handwritten text within the content (e.g., with line wrapping information).

In some embodiments, identifying the one or more reflowable tokens within the content includes identifying a spacing between reflowable tokens within the content.

In some embodiments, identifying the one or more reflowable tokens within the content includes identifying an alignment (and/or an orientation) between reflowable tokens within the content.

Note that details of the processes described above with respect to method 600 (e.g., FIG. 6) are also applicable in an analogous manner to other methods described herein. For example, method 400 optionally includes one or more of the characteristics of the various methods described above with reference to method 600. For example, the representation of content of method 600 can be the first representation of method 400. For brevity, these details are not repeated herein.

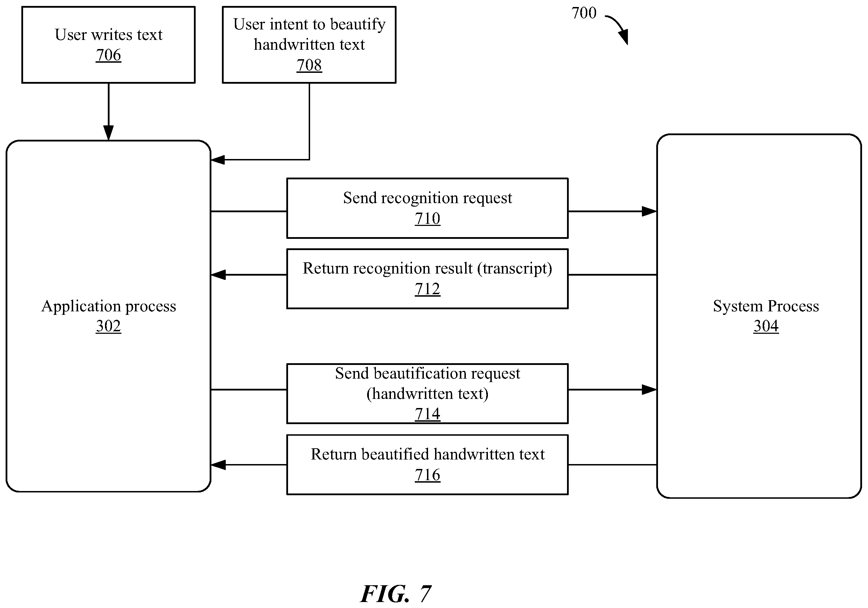

FIG. 7 illustrates an exemplary architecture for automatically refining handwritten text in accordance with some embodiments. The exemplary architecture is used to illustrate the processes described below, including the processes in FIGS. 4, 6, 8A-8B, 11, and 12. The exemplary architecture includes application process 302 and system process 304.

In some embodiments, a process for refining and/or beautifying handwritten text (e.g., ink) begins when application process 302 detects (706) a user writing text on a user interface of the application process (e.g., note, document, and/or canvas) (e.g., of the first device). In some embodiments, application process 302 detects (708) a user intent to beautify the handwritten text. In some embodiments, the user intent to beautify the handwritten text is an optional request for handwriting refinement. In some embodiments, the user intent to beautify the handwritten text can be triggered by enabling an option, a setting and/or invoking a command for handwriting refinement. In some embodiments, in response to detecting the user intent to beautify handwritten text, application process 302 sends (710) recognition request to system process 304. In some embodiments, the recognition request includes the handwritten text to be refined and/or beautified. In some embodiments, the handwritten text is comprised of strokes and/or is stored in one or more formats, as described above with respect to FIG. 5.

In some embodiments, system process 304 receives the recognition request and performs handwriting recognition on the received handwritten text. In some embodiments, a recognition process identifies one or more characters and/or words represented in the handwritten text and/or strokes. In some embodiments, system process 304 uses one or more techniques, such as a pattern matching algorithm via a machine learning model (e.g., machine learning model described above with respect to FIG. 3 and/or FIG. 5) and/or pipeline, to recognize the handwritten text. In some embodiments, after completing the recognition process, system process 304 returns (712) recognition result to application process 302. In such embodiments, recognition result 712 can include transcribed text corresponding to the handwritten text.

In some embodiments, after receiving the recognition result (e.g., with the transcribed text), application process 302 sends (714) beautification request to system process 304. In some embodiments, application process 302 triggers the beautification request after detecting that the user has completed writing a word, phrase, and/or sentence, based on semantic understanding of transcribed handwritten text and/or the presence characters such as a period and/or a space after one or more words. In some embodiments, the beautification request includes original handwritten text (e.g., in 710) along with transcribed text obtained from the recognition result.

In some embodiments, system process 304 receives beautification request 714 and performs beautification and/or refinement of the handwritten text. In some embodiments, a beautification and/or refinement process enhances visual appearance and/or clarity of the handwritten text while maintaining an original style and/or core visual characteristics. In some embodiments, system process 304 uses transcribed text from recognition result 712 as a reference to guide the beautification and/or refinement process. In some embodiments, system process 304 uses global style samples stored in a style sample repository to ensure consistency with the user's overall handwriting style. In some embodiments, the beautification process generates different representations and/or refinements of handwritten ink for different users by taking into account each user's global handwriting style (e.g., via the global style samples). Additionally or alternatively, the beautification process can adapt to variations in handwriting style within a single document, note and/or canvas or across different documents by considering a local style of surrounding text (e.g., preceding and/or following paragraphs).

In some embodiments, during the beautification and/or refinement process, system process 304 applies one or more techniques, such as stroke smoothing, normalization, and/or style transfer, to improve legibility and/or visual quality of handwritten text. In some embodiments, system process 304 adjusts spacing between characters, words and/or lines to achieve a more refined, uniform and/or balanced appearance.

In some embodiments, after completing the beautification and/or refinement process, system process 304 determines word segmentation and/or alignment information for the beautified and/or refined handwritten text. In some embodiments, the word segmentation and/or alignment information specifies boundaries, alignment and/or positions of individual words and/or characters within the beautified handwritten text.

In some embodiments, system process 304 returns (716) beautified and/or refined handwritten text to application process 302. In some embodiments, the beautified and/or refined handwritten text is in a reflowable format that can be easily inserted into a document and adjusted to fit in available space (e.g., via reflowing metadata). In some embodiments, the reflowable format includes word segmentation and/or alignment information determined by system process 304.

In some embodiments, after receiving the beautified and/or refined handwritten text, application process 302 replaces original handwritten text with the beautified and/or refined handwritten text. In some embodiments, if necessary, application process 302 reflows surrounding content and/or creates additional space to accommodate the beautified and/or refined handwritten text. In some embodiments, a reflowing process ensures that the beautified handwritten text integrates with existing text in a document, note, and/or canvas layout.

In some embodiments, architecture 700 allows for automatic refinement of handwritten ink based on user intent. In some embodiments, by leveraging the recognition capabilities of system process 304 and the beautification techniques guided by the transcribed text and global style samples, the architecture can enhance visual quality and readability of the handwritten ink. In some embodiments, the word segmentation and alignment information provided by system process 304 enables application process 302 to display the beautified ink correctly and perform reflow operations as needed to ensure that the beautified ink maintains its spatial relationships and integrates smoothly with the surrounding content.

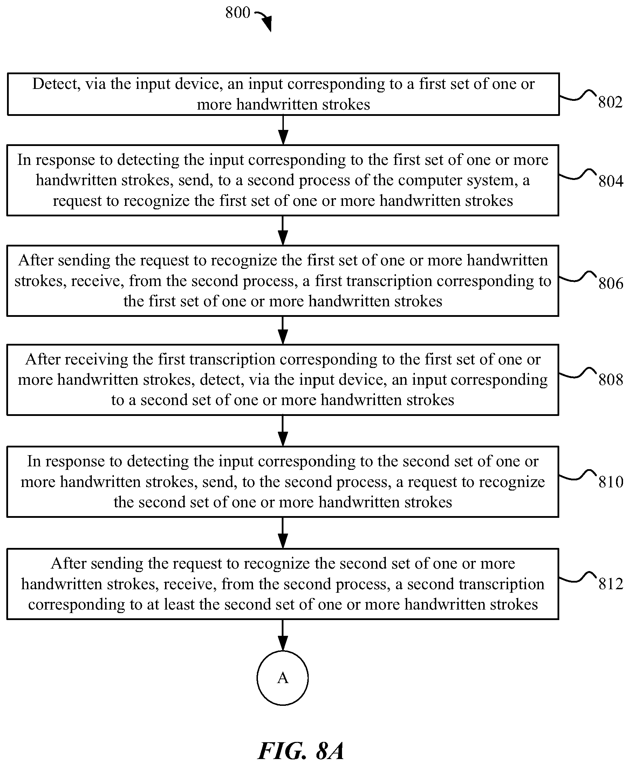

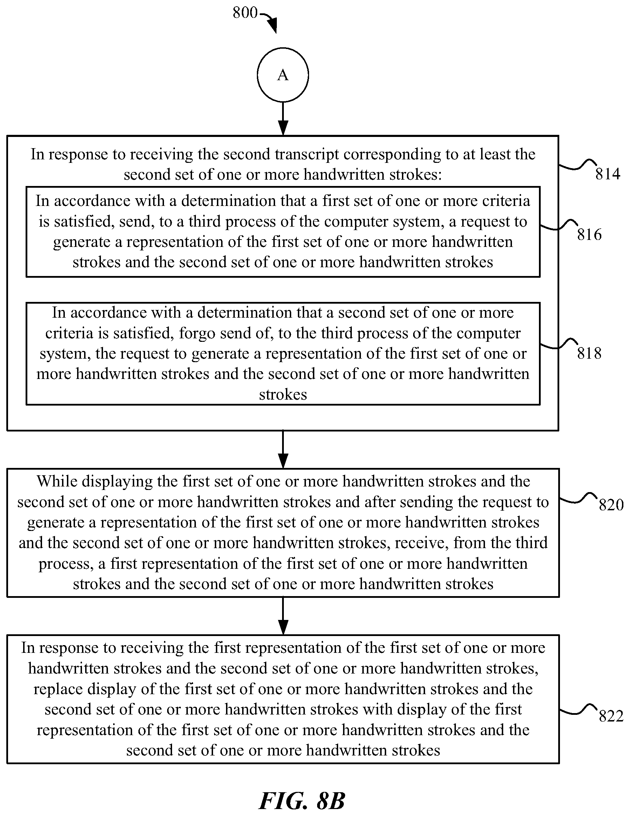

FIGS. 8A-8B are a flow diagram illustrating a method (e.g., method 800) for automatically refining a representation of text in accordance with some embodiments. Some operations in method 800 are, optionally, combined, the orders of some operations are, optionally, changed, and some operations are, optionally, omitted.

As described below, method 800 provides an intuitive way for automatically refining a representation of text. Method 800 reduces the cognitive burden on a user, thereby creating a more efficient human-machine interface. For battery-operated computing devices, enabling a user to interact with such devices faster and more efficiently conserves power and increases the time between battery charges.

In some embodiments, method 800 is performed at a first process (e.g., a handwriting framework, a user process, an application, a user application, and/or a system process) (e.g., 304 and/or 302) of a computer system (and/or a device) (e.g., 1300) that is in communication with an input device (e.g., an electronic pen and/or stylus, a touch-sensitive surface, a camera, a depth sensor, a microphone, a hardware input mechanism, a rotatable input mechanism, a physical input mechanism, a button, a crown, a knob, a dial, a physical slider, an accelerometer, and/or a touch-sensitive surface). In some embodiments, one or more operations described below are performed by software corresponding to a first application and/or a framework (e.g., a software framework) that is used by the first application. In some embodiments, the first process is part of and/or executing on behalf of an operating system of the computer system. In some embodiments, the first process facilitates communication between one or more applications of the computer system and one or more hardware components and/or devices of the computer system. In some embodiments, the first process facilitates communication with secure processes and/or hardware-based processes (e.g., processes active while the computer system is locked and/or processes seeking to access a hardware component of the computer system). In some embodiments, the first process corresponds to and/or is a first application. In some embodiments, the first process uses a framework is loaded in a process space of the first process. In some embodiments, the first process and/or the first application is a note-taking application, a word-processing application, a document-processing application, a presentation application, an email application, a form processing application such as a PDF viewer and/or editor, a game, a messaging application, a maps application, a fitness application, a health application, a digital payments application, a media application, and/or a social network application. In some embodiments, the computer system is a watch, a phone, a tablet, a fitness tracking device, a processor, a head-mounted display (HMD) device, a communal device, a media device, a speaker, a television, an electronic device, and/or a personal computing device.

The first process detects (802), via the input device, an input (e.g., a handwriting input and/or a non-handwriting input) (e.g., 306, 506, 516, 510, 706, 708, 906, 605c, 605g, 605i, 605o, 605s, 605x, 605aa, 605ab, and/or 605ac) corresponding to a first set of one or more handwritten strokes. In some embodiments, a handwriting input includes an input that begins at a first location and ends at a second location. In some embodiments, a handwritten stroke begins at a first location and ends at a second location that is the same as or different from the first location. In some embodiments, a non-handwriting input includes a tap input, a verbal input, an audible command, a gaze input, an air gesture, a mouse click, a submission of a user-interface element and/or a physical hardware element, an audible request, an audible command, an audible statement, a swipe input, a hold-and-drag input, a gaze input, an air gesture, and/or a mouse movement. In some embodiments, the input corresponding to the first set of one or more handwritten strokes is a handwritten stroke.

In response to detecting the input corresponding to the first set of one or more handwritten strokes, the first process sends (804) (and/or provides), to a second process (e.g., a handwriting daemon and/or a system process as described above) (e.g., 304) of the computer system different from the first process of the computer system, a request (e.g., 508, 710, and/or 908) to recognize (e.g., transcribe, generate a transcription, identify, and/or interpret) the first set of one or more handwritten strokes.

After sending the request to recognize the first set of one or more handwritten strokes, the first process receives (806), from the second process, a first transcription (and/or a transcript) (e.g., 712 and/or 910) corresponding to the first set of one or more handwritten strokes. In some embodiments, the first transcription includes a set of one or more characters and/or one or more words represented by the first set of one or more handwritten strokes.

After receiving the first transcription corresponding to the first set of one or more handwritten strokes, the first process detects (808), via the input device, an input (e.g., a handwriting input and/or a non-handwriting input) (e.g., 306, 506, 516, 510, 706, 708, 906, 605c, 605g, 605i, 605o, 605s, 605x, 605aa, 605ab, and/or 605ac) corresponding to a second set of one or more handwritten strokes (e.g., the same as or different from the first set of one or more handwritten strokes), wherein the input corresponding to the second set of one or more handwritten strokes is separate from the input corresponding to the first set of one or more handwritten strokes. In some embodiments, the input corresponding to the second set of one or more handwritten strokes is a handwritten stroke. In some embodiments, the second set of one or more handwritten strokes is different and/or separate from the first set of one or more handwritten strokes.

In response to detecting the input corresponding to the second set of one or more handwritten strokes, the first process sends (810) (and/or provides), to the second process, a request (e.g., 508, 710, and/or 908) to recognize (e.g., transcribe, generate a transcription, identify, and/or interpret) the second set of one or more handwritten strokes.

After sending the request to recognize the second set of one or more handwritten strokes, the first process receives (812), from the second process, a second transcription (and/or transcript) (e.g., 712 and/or 910) corresponding to at least the second set of one or more handwritten strokes. In some embodiments, the second transcription corresponds to the first set of one or more handwritten strokes and the second set of one or more handwritten strokes. In some embodiments, the second transcription includes a set of one or more characters and/or one or more words represented by the first set of one or more handwritten strokes and/or the second set of one or more handwritten strokes.

In response to (814) (and/or after) receiving the second transcript corresponding to at least the second set of one or more handwritten strokes, in accordance with a determination that a first set of one or more criteria is satisfied (e.g., based on a semantic understanding of the first transcription and/or the second transcription) (e.g., based on a document including the first set of one or more handwritten strokes and/or the second set of one or more handwritten strokes) (e.g., based on the first set of one or more handwritten strokes and/or the second set of one or more handwritten strokes) (e.g., based on a number of words included in the first set of one or more handwritten strokes and/or the second set of one or more handwritten strokes) (e.g., based on a number of characters included in the first set of one or more handwritten strokes and/or the second set of one or more handwritten strokes), the first process sends (816) (and/or provides), to a third process (e.g., the second process or another process different from the third process) (e.g., 304) of the computer system, a request (e.g., 912) to generate (e.g., synthesize, create, form, and/or obtain) a representation (e.g., a beautification, refined, and/or updated representation) of the first set of one or more handwritten strokes and the second set of one or more handwritten strokes, wherein the third process is different from the first process. In some embodiments, the first set of one or more criteria is tuned or optimized so that the representation of the first set of one or more handwritten strokes and the second set of one or more handwritten strokes is likely to be pleasing to a human.

In response to (814) receiving the second transcript corresponding to at least the second set of one or more handwritten strokes, in accordance with a determination that a second set of one or more criteria (e.g., after a period of time and/or after receiving a third set of one or more handwritten strokes different from the first set of one or more handwritten strokes and/or the second set of one or more handwritten strokes), different from the first set of one or more criteria, is satisfied, the first process forgoes (818) send of, to the third process of the computer system, the request to generate a representation of the first set of one or more handwritten strokes and the second set of one or more handwritten strokes.

While displaying the first set of one or more handwritten strokes and the second set of one or more handwritten strokes and after sending the request to generate a representation of the first set of one or more handwritten strokes and the second set of one or more handwritten strokes, the first process receives (820) (e.g., 914), from the third process, a first representation (e.g., beautified ink, a beautified representation, a refined representation, and/or an updated representation) (e.g., as illustrated in FIGS. 6H, 6J, 6T, 6Y, 6AB, 6AC, 6AD, and/or 6AG) of the first set of one or more handwritten strokes and the second set of one or more handwritten strokes, wherein the first representation of the first set of one or more handwritten strokes and the second set of one or more handwritten strokes is different from the first set of one or more handwritten strokes and the second set of one or more handwritten strokes. In some embodiments, the first representation of the first set of one or more handwritten strokes and the second set of one or more handwritten strokes includes the same meaning, content, text, set of one or more characters, and/or set of one or more words as the first set of one or more handwritten strokes and the second set of one or more handwritten strokes.

In response to receiving the first representation of the first set of one or more handwritten strokes and the second set of one or more handwritten strokes, the first process replaces (822) (e.g., as illustrated in FIGS. 6H, 6J, 6T, 6Y, 6AB, 6AC, 6AD, and/or 6AG) display of the first set of one or more handwritten strokes and the second set of one or more handwritten strokes with display of the first representation of the first set of one or more handwritten strokes and the second set of one or more handwritten strokes. In some embodiments, in response to receiving the first representation of the first set of one or more handwritten strokes and the second set of one or more handwritten strokes, the first process and/or the computer system ceases display of the first set of one or more handwritten strokes and the second set of one or more handwritten strokes. In some embodiments, in response to receiving the first representation of the first set of one or more handwritten strokes and the second set of one or more handwritten strokes, the first process and/or the computer system displays the first representation of the first set of one or more handwritten strokes and the second set of one or more handwritten strokes.

In some embodiments, the first set of one or more criteria includes a criterion that is based on a semantic understanding (e.g., interpretation, meaning, and/or context) of content including the first set of one or more handwritten strokes and the second set of one or more handwritten strokes. In some embodiments, the criterion is satisfied when the content has a first semantic understanding (e.g., a word, a set of one or more previous words, a sentence, an idea, a thought, a phrase, and/or a term has been completed). In some embodiments, the criterion is not satisfied (and/or the second set of one or more includes a criterion that is satisfied) when the content has a second semantic (e.g., a word, a set of one or more previous words, a sentence, an idea, a thought, a phrase, and/or a term has not been completed) understanding different from the first semantic understanding.

In some embodiments, the first set of one or more criteria includes a criterion that is satisfied when a determination is made that the first set of one or more handwritten strokes and the second set of one or more handwritten strokes represent (and/or correspond to) a complete word (and/or that a new word, different from the complete word, has started to be written). In some embodiments, the criterion is not satisfied (and/or the second set of one or more includes a criterion that is satisfied) when a determination is made that the first set of one or more handwritten strokes and the second set of one or more handwritten strokes do not represent (and/or do not correspond to) a complete word (and/or that a new word, different from the complete word, has not started to be written). In some embodiments, the first set of one or more criteria includes a criterion that is satisfied when a determination is made that the first set of one or more handwritten strokes and the second set of one or more handwritten strokes represent (and/or correspond to) a complete character, a complete phrase, a complete sentence, and/or a complete set of multiple words (and/or that a new character, different from the complete character, has started to be written).

In some embodiments, the first set of one or more criteria includes a criterion that is satisfied when a determination is made that a new word has begun to be handwritten after a previous word (e.g., different from the new word) has been handwritten. In some embodiments, the criterion is not satisfied (and/or the second set of one or more includes a criterion that is satisfied) when a determination is made that a new word has not begun to be handwritten after a previous word (e.g., different from the new word) has been handwritten.

In some embodiments, the first set of one or more criteria includes a criterion that is satisfied when a determination is made that a predefined time (e.g., 2-10 seconds) has elapsed since detecting the second set of one or more handwritten strokes (e.g., without detecting a third set of one or more handwritten strokes different from (and/or after) the second set of one or more handwritten strokes and the first set of one or more handwritten strokes). In some embodiments, the criterion is not satisfied (and/or the second set of one or more includes a criterion that is satisfied) when a determination is made that the predefined time has not elapsed since detecting the second set of one or more handwritten strokes.

In some embodiments, the first representation is based on (e.g., corresponds to, is associated with, has the same meaning as, has a similar but different appearance as, and/or shares a set of one or more visual characteristic of) the first set of one or more handwritten strokes and the second set of one or more handwritten strokes.

In some embodiments, the first representation is based on (e.g., corresponds to, is associated with, has a similar but different appearance as, and/or shares a set of one or more visual characteristic of) handwritten text in a document including the first set of one or more handwritten strokes and the second set of one or more handwritten strokes. In some embodiments, the handwritten text is different from the first set of one or more handwritten strokes and the second set of one or more handwritten strokes.

In some embodiments, the request to generate a representation of the first set of one or more handwritten strokes and the second set of one or more handwritten strokes is a first request. In some embodiments, in response to (and/or after) receiving the second transcript corresponding to at least the second set of one or more handwritten strokes, in accordance with a determination that a third set of one or more criteria is satisfied, wherein the third set of one or more criteria includes a criterion that is satisfied when the second set of one or more handwritten strokes corresponds to a first user (e.g., a user account and/or a person), the first process sends (and/or provides), to the third process of the computer system, a second request to generate (e.g., synthesize, create, form, and/or obtain) a representation (e.g., a beautification, refined, and/or updated representation) of the first set of one or more handwritten strokes and the second set of one or more handwritten strokes, wherein the second request includes an identification of the first user. In some embodiments, in response to receiving the second transcript corresponding to at least the second set of one or more handwritten strokes, in accordance with a determination that a fourth set of one or more criteria, different from the third set of one or more criteria, is satisfied, wherein the fourth set of one or more criteria includes a criterion that is satisfied when the second set of one or more handwritten strokes corresponds to a second user different from the first user, the first process sends (and/or provides), to the third process of the computer system, a third request to generate (e.g., synthesize, create, form, and/or obtain) a representation (e.g., a beautification, refined, and/or updated representation) of the first set of one or more handwritten strokes and the second set of one or more handwritten strokes, wherein the third request includes an identification of the second user (e.g., without including an identification of the first user). In some embodiments, an appearance of the first representation of the first set of one or more handwritten strokes and the second set of one or more handwritten strokes is based on a user that corresponds to the second set of one or more handwritten strokes such that the appearance is different for different users (e.g., the appearance adapts to a style of a user).

In some embodiments, the first set of one or more handwritten strokes and the second set of one or more handwritten strokes are in a first document. In some embodiments, the first process detects, via the input device, an input (e.g., a handwriting input and/or a non-handwriting input) corresponding to a fourth set of one or more handwritten strokes in a second document different from the first document, wherein the input corresponding to the fourth set of one or more handwritten strokes is separate from the input corresponding to the first set of one or more handwritten strokes, wherein the input corresponding to the fourth set of one or more handwritten strokes is the same as the input corresponding to the first set of one or more handwritten strokes. In some embodiments, the input corresponding to the fourth set of one or more handwritten strokes is a handwritten stroke. In some embodiments, in response to detecting the input corresponding to the fourth set of one or more handwritten strokes, the first process sends (and/or provides), to the second process of the computer system, a request to recognize (e.g., transcribe, generate a transcription, identify, and/or interpret) the fourth set of one or more handwritten strokes. In some embodiments, after sending the request to recognize the fourth set of one or more handwritten strokes, the first process receives, from the second process, a third transcription (and/or a transcript) corresponding to the fourth set of one or more handwritten strokes, wherein the third transcription is the same as the first transcription. In some embodiments, the third transcription includes a set of one or more characters and/or one or more words represented by the fourth set of one or more handwritten strokes. In some embodiments, after receiving the third transcription corresponding to the fourth set of one or more handwritten strokes, the first process detects, via the input device, an input (e.g., a handwriting input and/or a non-handwriting input) corresponding to a fifth set of one or more handwritten strokes (e.g., the same as or different from the fourth set of one or more handwritten strokes) in the second document, wherein the input corresponding to the fifth set of one or more handwritten strokes is separate from the input corresponding to the fourth set of one or more handwritten strokes, wherein the input corresponding to the fifth set of one or more handwritten strokes is separate from the input corresponding to the second set of one or more handwritten strokes, wherein the input corresponding to the fifth set of one or more handwritten strokes is the same as the input corresponding to the second set of one or more handwritten strokes. In some embodiments, the input corresponding to the fifth set of one or more handwritten strokes is a handwritten stroke. In some embodiments, in response to detecting the input corresponding to the fifth set of one or more handwritten strokes, the first process sends (and/or provides), to the second process, a request to recognize (e.g., transcribe, generate a transcription, identify, and/or interpret) the fifth set of one or more handwritten strokes. In some embodiments, after sending the request to recognize the fifth set of one or more handwritten strokes, the first process receives, from the second process, a fourth transcription (and/or transcript) corresponding to at least the fifth set of one or more handwritten strokes, wherein the fourth transcription is the same as the second transcription. In some embodiments, the fourth transcription corresponds to the fourth set of one or more handwritten strokes and the fifth set of one or more handwritten strokes. In some embodiments, the fourth transcription includes a set of one or more characters and/or one or more words represented by the fourth set of one or more handwritten strokes and/or the fifth set of one or more handwritten strokes. In some embodiments, in response to (and/or after) receiving the fourth transcript corresponding to at least the fifth set of one or more handwritten strokes and in accordance with a determination that the first set of one or more criteria is satisfied, the first process sends (and/or provides), to the third process of the computer system, a request to generate (e.g., synthesize, create, form, and/or obtain) a representation (e.g., a beautification, refined, and/or updated representation) of the fourth set of one or more handwritten strokes and the fifth set of one or more handwritten strokes, wherein the request to generate a representation of the fourth set of one or more handwritten strokes and the fifth set of one or more handwritten strokes is different from the request to generate a representation of the first set of one or more handwritten strokes and the second set of one or more handwritten stroke (e.g., the request to generate a representation of the fourth set of one or more handwritten strokes and the fifth set of one or more handwritten strokes includes an indication of a local style of the second document and the request to generate a representation of the first set of one or more handwritten strokes and the second set of one or more handwritten stroke includes an indication of a local style of the first document). In some embodiments, while displaying the fourth set of one or more handwritten strokes and the fifth set of one or more handwritten strokes and after sending the request to generate a representation of the fourth set of one or more handwritten strokes and the fifth set of one or more handwritten strokes, the first process receives, from the third process, a first representation (e.g., beautified ink, a beautified representation, a refined representation, and/or an updated representation) of the fourth set of one or more handwritten strokes and the fifth set of one or more handwritten strokes, wherein the first representation of the fourth set of one or more handwritten strokes and the fifth set of one or more handwritten strokes is different from the fourth set of one or more handwritten strokes and the fifth set of one or more handwritten strokes, and wherein the first representation of the fourth set of one or more handwritten strokes and the fifth set of one or more handwritten strokes is different from the first representation of the first set of one or more handwritten strokes and the second set of one or more handwritten strokes (e.g., the different documents (and/or the different styles in the different document) causes the representations of same handwritten strokes to be different). In some embodiments, the first representation of the fourth set of one or more handwritten strokes and the fifth set of one or more handwritten strokes includes the same meaning, content, text, set of one or more characters, and/or set of one or more words as the fourth set of one or more handwritten strokes and the fifth set of one or more handwritten strokes. In some embodiments, in response to receiving the first representation of the fourth set of one or more handwritten strokes and the fifth set of one or more handwritten strokes, the first process replaces display of the fourth set of one or more handwritten strokes and the fifth set of one or more handwritten strokes with display of the first representation of the fourth set of one or more handwritten strokes and the fifth set of one or more handwritten strokes. In some embodiments, in response to receiving the first representation of the fourth set of one or more handwritten strokes and the fifth set of one or more handwritten strokes, the first process and/or the computer system ceases display of the fourth set of one or more handwritten strokes and the fifth set of one or more handwritten strokes. In some embodiments, in response to receiving the first representation of the fourth set of one or more handwritten strokes and the fifth set of one or more handwritten strokes, the first process and/or the computer system displays the first representation of the fourth set of one or more handwritten strokes and the fifth set of one or more handwritten strokes.

In some embodiments, a first document includes the first set of one or more handwritten strokes and the second set of one or more handwritten strokes. In some embodiments, the first representation is based on (e.g., corresponds to, is associated with, has a similar but different appearance as, and/or shares a set of one or more visual characteristic of) handwritten text in a second document different from the first document.

In some embodiments, the input corresponding to first set of one or more handwritten strokes is detected via a touch-sensitive surface. In some embodiments, the input corresponding to second set of one or more handwritten strokes is detected via the touch-sensitive surface.

In some embodiments, the input corresponding to first set of one or more handwritten strokes is detected via an electronic stylus. In some embodiments, the input corresponding to second set of one or more handwritten strokes is detected via the electronic stylus.

In some embodiments, the third process is the second process.

In some embodiments, before detecting the input corresponding to the first set of one or more handwritten strokes, the first process detects, via the input device, an input corresponding to a request to modify one or more handwritten strokes (e.g., a request to move, erase, delete, and/or change a visual characteristic of one or more handwritten strokes), wherein the request to generate a representation of the first set of one or more handwritten strokes and the second set of one or more handwritten strokes is sent in response to (and/or as a result of) detecting the input corresponding to the request to modify handwritten strokes (and/or the request to recognize the first set of one or more handwritten strokes). In some embodiments, the request to recognize the first set of one or more handwritten strokes is sent for purposes of making a document searchable with or without the request to modify handwritten strokes.

In some embodiments, replacing display of the first set of one or more handwritten strokes and the second set of one or more handwritten strokes with display of the first representation of the first set of one or more handwritten strokes and the second set of one or more handwritten strokes includes modifying (e.g., re-flows and/or changes a position and/or a spacing of) display of a sixth set of one or more handwritten strokes (e.g., without ceasing display of the sixth set of one or more handwritten strokes) separate from the first representation, the first set of one or more handwritten strokes, and the second set of one or more handwritten strokes. In some embodiments, the sixth set of one or more handwritten strokes are positioned semantically after the first representation, the first set of one or more handwritten strokes, and/or the second set of one or more handwritten strokes. In some embodiments, modifying display of a sixth set of one or more handwritten strokes includes moving the sixth set of one or more handwritten strokes from a location to another location different from the location.

In some embodiments, the first representation is (and/or includes) a set of one or more computer-generated handwritten strokes.

In some embodiments, the first representation has the same meaning (e.g., definition, interpretation, and/or dictionary meaning) as a combination of the first set of one or more handwritten strokes and the second set of one or more handwritten strokes.

Note that details of the processes described above with respect to method 800 (e.g., FIGS. 8A-8B) are also applicable in an analogous manner to other methods described herein. For example, method 1000 optionally includes one or more of the characteristics of the various methods described above with reference to method 800. For example, the handwriting recognition of method 1000 can correspond to the first set of one or more handwritten strokes of method 800. For brevity, these details are not repeated herein.

FIG. 9 illustrates an exemplary architecture for providing proofreading suggestions and/or corrections for handwritten text in accordance with some embodiments. The exemplary architecture is used to illustrate the processes described below, including the processes in FIGS. 4, 6, 10, 11, and 12. The exemplary architecture includes application process 302 and system process 304.

In some embodiments, a process for providing proofreading suggestions and/or corrections for handwritten text begins when application process 302 detects (906) a user writing text on a user interface of the application process (e.g., note, document, and/or canvas). In some embodiments, in response to detecting the user writing text on the user interface of the application process, application process 302 sends (908) a recognition request to system process 304. In some embodiments, the recognition request includes handwritten text to be recognized and/or analyzed for potential corrections.

In some embodiments, system process 304 receives recognition request 908 and performs handwriting recognition on received handwritten text. In some embodiments, a recognition process identifies one or more characters and/or words represented by strokes in the handwritten text. In some embodiments, system process 304 uses one or more techniques, such as a pattern matching algorithm to accurately recognize the handwritten text, via the machine learning model in a similar process as described above with regards to FIG. 7. In addition to recognizing the handwritten text, system process 304 can determine if spell correction is applicable to any word of the recognized handwritten text. In some embodiments, system process 304 analyzes the recognized handwritten text and identifies potential spelling errors and/or mistakes to generate correction candidates in the form of typed (e.g., non-synthesized, and/or non-handwritten) suggestions. In some embodiments, system process 304 returns (910) a recognition result to application process 302 that includes transcribed text corresponding to the handwritten text, along with the correction candidates.

In some embodiments, if any correction candidates are identified, system process 304 synthesizes ink for the correction candidates before receiving a request for synthesized ink of a selected correction candidate. In some embodiments, synthetic ink represents the handwritten version and/or format of the corrected handwritten text that a style and/or visual appearance of the original handwritten ink. In some embodiments, system process 304 uses the original handwritten ink in combination with a global style sample (e.g., extracted from one or more documents of the user) to ensure consistency with the user's handwriting style. In some embodiments, a proactive synthesis of ink for the correction candidates is performed to reduce latency and/or optimize user experience when the user selects a correction candidate. In some embodiments, the machine learning model used by system process 304 to synthesize ink for correction candidates requires access to a global style repository. In some embodiments, accessing and/or processing data from the global style repository can add latency to the process of returning synthesized ink for selected corrections back to client 302 and/or add delay between a user selecting a correction candidate and seeing corresponding synthesized ink. Therefore, system process 304 can synthesize ink for correction candidates simultaneously with sending transcribed corrections (e.g., via 910) back to application process 302, to ensure that the synthesized ink is ready and/or available when a request for synthesized ink is received from application process 302.

In some embodiments, after receiving the recognition result and/or correction candidates (e.g., via process 910), application process 302 presents and/or displays the correction candidates, via a document, note, and/or canvas where user interaction 906 was detected. In some embodiments, the correction candidates are displayed as selectable options. For example, application process 302 can indicate presence of correction candidates via underlines below corresponding handwritten words and/or display of a list of the correction candidates (e.g., via hovering on the underlines, and/or selecting and option and/or control).

In some embodiments, after generating the synthetic ink for the correction candidates, system process 304 determines word segmentation and/or alignment information for each synthetic ink representation (e.g., for each handwritten word and/or character) including information on boundaries and/or positions of individual words within the synthetic ink, which allows for proper reflowing and/or display of corrected handwritten text.

In some embodiments, system process 304 detects (912) a request for synthetic ink for a selected correction candidate. In some embodiments, since correction candidates have already been pre-synthesized, system process 304 retrieves and returns (914) requested correction candidate in synthetic ink back to application process 302. In some embodiments, the synthetic ink is in a reflowable format (e.g., via metadata, and/or as described above with respect to FIG. 3, 5, and/or 7) to allow for proper insertion into a document and/or be adjusted to fit in available space. In some embodiments, the reflowable format includes word segmentation and/or alignment information determined by system process 304. In some embodiments, what a correction candidate is selected, application process 302 replaces the original handwritten text (e.g., the handwritten text corresponding to the correction candidate) with the corresponding synthetic ink of the selected correction candidate. In some embodiments, and if necessary, application process 302 reflows surrounding text and/or content and/or create additional space to accommodate corrected text in the document, note, and/or canvas.

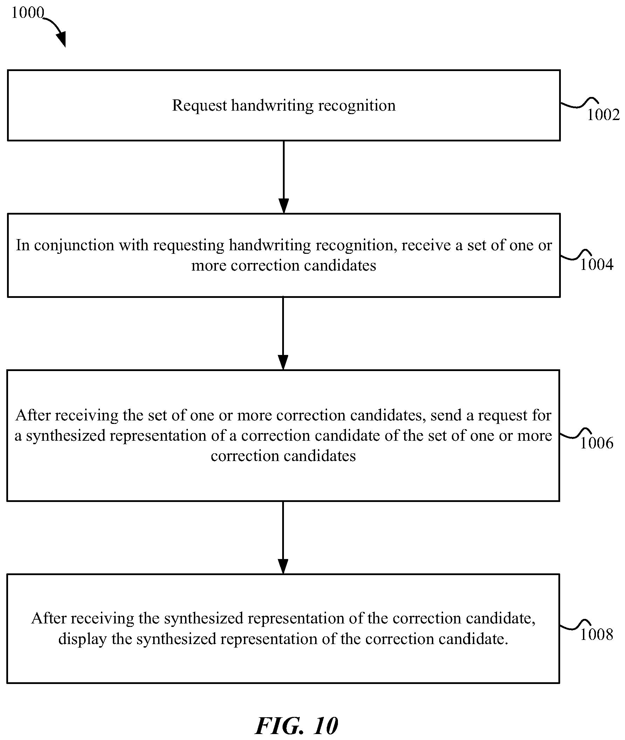

FIG. 10 is a flow diagram illustrating a method (e.g., method 1000) for pre-generating representations of corrections for a representation of text before receiving a request for a correction in accordance with some embodiments. Some operations in method 1000 are, optionally, combined, the orders of some operations are, optionally, changed, and some operations are, optionally, omitted.

As described below, method 1000 provides an intuitive way for pre-generating representations of corrections for a representation of text before receiving a request for a correction. Method 1000 reduces the cognitive burden on a user, thereby creating a more efficient human-machine interface. For battery-operated computing devices, enabling a user to interact with such devices faster and more efficiently conserves power and increases the time between battery charges.

In some embodiments, method 1000 is performed at a first application (e.g., a note-taking application, a word-processing application, a document-processing application, a presentation application, an email application, a form processing application such as a PDF viewer and/or editor, a game, a messaging application, a maps application, a fitness application, a health application, a digital payments application, a media application, and/or a social network application) (e.g., 302) of a device (e.g., 1300). In some embodiments, the device is a watch, a phone, a tablet, a fitness tracking device, a processor, a head-mounted display (HMD) device, a communal device, a media device, a speaker, a television, an electronic device, and/or a personal computing device.

The first application requests (1002) (e.g., via a system process) handwriting recognition (e.g., for and/or in a document) (e.g., 908). In some embodiments, the system process is a handwriting process and/or module and/or a content generation process and/or module. In some embodiments, the system process is of the device. In some embodiments, the system process is executing on another device different from the device. In some embodiments, the system process is part of and/or executing on behalf of an operating system of the device and/or the other device. In some embodiments, the system process facilitates communication between one or more applications of the device and/or the other device and one or more hardware components of the device and/or the other device. In some embodiments, the system process facilitates communication with secure processes and/or hardware-based processes (e.g., processes active while the device and/or the other device is locked and/or processes seeking to access a hardware component of the device and/or the other device). In some embodiments, requesting handwriting recognition includes sending a request to recognize and/or generate a transcription of handwritten content (and/or handwritten text). In some embodiments, requesting handwriting recognition includes sending a request to recognize a set of one or more characters and/or words represented by handwritten content (and/or handwritten text). In some embodiments, the document is a tangible and/or electronic record, such as a word processing document, a note, a spreadsheet, and/or a file.

In conjunction with (e.g., before, while, after, and/or as a result of) requesting handwriting recognition, the first application receives (1004) (e.g., from the system process) (e.g., 910) a set of one or more correction (e.g., proofread and/or alternative) candidates (e.g., a set of one or more characters and/or words) (e.g., 622a and/or 622b). In some embodiments, the set of one or more correction candidates is not handwritten content. In some embodiments, the set of one or more correction candidates is typed text. In some embodiments, the set of one or more correction candidates corresponds to handwritten content in the document (e.g., that is determined to be misspelled).

After receiving the set of one or more correction candidates, the first application sends (1006) (e.g., to the system process) a request (e.g., 912) for a synthesized representation (e.g., automatically-generated visual content and/or generative visual content) of a correction candidate of the set of one or more correction candidates. In some embodiments, the synthesized representation is in a style corresponding to and/or consistent with a style in the document and/or a style corresponding to a user of the device. In some embodiments, the synthesized representation is synthesized via a diffusion model. In some embodiments, the synthesized representation is different from the set of one or more correction candidates. In some embodiments, the synthesized representation is different from content in the document. In some embodiments, the request for the synthesized representation of the correction candidate is sent in response to the device detecting an input corresponding to a portion of content in the document. In some embodiments, the request for the synthesized representation of the correction candidate is sent in response to the device detecting an input corresponding to the correction candidate.

After receiving (e.g., from the system process) the synthesized representation of the correction candidate (e.g., 914), the first application displays (1008) (e.g., in the document) the synthesized representation of the correction candidate (e.g., as illustrated in FIG. 6AG).

In some embodiments, the device is in communication with (and/or includes) one or more display generation components (e.g., a display screen, a projector, a head mounted display, and/or a touch-sensitive display). In some embodiments, the device is in communication with (and/or includes) one or more input devices (e.g., a camera, a depth sensor, a microphone, a hardware input mechanism, a rotatable input mechanism, a heart monitor, a temperature sensor, and/or a touch-sensitive surface). In some embodiments, after receiving the set of one or more correction candidates, the first application displays, via the one or more display generation components: a first representation (e.g., a user interface element, a control, an option, a virtual button, an identification, and/or an indication) (e.g., 662a) corresponding to a first correction candidate of the set of one or more correction candidates; and a second representation (e.g., a user interface element, a control, an option, a virtual button, an identification, and/or an indication) (e.g., 662b) corresponding to a second correction candidate (e.g., the same as or different from the first correction candidate) of the set of one or more correction candidates, wherein the first representation is different from the second representation. In some embodiments, while displaying the first representation and the second representation, the first application detects, via the one or more input devices, an input (e.g., a selection input and/or a non-selection input) (e.g., 605af) corresponding to a respective representation, wherein the request for the synthesized representation of the correction candidate is sent in response to detecting the input corresponding to the respective representation, wherein the correction candidate is the first correction candidate when the respective representation is the first representation, and wherein the correction candidate is the second correction candidate when the respective representation is the second representation. In some embodiments, a selection input includes a tap input, a verbal input, an audible command, a gaze input, an air gesture input, a mouse click, and/or a submission of a user-interface element and/or a physical hardware element. In some embodiments, a non-selection input includes a verbal input, an audible request, an audible command, an audible statement, a swipe input, a hold-and-drag input, a gaze input, an air gesture input, and/or a mouse movement.

In some embodiments, in conjunction with (e.g., before, while, in response to, as part of, and/or after) displaying the synthesized representation of the correction candidate (and/or in response to receiving the synthesized representation of the correction candidate), the first application ceases display of content (e.g., handwritten text) corresponding to the synthesized representation of the correction candidate (e.g., as illustrated in FIG. 6AG).

In some embodiments, the synthesized representation of the correction candidate is computer-generated handwritten content (e.g., computer-generated handwritten text and/or a sketch).

In some embodiments, the correction candidate is a set of one or more words (e.g., typed or handwritten text). In some embodiments, each correction candidate of the set of one or more correction candidates is a different set of one or more words.

In some embodiments, the correction candidate is a first correction candidate. In some embodiments, in conjunction with (e.g., before, while, after, in response to, and/or as a result of) receiving the set of one or more correction candidates (and/or requesting handwriting recognition), the first application receives (e.g., from the system process) an identification (e.g., 660) of a first portion of content corresponding to a second correction candidate (e.g., the first correction candidate or another correction candidate different from the first correction candidate) of the set of one or more correction candidates (and/or an identification of a second portion of content, different from the first portion of content, corresponding to a third correction candidate, different from the second correction candidate, of the set of one or more correction candidates). In some embodiments, in response to receiving the identification of the first portion of content corresponding to the second correction candidate, the first application displays a visual indication (e.g., an underline and/or other visual emphasis indicating a possible misspelling) adjacent (and/or proximate) to the first portion of content. In some embodiments, in response to receiving the identification of the second portion of content corresponding to the third correction candidate, the first application displays a visual indication (e.g., an underline and/or other visual emphasis indicating a possible misspelling) adjacent (and/or proximate) to the second portion of content.

In some embodiments, the synthesized representation of the correction candidate replaces first handwritten text corresponding to the synthesized representation of the correction candidate. In some embodiments, displaying the synthesized representation of the correction candidate includes replacing handwritten text corresponding to the synthesized representation of the correction candidate. In some embodiments, as part of displaying the synthesized representation of the correction candidate, the first application replaces, with the synthesized representation of the correction candidate, handwritten text corresponding to the synthesized representation of the correction candidate.

In some embodiments, in conjunction with displaying the synthesized representation of the correction candidate, the first application changes a visual appearance of (e.g., reflows, such as moving over and/or across lines of handwritten text) second handwritten text after the first handwritten text.

In some embodiments, in conjunction with receiving the set of one or more correction candidates (e.g., in the same message that includes the set of one or more correction candidates and/or at the same time), the first application receives (e.g., from the system process), a transcription (e.g., 910) of existing handwritten content.

In some embodiments, the handwriting recognition is requested in response to detecting user input corresponding to handwritten text.

Note that details of the processes described above with respect to method 1000 (e.g., FIG. 10) are also applicable in an analogous manner to other methods described herein. For example, method 800 optionally includes one or more of the characteristics of the various methods described above with reference to method 1000. For example, the first process of method 800 can be the first application of method 1000. For brevity, these details are not repeated herein.

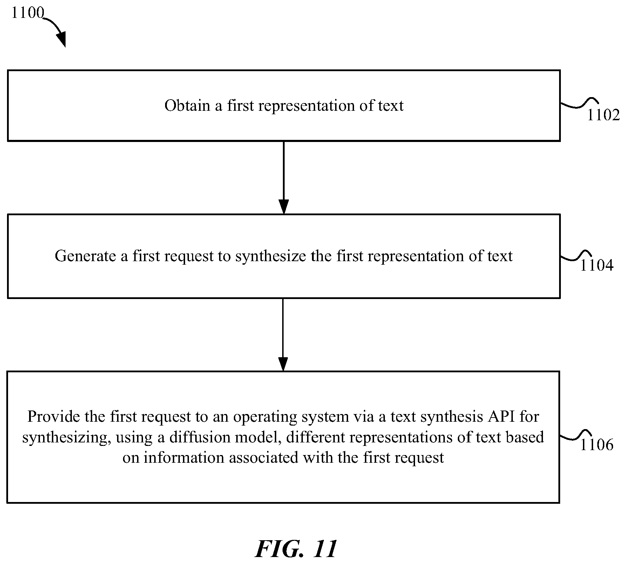

FIG. 11 is a flow diagram illustrating a method (e.g., method 1100) for obtaining a representation of text based on an existing representation of text in accordance with some embodiments. Some operations in method 1100 are, optionally, combined, the orders of some operations are, optionally, changed, and some operations are, optionally, omitted.

As described below, method 1100 provides an intuitive way for obtaining a representation of text based on an existing representation of text. Method 1100 reduces the cognitive burden on a user, thereby creating a more efficient human-machine interface. For battery-operated computing devices, enabling a user to interact with such devices faster and more efficiently conserves power and increases the time between battery charges.

In some embodiments, method 1100 is performed at an application of a device.

The application obtains (1102) (e.g., using a framework, SDK, and/or API) a first representation of text (e.g., a set of one or more handwritten and/or typed words) (e.g., automatically-generated visual content and/or generative visual content) (e.g., 160).

The application generates (1104) (e.g., using a framework, SDK, and/or API) a first request to synthesize the first representation of text. In some embodiments, the framework is loaded in a process space of the application. In some embodiments, the request to synthesize the first representation of text corresponds to and/or is a request to paste copied text (e.g., typed and/or handwritten text). In some embodiments, the request to synthesize the first representation of text corresponds to and/or is a request to change an appearance of and/or refine existing handwritten text. In some embodiments, the request to synthesize the first representation of text corresponds to and/or is a request to generate handwritten text for a selected proofreading change to existing handwritten text. In some embodiments, the application is different from a system process. In some embodiments, the application is executing on the device. In some embodiments, the application is executing on another device different from the device and
The application provides (1106) the first request to an operating system (e.g., 162) via a text synthesis API for synthesizing, using a diffusion model (e.g., used by an AI process or a generative AI process), different representations of text based on information associated with (e.g., included in and/or identified by) the first request (e.g. related to a process performed by an OS implementation module).

In some embodiments, the application obtains a second representation of text via the text synthesis API, wherein the second representation is an output of the diffusion model that corresponds to the first request. In some embodiments, the application displays the second representation of the text while ceasing display of the first representation of text.

Note that details of the processes described above with respect to method 1100 (e.g., FIG. 11) are also applicable in an analogous manner to other methods described herein. For example, method 400 optionally includes one or more of the characteristics of the various methods described above with reference to method 1100. For example, the first application of method 400 can be the application of method 1100. For brevity, these details are not repeated herein.

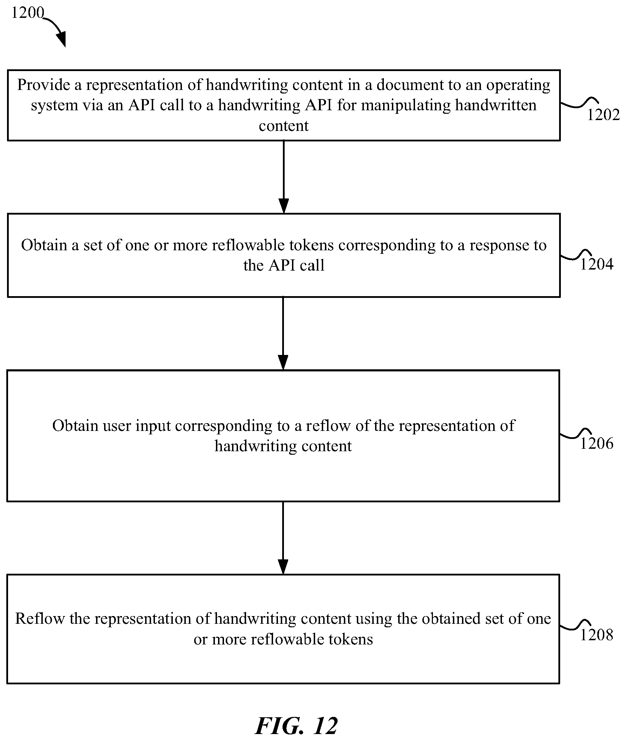

FIG. 12 is a flow diagram illustrating a method (e.g., method 1200) for reflowing content using obtained reflowable content in accordance with some embodiments. Some operations in method 1200 are, optionally, combined, the orders of some operations are, optionally, changed, and some operations are, optionally, omitted.

As described below, method 1200 provides an intuitive way for reflowing content using obtained reflowable content. Method 1200 reduces the cognitive burden on a user, thereby creating a more efficient human-machine interface. For battery-operated computing devices, enabling a user to interact with such devices faster and more efficiently conserves power and increases the time between battery charges.

In some embodiments, method 1200 is performed at an application of a device.

The application provides (1202) a representation of handwriting content in a document to an operating system (e.g., 162) via an API call to a handwriting API for manipulating handwritten content (e.g., 162).

The application obtains (1204) a set of one or more reflowable tokens corresponding to a response to the API call (e.g. related to a process performed by an OS implementation module).

The application obtains (1206) user input corresponding to a reflow of the representation of handwriting content.

The application reflows (1208) the representation of handwriting content using the obtained set of one or more reflowable tokens.

Note that details of the processes described above with respect to method 1200 (e.g., FIG. 12) are also applicable in an analogous manner to the methods described herein. For example, method 600 optionally includes one or more of the characteristics of the various methods described herein with reference to method 1200. For example, the representation of the content of method 600 can be received from the application of method 1200. For brevity, these details are not repeated herein.

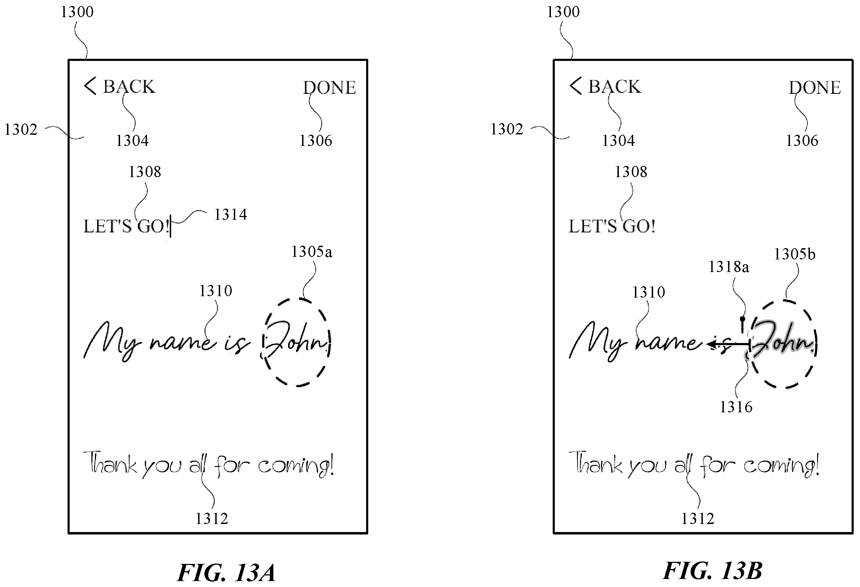

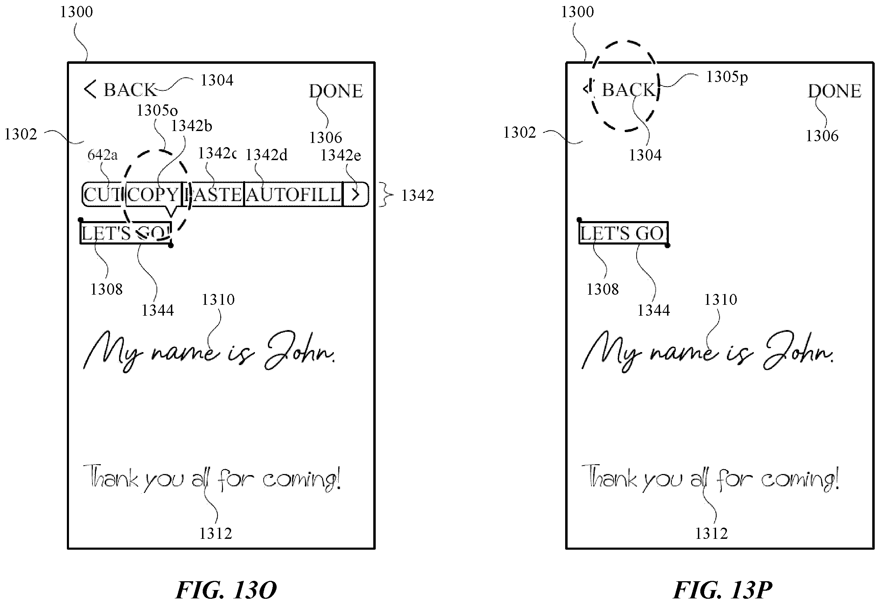

FIGS. 13A-13AF illustrate exemplary user interfaces for handwriting features in accordance with some embodiments. The user interfaces in these figures are used to illustrate the processes described above, including the processes in FIGS. 4, 6, 8A-8B, 10, 11, and 12.

FIGS. 13A-13AF illustrate computer system 1300 as a smart phone. It should be recognized that computer system 1300 can be a number of different types of computer systems, such as a desktop computer, a smart watch, a tablet, a laptop, a communal device, a smart speaker, an accessory, a personal gaming system, a laptop computer, a fitness tracking device, and/or a head-mounted display (HMD) device. In the examples described below with respect to FIGS. 13A-13AF, computer system 1300 displays user interface 1302 (e.g., a first writing user interface), user interface 1352 (e.g., an entry storage user interface), user interface 1354 (e.g., a second writing user interface), and user interface 1356 (e.g., a third writing user interface).

FIGS. 13A-13S illustrate a process where computer system 1300 adapts copied text into the same style of handwriting that the copied text is pasted into using a diffusion model. In some embodiments, copied text is typed text. In some embodiments, copied text is handwritten text (e.g., handwriting input detected via an electronic pencil and/or a touch-sensitive surface).

As illustrated in FIG. 13A, user interface 1302 includes back control 1304, done control 1306, typed text 1308, first handwritten text 1310, second handwritten text 1312, and typing indicator 1314. In some embodiments, computer system 1300 displays user interface 652 in response to detecting and input directed to back control 1304. In some embodiments, computer system 1300 exits an editing state in response to detecting an input directed to done control 1306. In some embodiments, typing indicator 1314 indicates a location where input detected via a keyboard and/or a microphone would be inserted.

As illustrated in FIG. 13A, typed text 1308 includes the sentence "Let's go!", first handwritten text 1310 includes handwritten text "My name is John." in a first handwriting style, and second handwritten text 1312 includes handwritten text "Thank you all for coming!" in a second handwriting style different from the first handwriting style. At FIG. 13A, computer system 1300 detects selection input 1305a directed to first handwritten text 1310. For example, selection input 1305a can be a press-and-hold input that is initiated at a location corresponding to first handwritten text 1310.

As illustrated in FIG. 13B, while and/or in response to detecting selection input 1305a, computer system 1300 displays selection indicator 1316 over a portion of first handwritten text 1310 (e.g., including "John", where selection input 1305a was detected) to signify that computer system 1300 is selecting the portion of first handwritten text 1310. In some embodiments, while and/or in response to detecting selection input 1305a, computer system 1300 displays boundary indicator 1318a to indicate an initial boundary of selection indicator 1316. As illustrated in FIG. 13B, in response to detecting initiation of selection input 1305a, computer system 1300 ceases display of typing indicator 1314. At FIG. 13B, computer system 1300 detects leftward swipe input 1305b. In some embodiments, leftward swipe input 1305b is a continuation of the press-and-hold input of selection input 1305a. In other embodiments, leftward swipe input 1305b is separate from selection input 1305a.

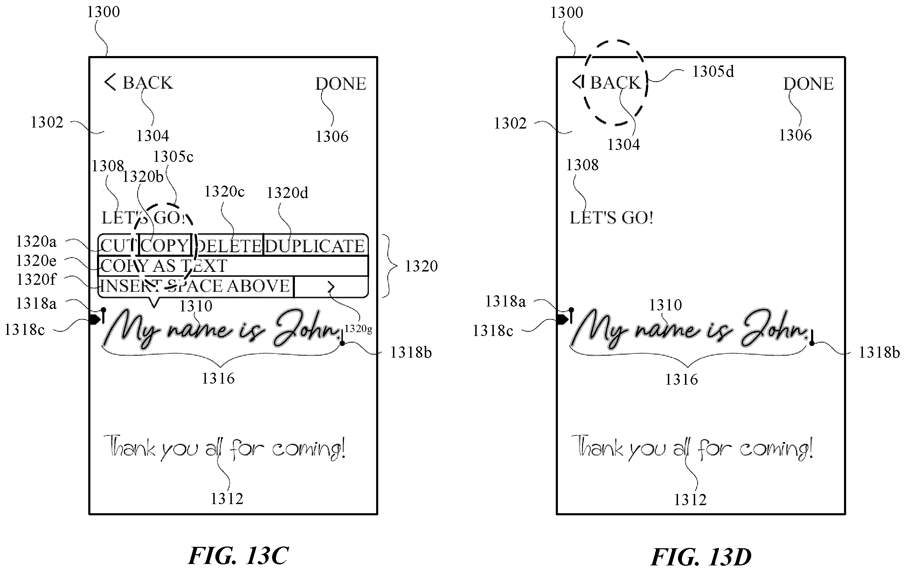

As illustrated in FIG. 13C, in response to detecting leftward swipe input 1305b, computer system 1300 expands selection indicator 1316 to cover first handwritten text 1310 (e.g., computer system 1300 selects all of first handwritten text 1310). Additionally, as illustrated in FIG. 13C, as a part of expanding selection indicator 1316, computer system 1300 displays boundary indicator 1318b and selected text indicator 1318c. In some embodiments, boundary indicator 1318a indicates an ending boundary of selection indicator 1316. In some embodiments, selected text indicator 1318c indicates that the whole of first handwritten text 1310 is selected. It should be recognized that boundary indicator 1318b and/or selected text indicator 1318c is not displayed in some embodiments. As illustrated in FIG. 13C, in response to detecting release of leftward swipe input 1305b, computer system 1300 displays menu 1320 including cut control 1320a, copy control 1320b, delete control 1320c, duplicate control 1320d, copy as text control 1320e, insert space above control 1320f, and more control 1320g. It should be recognized that such options in menu 1320 are examples and that more, fewer, and/or different options can be included in menu 1320.

In some embodiments, in response to detecting an input directed to cut control 1320a, computer system 1300 cuts (e.g., deletes, ceases displaying, and/or removes) and stores selected text within a clipboard. In some embodiments, in response to detecting an input directed to copy control 1320b, computer system 1300 copies (e.g., stores and/or keeps) selected text. In some embodiments, in response to detecting an input directed to delete control 1320c, computer system 1300 deletes (e.g., removes, and/or ceases displaying) selected text. In some embodiments, in response to detecting an input directed to duplicate control 1320d, computer system 1300 duplicates selected text. In some embodiments, in response to detecting an input to paste) in response to detecting an input directed to copy as text control 1320e, computer system 1300 copies a transcription of selected text (e.g., computer system 1300 converts handwritten text to typed text). In some embodiments, in response to detecting an input directed to insert space above control 1320f, computer system 1300 inserts a space above the selected text (e.g., computer system generates space above). In some embodiments, in response to detecting an input directed to more control 1320g, computer system 1300 displays additional controls corresponding to menu 1320. At FIG. 13C, computer system 1300 detects selection input 1305c directed to copy control 1320b. In response to detecting selection input 1305c, computer system 1300 copies first handwritten text 1310 (e.g., computer system 1300 stores first handwritten text 1310 in preparation for an action, such as pasting).

As illustrated in FIG. 13D, in response to detecting selection input 1305c, computer system 1300 ceases display of menu 1320. Additionally, computer system 1300 continues to display selection indicator 1318, boundary indicator 1318a, boundary indicator 1318b, and selected text indicator 1318c with respect to first handwritten text 1310. At FIG. 13D, computer system 1300 detects selection input 1305d directed to back control 1304.

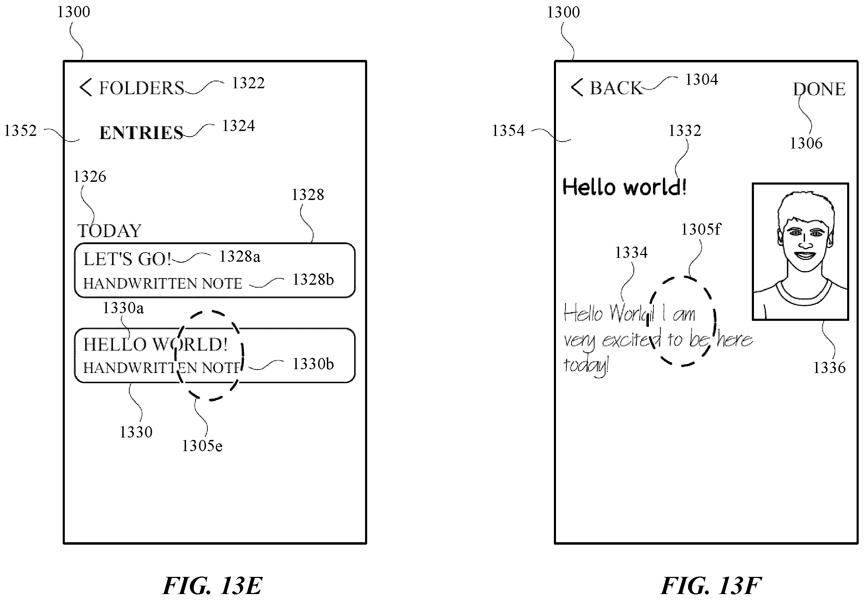

As illustrated in FIG. 13E, in response to detecting selection input 1305d, computer system 1300 ceases display of user interface 1302 and displays user interface 1352 (e.g., an entry storage user interface) including folders control 1322, entries indicator 1324, date indicator 1326, entry control 1328 and entry control 1330. In some embodiments, in response to detecting an input directed to folders control 1322, computer system 1300 displays a folder user interface that includes display of one or more folders for navigation purposes. As illustrated in FIG. 3E, entries indicator 1324 indicates the title of user interface 1352 (e.g., "Entries") and date indicator 1326 indicates the date of creation of entry control 1328 and entry control 1330 (e.g., "Today").

In some embodiments, in response to detecting an input directed to entry control 1328, computer system 1300 displays a writing user interface (e.g., user interface 1302). As illustrated in FIG. 13E, computer system 1300 displays title indicator 1328a and contents indicator 1328b as a part of entry control 1328. Title indicator 1328a indicates the title of and/or a portion of content in user interface 1302 in entry control 1328 (e.g., "Let's go!"). In some embodiments, computer system 1300 designates the first text added to user interface 1302 as title indicator 1328a of entry control 1328. Contents indicator 1328b indicates a type of content within user interface 1302. As illustrated in FIG. 13E, computer system 1300 displays contents indicator 1328b as "Handwritten note" to indicate that user interface 1302 includes handwritten text (e.g., first handwritten text 1310).

In some embodiments, in response to detecting an input directed to entry control 1330, computer system 1300 displays a second writing user interface (e.g., user interface different from user interface 1302). As illustrated in FIG. 13E, computer system 1300 displays title indicator 1330a and contents indicator 1330b as a part of entry control 1330. Title indicator 1330a indicates the title of and/or a portion of content in user interface 1302 in entry control 1330 (e.g., "Hello world!"). In some embodiments, computer system 1300 designates the first text added to a user interface corresponding to entry control 1330 as title indicator 1330a. Contents indicator 1330b indicates a type of content within the user interface corresponding to entry control 1330. As illustrated in FIG. 13E, computer system 1300 displays contents indicator 1330b as "Handwritten note" to indicate that the user interface corresponding to entry control 1330 includes handwritten text. At FIG. 13E, computer system 1300 detects selection input 1305e directed to entry control 1330.

As illustrated in FIG. 13F, in response to detecting selection input 1305e, computer system 1300 ceases display of user interface 1352 and displays user interface 1354 (e.g., a writing user interface corresponding to entry control 1330 including back control 1304, done control 1306, third handwritten text 1332, fourth handwritten text 1334 and image indicator 1336. Third handwritten text 1332 includes handwritten text (e.g., "Hello World!") in a third handwriting style different from the first handwriting style and the second handwriting style. Fourth handwritten text 1334 includes handwritten text (e.g., "Hello world! I am very excited to be here today!") in a fourth handwriting style different from the first handwriting style, the second handwriting style, and the third handwriting style. Image indicator 1336 includes an image of a man. As illustrated in FIG. 13F, fourth handwritten text 1334 avoids (e.g., does not overlap and/or cover) image indicator 1336. At FIG. 13F, computer system 1300 detects selection input 1305f directed to fourth handwritten text 1334. More specifically, computer system 1300 detects selection input 1305f directed to the middle of fourth handwritten text 1334 (e.g., in between "world!" and "I am").

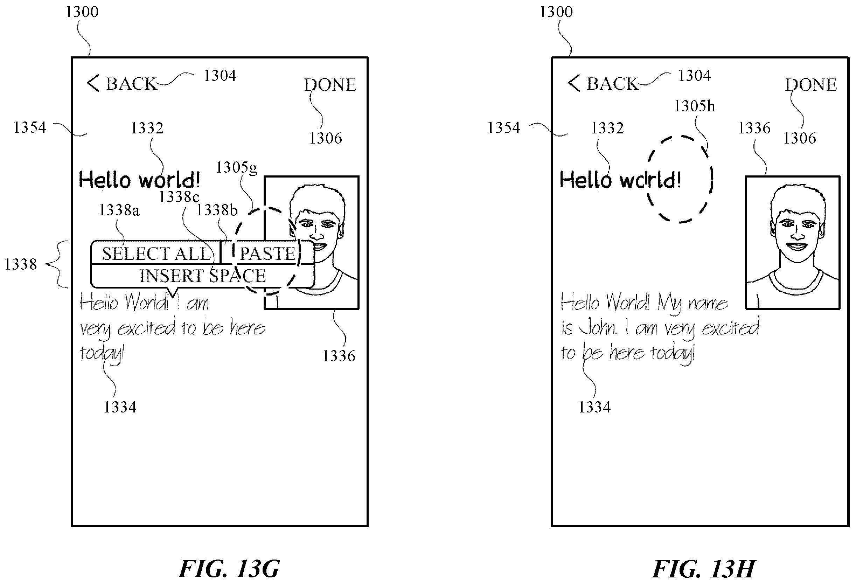

As illustrated in FIG. 13G, in response to detecting selection input 1305f, computer system 1300 displays menu 1338 including select all control 1338a, paste control 1338b, and insert space control 1338c. It should be recognized that menu 1338 can include more, fewer, and/or different controls than illustrated.

In some embodiments, in response to detecting an input directed to select all control 1338a, computer system 1300 selects all detected text in user interface 654. In this example, all selected text would include third handwritten text 1332 and fourth handwritten text 1334. In some embodiments, in response to detecting an input directed to paste control 1338b, computer system pastes (e.g., adds, inserts, and/or displays) copied text. In some embodiments, in response to detecting an input directed to insert space control 1338c, computer system 1300 inserts a space within (e.g., at the located where computer system 1300 detected the input) the selected text. At FIG. 13G, computer system 1300 detects selection input 1305g directed to paste control 1338b.

As illustrated in FIG. 13H, in response to detecting selection input 1305g, computer system 1300 pastes the selected text (e.g., first handwritten text 1310) within fourth handwritten text 1334. As illustrated in FIG. 13H, in response to pasting the selected text within fourth handwritten text 1334, computer system 1300 displays first handwritten text 1310 as a part of fourth handwritten text 1334 (e.g., "Hello world! My name is John. I am very excited to be here today!") in the same handwriting style as fourth handwritten text 1334 (e.g., instead of a handwriting style of first handwritten text 1310).

At FIG. 13H, as part of pasting first handwritten text 1310 into fourth handwritten text 1334, computer system 1300 provides first handwritten text 1310 to a diffusion model. Computer system 1300 uses the diffusion model to adapt first handwritten text 1310 into the same style as fourth handwritten text 1334 (e.g., computer system 1300 adapts first handwritten text 1310 to match the same handwriting style as fourth handwritten text 1334). As illustrated in FIG. 13H, in response to adapting first handwritten text 1310, computer system 1300 displays first handwritten text 1310 as a part of and in the same style as fourth handwritten text 1334. As a part of adapting first handwritten text 1310 to match the same handwriting style as fourth handwritten text 1334, computer system 1300 changes displayed characteristics of first handwritten text 1310 to best match fourth handwritten text 1334, including color, size, style, and/or kerning. Additionally, as a part of adapting first handwritten text 1310 to match the same handwriting style as fourth handwritten text 1334, computer system 1300 keeps certain typographical emphases (e.g., capitalization, font size, and/or letter spacing), but does not keep other typographical emphases (e.g., italics, bolding, and/or underlining). As illustrated in FIG. 13H, as part of pasting first handwritten text 1310 into fourth handwritten text 1334, computer system 1300 displays fourth handwritten text 1334 as avoiding (e.g., not overlapping and/or not covering) image indicator 1336 (e.g., despite the addition of first handwritten text 1310, computer system 1300 does not display fourth handwritten text 1334 as overlapping image indicator 1336). In some embodiments, as part of pasting first handwritten text 1310 into fourth handwritten text 1334, computer system 1300 displays fourth handwritten text 1334 as overlapping image indicator 1336.

In some embodiments, computer system 1300 selectively adapts the color of copied text to a color of handwritten text depending on the type of selected text. For example, computer system 1300 can change the color of the selected text when the selected text is handwritten text and might not change the color of the selected text when the selected text is typed text. For another example, computer system 1300 might not change the color of the selected text when the selected text is handwritten text and can change the color of the selected text when the selected text is typed text. In one scenario where first handwritten text 1310 is colored blue and fourth handwritten text 1334 is colored red, in response to pasting first handwritten text 1310 into fourth handwritten text 1334, computer system 1300 adapts first handwritten text 1310 to be colored red to match the color of fourth handwritten text 1334 while also adapting the handwriting style. In another scenario where a copied sample of text is typed (e.g., is colored black) and fourth handwritten text 1334 is colored red, in response to pasting the copied typed text into fourth handwritten text 1334, computer system 1300 does not adapt the copied typed text to be colored red to match the color of fourth handwritten text 1334 (e.g., computer system 1300 displays the typed text as black within and/or as a part of fourth handwritten text 1334 while still adapting the handwriting style).

In some embodiments, computer system 1300 adapts first handwritten text 1310 to match the same stye as fourth handwritten text 1334 without adapting to match the same style as fourth handwritten text 1332. For example, in a scenario where computer system 1300 detects an input to paste first handwritten text 1310 closer to fourth handwritten text 1334 than third handwritten text 1332, computer system 1300 adapts first handwritten text 1310 to match the same handwriting style as fourth handwritten text 1334 rather than the handwriting style of third handwritten text 1332 based on a determination that first handwritten text 1310 is pasted closer to fourth handwritten text 1334 than third handwritten text 1332. At FIG. 13H, computer system 1300 detects selection input 1305h directed to third handwritten text 1332. More specifically, computer system 1300 detects selection input 1305h directed to the end of third handwritten text 1332 (e.g., after "world!").

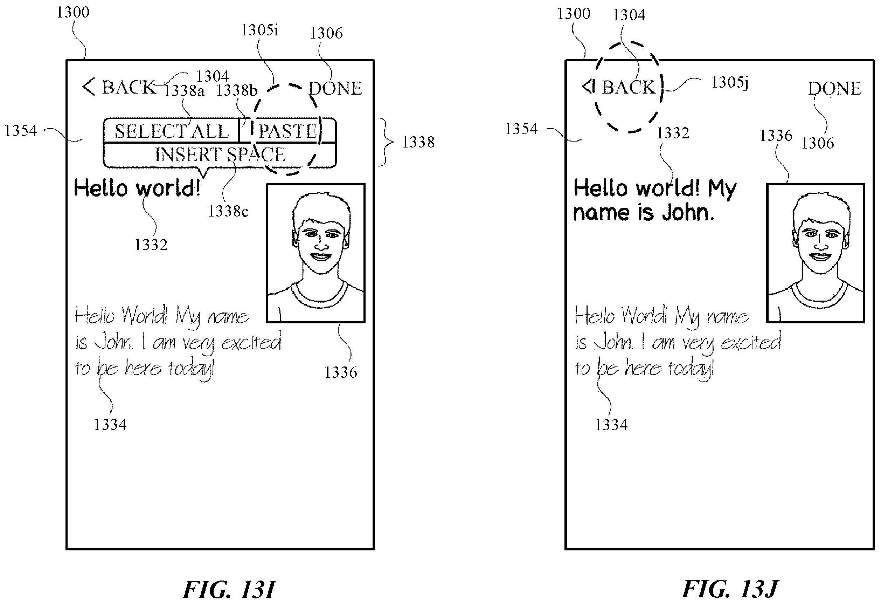

As illustrated in FIG. 13I, in response to detecting selection input 1305h, computer system 1300 displays menu 1338 in the same manner as illustrated in FIG. 13G. At FIG. 13I, computer system 1300 detects selection input 1305i directed to paste control 1338b.

As illustrated in FIG. 13J, in response to detecting selection input 1305i, computer system 1300 pastes the selected text (e.g., first handwritten text 1310) after third handwritten text 1332. As illustrated in FIG. 13J, in response to pasting the selected text after third handwritten text 1332, computer system 1300 displays first handwritten text 1310 as a part of third handwritten text 1332 (e.g., "Hello world! My name is John.").

At FIG. 13J, as part of pasting first handwritten text 1310 into third handwritten text 1332, computer system 1300 provides first handwritten text 1310 to a diffusion model. In some embodiments, computer system 1300 uses the diffusion model to adapt first handwritten text 1310 into the same style as third handwritten text 1332 (e.g., computer system 1300 adapts first handwritten text 1310 to match the same handwriting style as third handwritten text 1332). As illustrated in FIG. 13J, in response to adapting first handwritten text 1310, computer system 1300 displays first handwritten text 1310 as a part of and in the same style as third handwritten text 1332 (e.g., including color, size, style, kerning, and/or typographical emphases). Additionally, as illustrated in FIG. 13J, as part of pasting first handwritten text 1310 into third handwritten text 1332, computer system 1300 displays third handwritten text 1332 as avoiding (e.g., not overlapping and/or not covering) image indicator 1336 (e.g., despite the addition of first handwritten text 1310, computer system 1300 does not display third handwritten text 1332 as overlapping image indicator 1336). At FIG. 13J, computer system 1300 detects selection input 1305j directed to back control 1304.

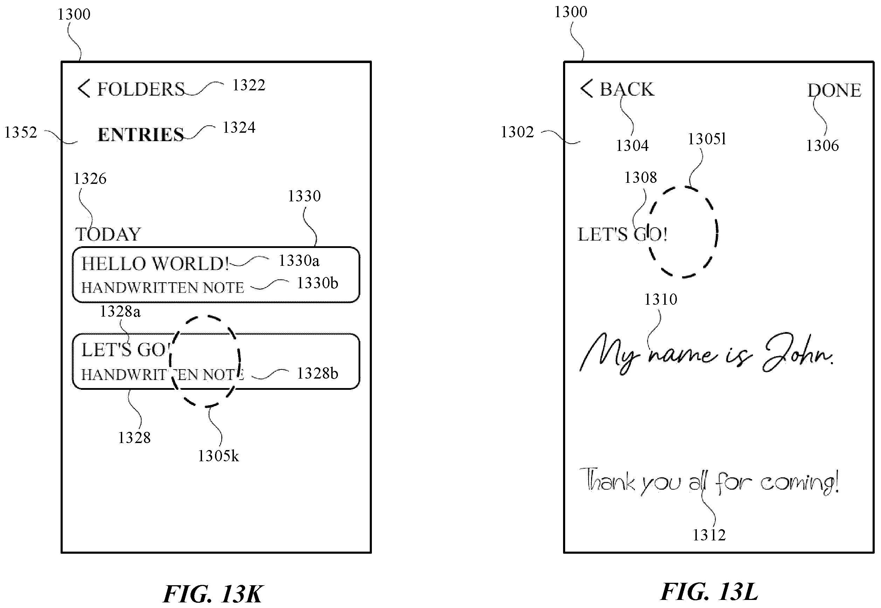

As illustrated in FIG. 13K, in response to detecting selection input 1305j, computer system ceases display of user interface 1354 and displays user interface 1352 (e.g., an entry storage user interface). As illustrated in FIG. 13K, computer system 1300 switched the positions of entry control 1328 and entry control 1330 (e.g., computer system 1300 organizes and displays entry control 1328 and entry control 1330 based on which entry control was most recently interacted with). At FIG. 13K, computer system 1300 detects selection input 1305k directed to entry control 1328.

As illustrated in FIG. 13L, in response to detecting selection input 1305k, computer system 1300 ceases display of user interface 1352 and displays user interface 1302 (e.g., a user interface corresponding to entry control 1328). At FIG. 13L, computer system 1300 detects selection input 13051 directed to typed text 1308. More specifically, computer system 1300 detects selection input 13051 directed to the end of typed text 1308 (e.g., after "GO!").

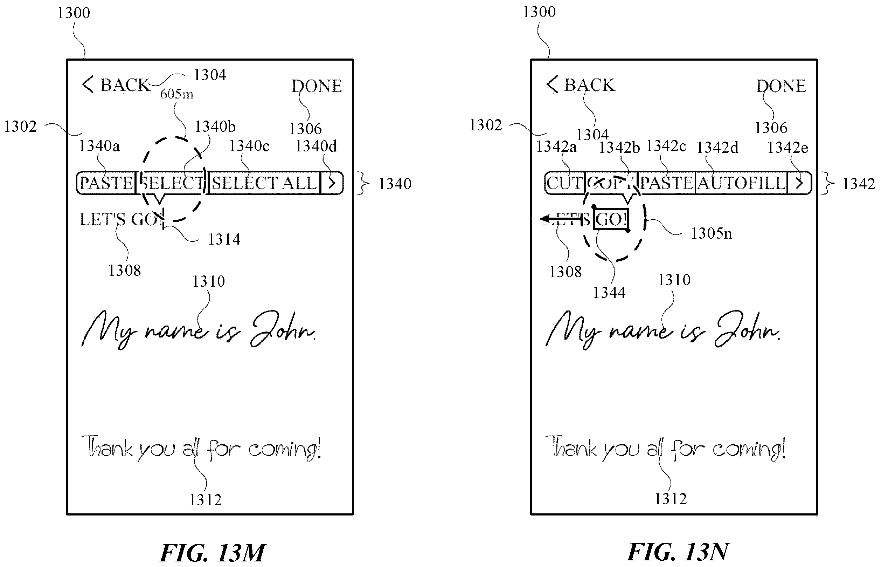

As illustrated in FIG. 13M, in response to detecting selection input 1305l, computer system 1300 displays typing indicator 1314 and menu 1340 including paste control 1340a, select control 1340b, and select all control 1340c. In some embodiments, in response to detecting an input directed to paste control 1340a, computer system 1300 pastes (e.g., adds, inserts, and/or displays) copied text. In some embodiments, in response to detecting an input directed to select control 1340b, computer system 1300 selects a word of detected text. In some embodiments, in response to selection input 1305l) in response to detecting an input directed to select all control 1340c, computer system 1300 selects all detected text. At FIG. 13M, computer system 1300 detects selection input 1305m directed to select control 1340b.

As illustrated in FIG. 13N, in response to detecting selection input 1305m, computer system 1300 displays selected text indicator 1344 and menu 1342 and ceases display of typing indicator 1314. In some embodiments, selected text indicator 1344 indicates the portion of typed text 1308 selected. As illustrated in FIG. 13N, menu 1342 includes cut control 1342a, copy control 1342b, paste control 1342c, autofill control 1342d, and more control 1342e. It should be recognized that menu 1342 can include more, fewer, and/or different controls than illustrated.

In some embodiments, in response to detecting an input directed to cut control 1342a, computer system 1300 cuts (e.g., deletes, ceases displaying, and/or removes) and stores selected text within a clipboard. In some embodiments, in response to detecting an input directed to copy control 1342b, computer system 1300 copies (e.g., stores and/or keeps) selected text. In some embodiments, in response to detecting an input directed to paste control 1342c, computer system pastes (e.g., adds, inserts, and/or displays) copied text. In some embodiments, in response to detecting an input directed to autofill control 1342d, computer system 1300 automatically displays data (e.g., passwords, contacts, and/or external text detected via a camera and/or camera system) within a text portion. In some embodiments, in response to detecting an input directed to more control 1342e, computer system 1300 displays additional controls corresponding to menu 1342. At FIG. 13N, computer system 1300 detects leftward swipe input 1305n.

As illustrated in FIG. 130, in response to detecting leftward swipe input 1305n, computer system 1300 selects all of typed text 1308. Additionally, in response to detecting leftward swipe input 1305n, computer system 1300 displays selected text indicator 1344 to cover all of typed text 1308. At FIG. 130, computer system 1300 detects selection input 1305o directed to copy control 1342b. At FIG. 130, in response to detecting selection input 1305o, computer system 1300 copies typed text 1308 (e.g., computer system 1300 stores typed text 1308 in preparation for an action, such as pasting).

As illustrated in FIG. 13P, in response to detecting selection input 1305o, computer system 1300 ceases display of menu 1342. Additionally, in response to detecting selection input 1305o, computer system 1300 continues display of selected text indicator 1344 over typed text 1308. At FIG. 13P, computer system 1300 detects selection input 1305p directed to back control 1304.

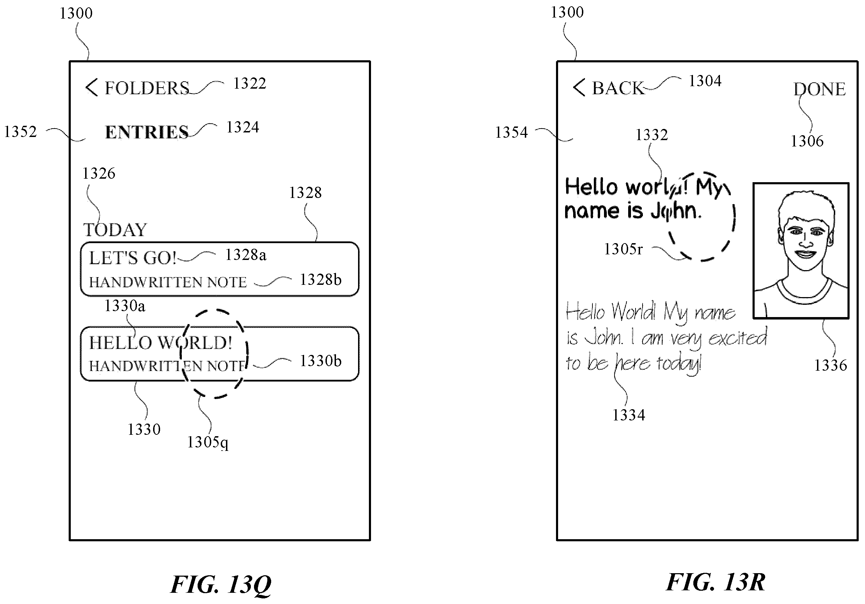

As illustrated in FIG. 13Q, in response to detecting selection input 1305p, computer system ceases display of user interface 1302 and displays user interface 1352 (e.g., an entry storage user interface). As illustrated in FIG. 13Q (e.g., relative to FIG. 13K), computer system 1300 switched the positions of entry control 1328 and entry control 1330 (e.g., computer system 1300 organizes and displays entry control 1328 and entry control 1330 based on which entry control was most recently interacted with). At FIG. 13Q, computer system 1300 detects selection input 1305q directed to entry control 1330.

As illustrated in FIG. 13R, in response to detecting selection input 1305q directed to entry control 1330, computer system 1300 ceases display of user interface 1352 and displays user interface 1354 (e.g., a user interface corresponding to entry control 1330). At FIG. 13R, computer system 1300 detects selection input 1305r directed to third handwritten text 1332. More specifically, computer system 1300 detects selection input 1305r directed to the end of third handwritten text 1332 (e.g., after "John.").

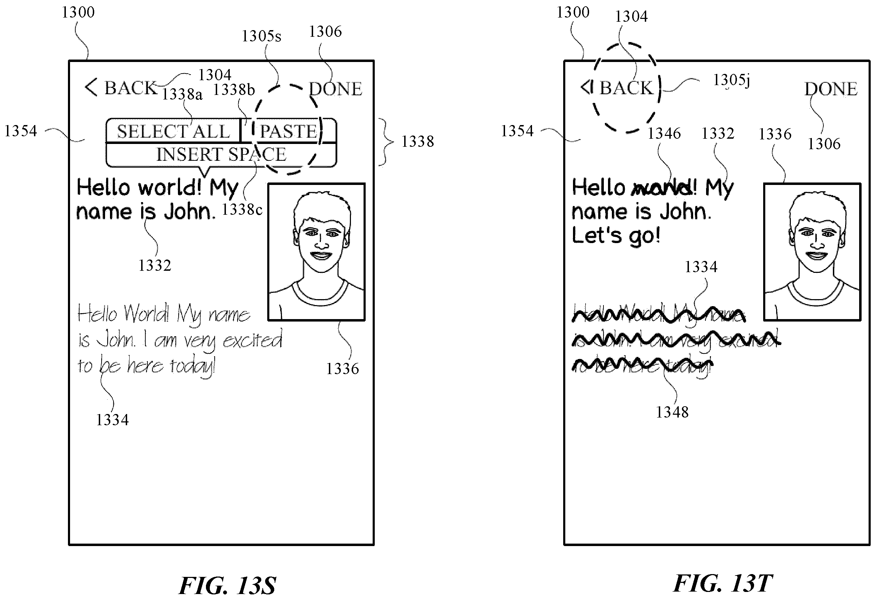

As illustrated in FIG. 13S, in response to detecting selection input 1305r, computer system 1300 displays menu 1338. At FIG. 13S, computer system 1300 detects selection input 1305s directed to paste control 1338b.

As illustrated in FIG. 13T, in response to detecting selection input 1305s, computer system 1300 pastes the selected text (e.g., typed text 1308) after third handwritten text 1332. As illustrated in FIG. 13T, in response to pasting the selected text after third handwritten text 1332, computer system 1300 displays typed text 1308 as a part of third handwritten text 1332 (e.g., "Hello world! My name is John. Let's go!").

At FIG. 13T, as part of pasting typed text 1308 into third handwritten text 1332, computer system 1300 provides first handwritten text 1310 to a diffusion model. In some embodiments, computer system 1300 uses the diffusion model to adapt pasting typed text 1308 into the same style as third handwritten text 1332 (e.g., computer system 1300 adapts pasting typed text 1308 to match the same handwriting style as third handwritten text 1332, including computer system 1300 converts pasting typed text 1308 into handwritten text). As illustrated in FIG. 13T, in response to adapting typed text 1308, computer system 1300 displays typed text 1308 as a part of and in the same handwritten style as third handwritten text 1332 (e.g., including size, style, kerning, and/or typographical emphases).

In between FIG. 13S and 13T, computer system 1300 detects a hold-drag-release input (e.g., originating from an electronic pencil) corresponding to a request to delete a portion of third handwritten text 1332 and all of fourth handwritten text 1334. As illustrated in FIG. 13T, in response to detecting the hold-drag-release input corresponding to the request to delete the portion of third handwritten text 1332 and all of fourth handwritten text 1334, computer system 1300 displays scribble indicator 1346 and scribble indicator 1348. As illustrated in FIG. 13T, computer system 1300 displays scribble indicator 1346 over a portion of third handwritten text 1332 (e.g., "world") and scribble indicator 1348 over all of fourth handwritten text 1334.

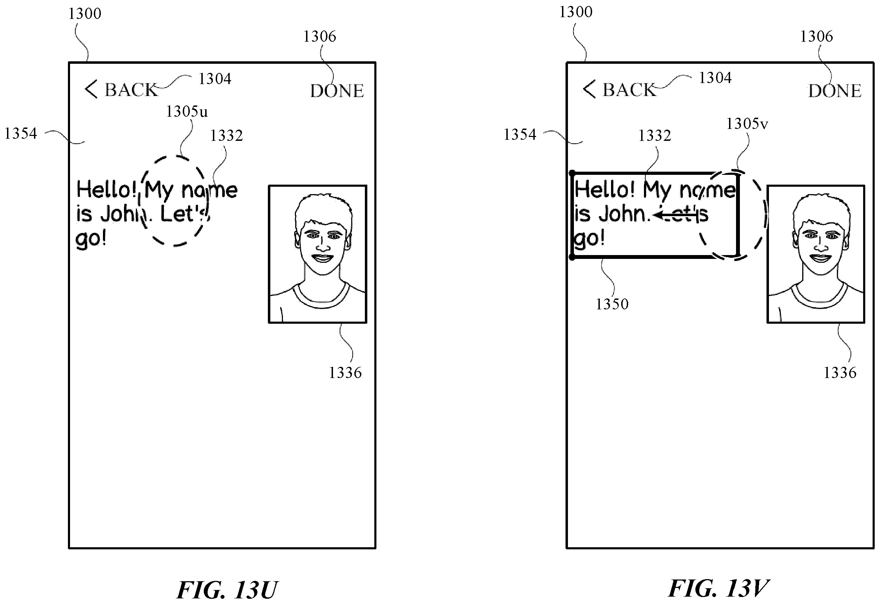

In between FIG. 13T and 13U, in response to detecting the hold-drag-release input, computer system 1300 deletes (e.g., ceases to display and/or removes) the portion of third handwritten text 1332 (e.g., "world") and the totality of fourth handwritten text 1334. As illustrated in FIG. 13U, computer system 1300 maintains display of third handwritten text 1332 without display of the deleted portion (e.g., Hello! My name is John. Let's go!) without display of fourth handwritten text 1334.

FIGS. 13T through 13Y illustrate a process where, in response to detecting an input, computer system 1300 reflows text, including handwritten text. For the purposes of this disclosure, context on reflowing is needed. Computer system 1300 displays text (e.g., handwritten and/or typed text) within a bounding box. Computer system 1300 uses a bounding box to enclose and/or set limits for the text. In response to detecting a change to and/or in a bounding box, computer system 1300 reflows the text within the bounding box to best fit the limits set by the bounding box. In some embodiments, computer system 1300 does not display the bounding box. In other embodiments, computer system 1300 displays the bounding box.

At FIG. 13U, computer system 1300 makes a determination that the contents of third handwritten text 1332 have changed. In response to making a determination that the contents of third handwritten text 1332 have changed, computer system 1300 reflows the remaining content of third handwritten text 1332 to best fit the limits of the bounding box (e.g., because computer system 1300 deleted "world" from third handwritten text 1332, computer system 1300 reflows the text to accommodate the change (e.g., computer system 1300 shifts "My" and the following text to fill the space left by the deletion of "world")). As illustrated in FIG. 13U, computer system 1300 does not reflow "Hello!" (e.g., computer system 1300 makes a determination that the deletion of "world" does not impact the placement of "Hello! "). At FIG. 13U, computer system 1300 detects selection input 1305u directed to third handwritten text 1332.

As illustrated in FIG. 13V, in response to detecting selection input 1305u, computer system 1300 displays bounding box indicator 1350. At FIG. 13V, computer system 1300 detects leftward swipe and hold input 1305v directed to bounding box indicator 1350. More specifically, computer system 1300 detects leftward swipe and hold input 1305v directed to the right side of bounding box indicator 1350.

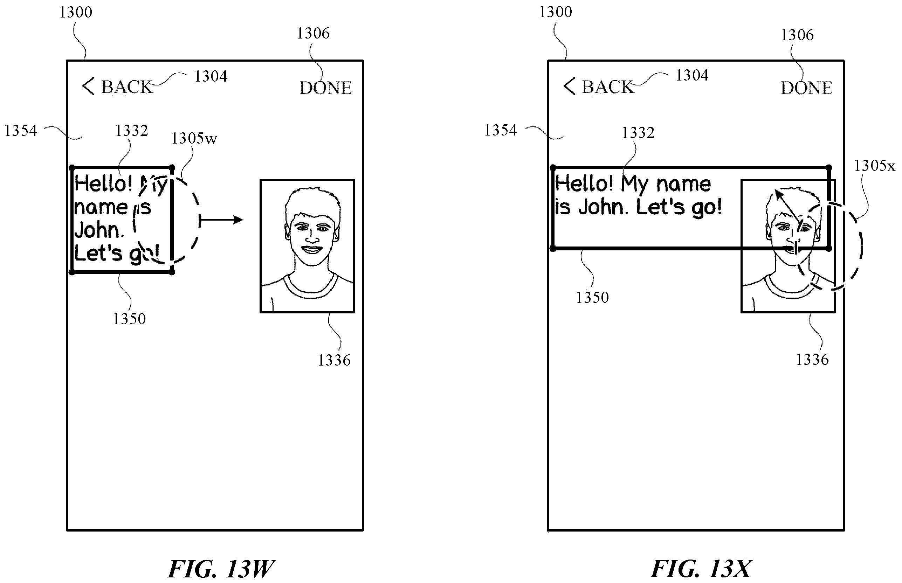

As illustrated in FIG. 13W, in response to detecting leftward swipe and hold input 1305v, computer system 1300 changes the display of bounding box indicator 1350 (e.g., computer system 1300 compresses bounding box indicator 1350 to the left (e.g., away from image indicator 1336)). At FIG. 13W, computer system 1300 makes a determination that bounding box indicator 1350 has changed. As illustrated in FIG. 13W, in response to making a determination that bounding box indicator 1350 has changed, computer system 1300 reflows third handwritten text 1332 (e.g., computer system 1300 determines that the limits of bounding box indicator 1350 have changed, and, in response, reflows third handwritten text 1332 to best fit the new (compressed) limits of the bounding box). At FIG. 13W, computer system 1300 detects rightward swipe and hold input 1305w directed to bounding box indicator 1350. More specifically, computer system 1300 detects rightward swipe and hold input 1305w directed to the right side of bounding box indicator 1350.

As illustrated in FIG. 13X, in response to detecting rightward swipe and hold input 1305w, computer system 1300 changes the display of bounding box indicator 1350 (e.g., computer system 1300 expands bounding box indicator 1350 to the right (e.g., over image indicator 1336)). At FIG. 13X, computer system 1300 makes a determination that bounding box indicator 1350 has changed. As illustrated in FIG. 13W, in response to making a determination that bounding box indicator 1350 has changed, computer system 1300 reflows third handwritten text 1332 (e.g., computer system 1300 determines that the limits of bounding box indicator 1350 have changed, and, in response, reflows third handwritten text 1332 to best fit the new (expanded) limits of the bounding box). As illustrated in FIG. 13X, computer system 1300 displays third handwritten text 1332 as avoiding (e.g., not overlapping and/or not covering) image indicator 1336 (e.g., despite expanding bounding box indicator 1350 to cover image indicator 1336). In other embodiments, computer system 1300 displays third handwritten text 1332 as overlapping and/or covering at least a portion of image indicator 1336 when expanding bounding box indicator 1350 overlaps and/or covers at least a portion of image indicator 1336. At FIG. 13X, computer system 1300 detects leftward swipe and hold input 1305x directed to bounding box indicator 1350. More specifically, computer system 1300 detects leftward swipe and hold input 1305x directed to the bottom right corner of bounding box indicator 1350.

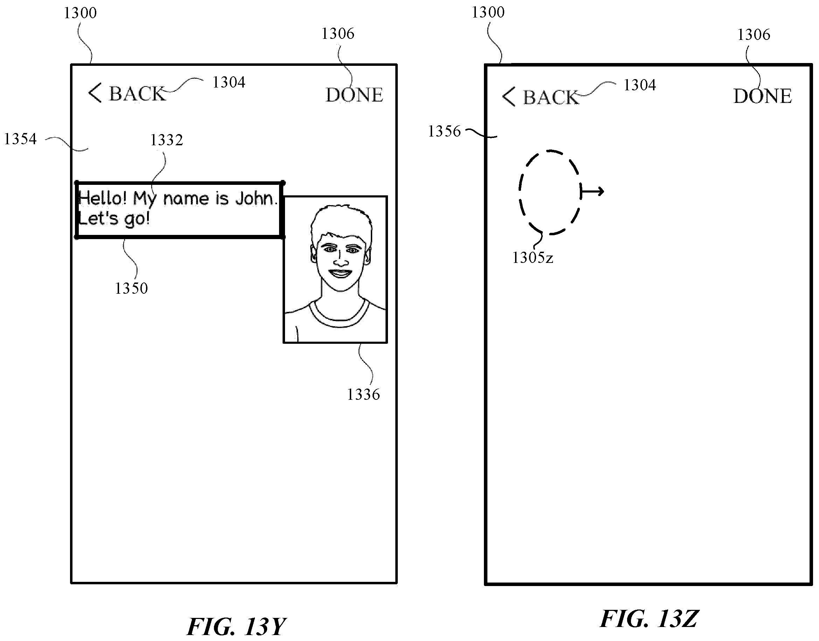

As illustrated in FIG. 13Y, in response to detecting leftward swipe and hold input 1305x, computer system 1300 changes the display of bounding box indicator 1350 (e.g., computer system 1300 compresses and shrinks bounding box indicator 1350 to the left (e.g., away from image indicator 1336)). At FIG. 13Y, computer system 1300 makes a determination that bounding box indicator 1350 has changed. As illustrated in FIG. 13Y, in response to making a determination that bounding box indicator 1350 has changed, computer system 1300 shrinks third handwritten text 1332 to match the display of bounding box indicator 1350 (e.g., computer system 1300 determines that the limits of bounding box indicator 1350 have changed, and, in response, reflows third handwritten text 1332 to best fit the new (compressed) limits of the bounding box). Please note that shrinking text size is not a part of the reflowing process.

FIGS. 13Z through 13AF illustrate a process where, in response to detecting a handwriting input, computer system 1300 beautifies handwritten text and, in response to making a determination that a portion of handwritten text is incorrect (e.g., is spelled incorrectly, and/or is grammatically incorrect), displays an indication and/or provides correction suggestions. Please note that FIGS. 13Z through 13AF take place at a different time than FIGS. 13A through 13Y.

As illustrated in FIG. 13Z, computer system 1300 displays user interface 1356 (e.g., a writing user interface). User interface 1356 includes back control 1304 and done control 1306. At FIG. 13Z, computer system 1300 detects handwriting input 1305z (e.g., an input detected via a touch-sensitive surface and/or an electronic pencil).

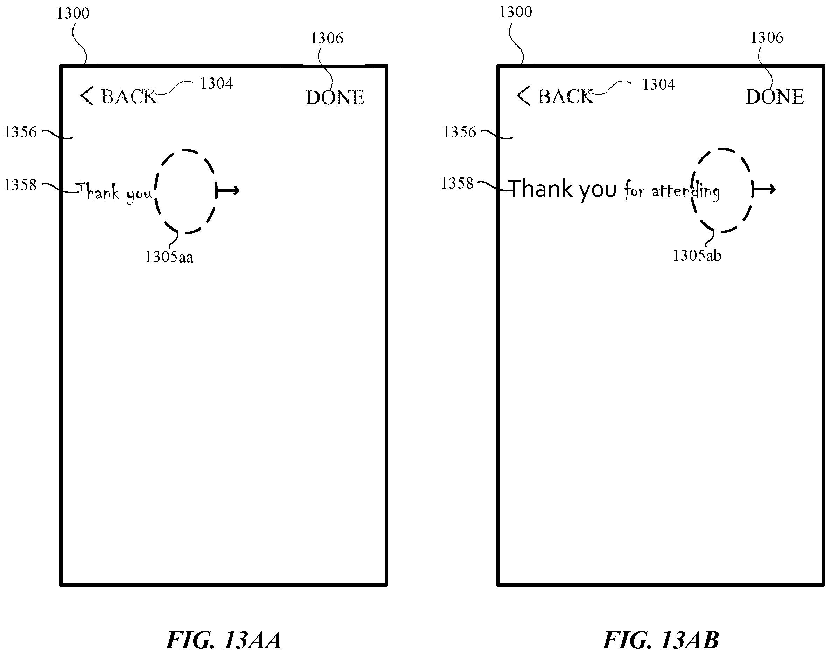

As illustrated in FIG. 13AA, in response to detecting handwriting input 1305z, computer system 1300 displays fifth handwritten text 1358 (e.g., to simulate writing a sentence on paper). Fifth handwritten text 1358 includes handwritten text (e.g., "Thank you") in a fifth handwriting style different from the first handwriting style, the second handwriting style, the third handwriting style, and the fourth handwriting style. At FIG. 13AA, computer system 1300 detects handwriting input 1305aa.

As illustrated in FIG. 13AB, in response to detecting handwriting input 1305aa, computer system 1300 displays additional text as a part of fifth handwritten text 1358 (e.g., "Thank you for attending") (e.g., to simulate the continuation of writing a sentence on paper). At FIG. 13AB, computer system 1300 makes a determination that a portion of fifth handwritten text 1358 is complete (e.g., "Thank you"). As illustrated in FIG. 13AB, in response to making a determination that the portion of fifth handwritten text 1358 is complete and/or when a setting to beautify handwritten text is enabled, computer system 1300 beautifies the portion of fifth handwritten text 1358 (e.g., "Thank you").

For the purposes of this disclosure, context on beautification is needed. In some embodiments, computer system 1300 beautifies (e.g., cleans up, improves, and/or betters) completed handwritten text to increase legibility. In some embodiments, computer system 1300 beautifies portions of text based on a determination that a portion of the text is complete (e.g., the portion of text is no longer being written and/or edited). In some embodiments, computer system 1300 beautifies portions of text in a trailing fashion (e.g., as computer system 1300 detects handwriting inputs, computer system 1300 beautifies older portions of handwritten text while newer portions of handwritten text is created based on a determination that the older portions of handwritten text are complete). In some embodiments, a trailing fashion includes beautifying a single word at a time based on a determination that the word is complete. In some embodiments, a trailing fashion includes beautifying two words at a time based on a determination that the two words are complete. As illustrated in FIG. 13AB, computer system 1300 beautifies the first two words of fifth handwritten text 1358 (e.g., "Thank you") in a trailing fashion. In some embodiments, computer system 1300 beautifies portions of text based on a determination that the entire portion of text is complete (e.g., by way of a period, an exclamation point, and/or a question mark). For example, computer system 1300 only beautifies a sentence in response to determining that the sentence is complete (e.g., in response to detecting a period at the end of the sentence). In some embodiments, computer system 1300 beautifies text in a trailing fashion and/or once an entire portion of text is determined to be complete to avoid distracting a user as they write. At FIG. 13AB, computer system 1300 detects handwriting input 1305ab.

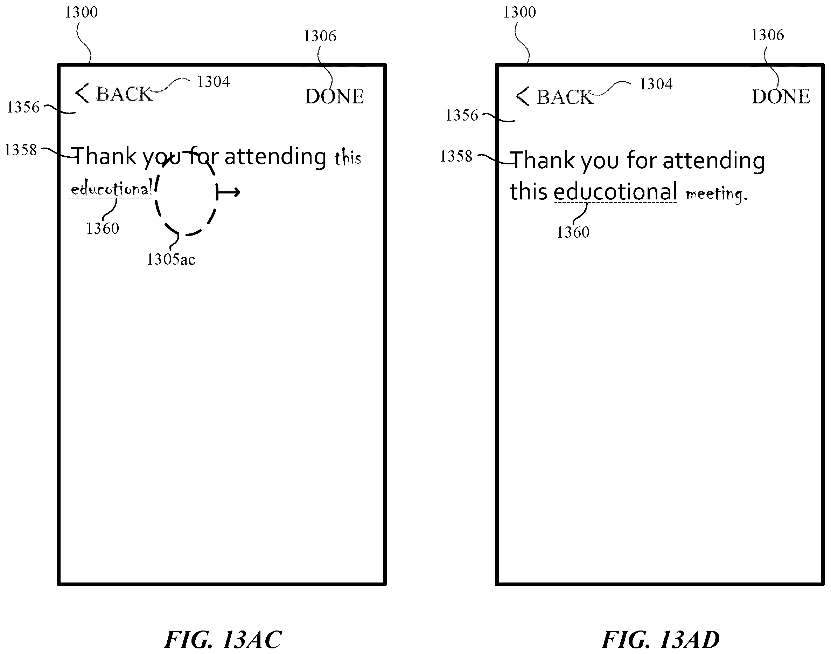

As illustrated in FIG. 13AC, in response to detecting handwriting input 1305ab, computer system 1300 displays additional text as a part of fifth handwritten text 1358 (e.g., "Thank you for attending this educotional"). At FIG. 13AC, computer system 1300 makes a determination that a portion of fifth handwritten text 1358 is complete (e.g., "for attending") (e.g., the portion of text is no longer being written and/or edited). As illustrated in FIG. 13AC, computer system 1300 beautifies a portion of fifth handwritten text 1358 (e.g., "for attending") in response to making a determination that the portion of text is complete.

At FIG. 13AC, computer system 1300 makes a determination that a word in fifth handwritten text is spelled incorrectly (e.g., "educotional"). As illustrated in FIG. 13AC, in response to making a determination that a word in fifth handwritten text is spelled incorrectly, computer system 1300 displays correction indicator 1360 underneath the incorrect word. At FIG. 13AC, computer system 1300 detects handwriting input 1305ac.

As illustrated in FIG. 13AD, in response to detecting handwriting input 1305ac, computer system 1300 displays additional text as a part of fifth handwritten text 1358 (e.g., "Thank you for attending this educotional meeting."). At FIG. 13AD, computer system 1300 makes a determination that a portion of fifth handwritten text 1358 is complete (e.g., "this educotional meeting.") (e.g., the portion of text is no longer being written and/or edited). As illustrated in FIG. 13AD, computer system 1300 beautifies a portion of fifth handwritten text 1358 (e.g., "this educotional") while maintaining correction indicator 1360 underneath the incorrect word in response to making a determination that the portion of text is complete.

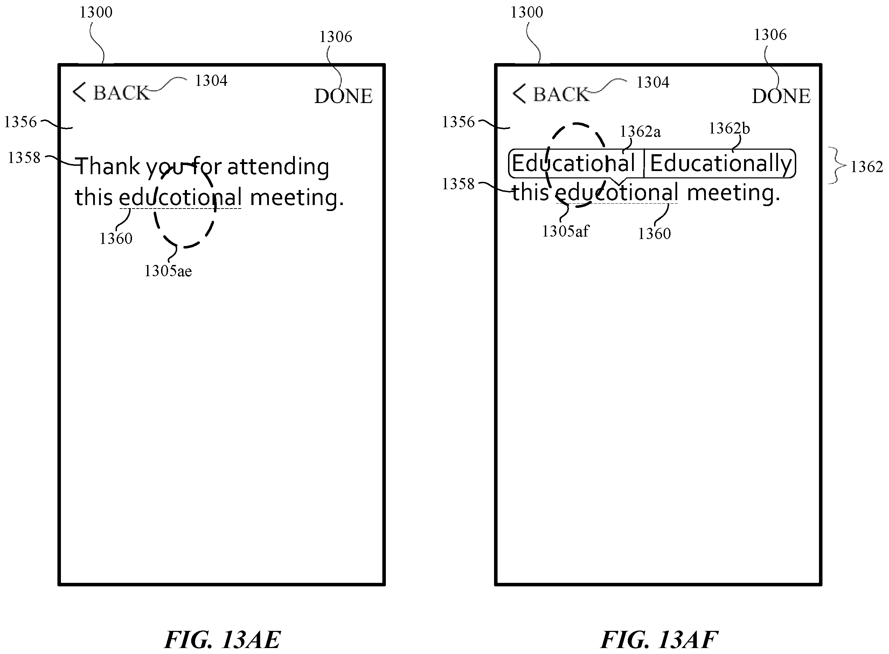

At FIG. 13AE, after FIG. 13AD, computer system 1300 makes a determination that a portion of fifth handwritten text 1358 is complete (e.g., "meeting.") (e.g., the portion of text is no longer being written and/or edited). As illustrated in FIG. 13AE, computer system 1300 beautifies a portion of fifth handwritten text 1358 (e.g., "meeting.") while maintaining correction indicator 1360 underneath the incorrect word in response to making a determination that the portion of text is complete. At FIG. 13AE, computer system 1300 detects selection input 1305ad directed to a portion of fifth handwritten text 1358 (e.g., "educotional").

As illustrated in FIG. 13AF, in response to detecting selection input 1305ad, computer system 1300 displays correction region 1362 including correction suggestions (e.g., correction suggestion indicator 1362a and correction suggestion indicator 1362b) for an incorrect word (and/or term, such as a set of one or more words). In some embodiments, computer system 1300 displays correction suggestions based on an understanding of the incorrect word (e.g., the context, and/or the misspelling). As illustrated in FIG. 13AF, correction region 1362 includes correction suggestion indicator 1362a (e.g., "educational") and correction suggestion indicator 1362b (e.g., "educationally"). At FIG. 13AF, computer system 1300 detects selection input 1305ae directed to correction suggestion indicator 1362a. In some embodiments, selection input 1305ae is a hover input, a click input, a selection input, and/or a gaze input.

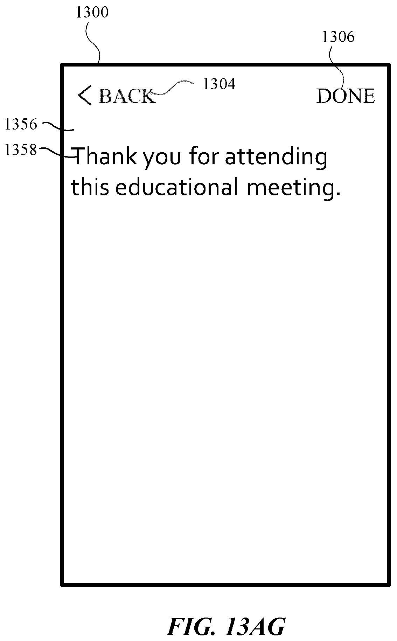

As illustrated in FIG. 13AG, in response to detecting selection input 1305ae, computer system 1300 replaces the incorrect word (e.g., "educotional") with a correct word corresponding to correction suggestion indicator 1362a (e.g., "educational") in fifth handwritten text 1358. As illustrated in FIG. 13AG, computer system 1300 displays the correct word in the same beautified style as the rest of fifth handwritten text 1358 (e.g., computer system 1300 adapts corrections into the same handwritten style as the text the corrections are added into). Additionally, at FIG. 13AG, in response to adding a correction into fifth handwritten text 1358, computer system 1300 makes a determination that the word is no longer incorrect. As illustrated in FIG. 13AF, in response to making a determination that the word is no longer incorrect, computer system 1300 ceases to display correction region 1362 and/or correction indicator 1360.

Disclosed herein are methods for displaying an animation that depicts a replacement of strokes of original handwritten text with strokes of synthesized handwritten text. In some embodiments, the animation depicts the strokes of the original handwritten text morphing into the strokes of the synthesized handwritten text.

Prior to performing the animation (Setup), a simulated annealing process is performed to freeform match between the strokes of the original handwritten text to the strokes of the synthesized handwritten text, resulting in a mapping between the strokes of the original handwritten text to the strokes of the synthesized handwritten text. The results of the simulated annealing process are used to generate two morphs: 1) a first morph (FromImage morph) of a first mesh, that takes the strokes of the original handwriting text and moves it towards the strokes of the synthesized handwritten text, and 2) a second morph of a second mesh (ToImage morph), that takes the strokes of the synthesized handwritten text and moves it towards the strokes of the original handwritten text. An original image (FromImage) of the strokes of the original handwritten text is generated, and a synthesized image (ToImage) of the strokes of the synthesized handwritten text is generated. An original distance field (FromDistanceField) is generated for the original image of the strokes of the original handwritten text, and a synthesized distance field (ToDistanceField) is generated for the synthesized image of the strokes of the synthesized handwritten text.

In a first implementation, during a first portion of the animation (A) the animation displays the FromImage mesh morphing towards synthesized strokes using the FromImage Morph, and the displayed image is masked to a thresholded version of the FromDistanceField. During a second portion of the animation (B), the ToImage is faded into the displayed image while being mesh morphed from original handwritten strokes to the synthesized handwritten strokes using the ToImage Morph, and the displayed image (which includes a composite of the morphed FromImage and the morphed ToImage) is masked to the thresholded version of the FromDistanceField. During a third portion of the animation (C), the displayed image (which includes a composite of the morphed FromImage and the morphed ToImage) is masked to a cross-faded image mask. The cross-faded image mask is generated by cross-fading the FromDistanceField to the ToDistanceField to generate a cross-faded distance field and thresholding the cross-faded distance field. During a fourth portion of the animation (D), the morphed FromImage is faded out, and the displayed image (which includes a composite of the morphed ToImage and the morphed fading out FromImage) is still masked to the cross-faded image mask. During a fifth portion of the animation (E), the morphed FromImage has been faded out, and the displayed image (which includes the morphed ToImage but does not include the FromImage) is still masked to a thresholded ToDistanceField. The morphed ToImage is displayed morphing to the final position (which is the non-morphed ToImage that represents the synthesized handwritten strokes), and once the ToImage has morphed to the final position, the animation completes.

In a second implementation, during a first portion of the animation (A: "Pure morph of From Image"): the animation displays the FromImage mesh morphing towards synthesized strokes using the FromImage Morph, and the displayed image is masked to a thresholded version of the FromDistanceField. During a second portion of the animation (B after "Pure morph of From Image"), the FromImage mesh is still being mesh warped towards synthesized strokes using the FromImage Morph, and the ToImage is mesh morphed from original handwritten strokes to the synthesized handwritten strokes using the ToImage Morph. During the second portion of the animation, the FromDistanceField is cross-faded out, and the ToDistanceField is cross-faded in. As the FromDistanceField is cross-faded out, and the ToDistanceField is cross-faded in, the displayed image is the composite of the morphed FromImage with morphed ToImage, and the displayed image (which is the composite of the morphed FromImage with the morphed ToImage) is masked to a threshold version of a combination of the FromDistance Field and the ToDistanceField (FromDistanceField + ToDistanceField). In the displayed image (which is the composite of the morphed FromImage with the morphed ToImage), the percentage of the FromImage that is included in the composite is based on FromDistanceField / (FromDistanceField + ToDistanceField), and the percentage of the ToImage that is included in the composite is based on ToDistanceField / (FromDistanceField + ToDistanceField). During a third portion of the animation (C), the morphed FromImage has been faded out, and the displayed image (which includes the morphed ToImage and but does not include the FromImage) is still masked to a thresholded ToDistanceField. The morphed ToImage is displayed morphing to the final position (which is the non-morphed ToImage that represents the synthesized handwritten strokes), and once the ToImage has morphed to the final position, the animation completes.

In some embodiments, one or more of methods 400, 600, 800, 1000, 1100, and 1200 (FIGS. 4, 6, 8A-8B, 10, 11, and 12) and the methods for displaying an animation that depicts a replacement of strokes of original handwritten text with strokes of synthesized handwritten text is performed at a first computer system (as described herein) via a system process (e.g., an operating system process) that is different from one or more applications executing and/or installed on the first computer system.

In some embodiments, one or more of methods 400, 600, 800, 1000, 1100, and 1200 (FIGS. 4, 6, 8A-8B, 10, 11, and 12) and the methods for displaying an animation that depicts a replacement of strokes of original handwritten text with strokes of synthesized handwritten text is performed at a first computer system (as described herein) by an application that is different from a system process. In some embodiments, the instructions of the application, when executed, control the first computer system to perform one or more of methods 400, 600, 800, 1000, 1100, and 1200 (FIGS. 4, 6, 8A-8B, 10, 11, and 12) and the methods for displaying an animation that depicts a replacement of strokes of original handwritten text with strokes of synthesized handwritten text by calling an application programming interface (API) provided by the system process. In some embodiments, the application performs at least a portion of one or more of methods 400, 600, 800, 1000, 1100, and 1200 (FIGS. 4, 6, 8A-8B, 10, 11, and 12) and the methods for displaying an animation that depicts a replacement of strokes of original handwritten text with strokes of synthesized handwritten text without calling the API. In some embodiments, the application can be any suitable type of application, including, for example, one or more of: a browser application, a super-app that functions as an application execution environment for plug-ins, widgets or other applications, a fitness application, a health application, a digital payments application, a media application, a social network application, a messaging application, and/or a maps application. In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third party application store (e.g., an application store that is provided by another device, downloaded via a network, and/or read from a storage device). In some embodiments, the application is a third party application (e.g., an app that is provided by an application store, downloaded via a network, and/or read from a storage device). In some embodiments, the application controls the first computer system to perform one or more of methods 400, 600, 800, 1000, 1100, and 1200 (FIGS. 4, 6, 8A-8B, 10, 11, and 12) and the methods for displaying an animation that depicts a replacement of strokes of original handwritten text with strokes of synthesized handwritten text by calling an application programming interface (API) provided by the system process using one or more parameters. In some embodiments, exemplary APIs provided by the system process include one or more of: a Pairing API (e.g., for establishing secure connection, e.g., with an accessory), a Device detection API (e.g., for locating nearby devices, e.g., Apple TVs, other iPhones), a UIKit API (e.g., for generating user interfaces), a Location Detection API, a FindMy API, a Maps API, a Health Sensor API, a Sensor API, a Messaging API, a Push Notification API, a Streaming API, a collaboration API, a video conferencing API (e.g., FaceTime/SharePlay API), a web browser API (e.g., WebKit API), a CarPlay API, a Networking API, a WiFi API, a Bluetooth API, an NFC API, a UWB API, a Fitness API, a HomeKit API, NameDrop API, Photos API, Camera API, and/or an Image Processing API. In some embodiments, at least one API is a software module (e.g., a collection of computer-readable instructions) that provides an interface that allows a different module (e.g., API calling module) to access and use one or more functions, methods, procedures, data structures, classes, and/or other services provided by an OS implementation module of the system process. The API can define one or more parameters that are passed between the API calling module and the OS implementation module. The OS implementation module is an operating system software module (e.g., a collection of computer-readable instructions) that is constructed to perform an operation in response to receiving an API call via the API. In some embodiments, the OS implementation module is constructed to provide an API response (via the API) as a result of processing an API call.

The foregoing description, for purpose of explanation, has been described with reference to specific examples. However, the illustrative discussions above are not intended to be exhaustive or to limit the disclosure to the precise forms disclosed. Many modifications and variations are possible in view of the above teachings. The examples were chosen and described in order to best explain the principles of the techniques and their practical applications. Others skilled in the art are thereby enabled to best utilize the techniques and various examples with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve accuracy and efficiency of handwriting recognition, synthesis, reflowing, and/or handwriting. The present disclosure contemplates that in some instances, this gathered data can include personal information data that uniquely identifies or can be used to synthesize, refine, and/or proofread handwriting for a user. Such personal information data can include user interaction data, data from user documents and/or notes, demographics data, location based data, email addresses, and/or any other personal information.

The present disclosure recognizes that the use of such personal information data, in the present technology, can be used to the benefit of users. For example, the personal information data can be used to adapt handwriting synthesis and/or proofreading to a specific user's interaction patterns and/or handwriting style. Accordingly, use of such personal information data enables a more personalized and/or efficient handwriting experience for users. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of image capture, the present technology can be configured to allow users to select to "opt in" or "opt out" of participation in the collection of personal information data during registration for services.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be synthesized, and/or refined by inferring handwriting style based on non-personal information data or a bare minimum amount of personal information, such as the content being requested by the device associated with a user or other non-personal information.

As described herein, content (e.g., synthetic handwritten text) is automatically generated by one or more computers in response to a request (e.g., explicit request or implicit request) to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally includes visual content (e.g., images, graphics, and/or video), audio content, and/or text content.

In some embodiments, novel automatically-generated content that is generated via one or more artificial intelligence (AI) processes is referred to as generative content (e.g., generative images, generative graphics, generative video, generative audio, and/or generative text). Generative content is typically generated by an AI process based on a prompt that is provided to the AI process. An AI process typically uses one or more AI models to generate an output based on an input. An AI process optionally includes one or more pre-processing steps to adjust the input before it is used by the AI model to generate an output (e.g., adjustment to a user-provided prompt, creation of a system-generated prompt, and/or AI model selection). An AI process optionally includes one or more post-processing steps to adjust the output by the AI model (e.g., passing AI model output to a different AI model, upscaling, downscaling, cropping, formatting, and/or adding or removing metadata) before the output of the AI model used for other purposes such as being provided to a different software process for further processing or being presented (e.g., visually or audibly) to a user. An AI process that generates generative content is sometimes referred to as a generative AI process.

A prompt for generating generative content can include one or more of: one or more words (e.g., a natural language prompt that is written or spoken), one or more images, one or more drawings, and/or one or more videos. AI processes can include machine learning models including neural networks. Neural networks can include transformer-based deep neural networks such as large language models (LLMs). Generative pre-trained transformer models are a type of LLM that can be effective at generating novel generative content based on a prompt. Some AI processes use a prompt that includes text to generate either different generative text, generative audio content, and/or generative visual content. Some AI processes use a prompt that includes visual content and/or an audio content to generate generative text (e.g., a transcription of audio and/or a description of the visual content). Some multi-modal AI processes use a prompt that includes multiple types of content (e.g., text, images, audio, video, and/or other sensor data) to generate generative content. A prompt sometimes also includes values for one or more parameters indicating an importance of various parts of the prompt. Some prompts include a structured set of instructions that can be understood by an AI process that include phrasing, a specified style, relevant context (e.g., starting point content and/or one or more examples), and/or a role for the AI process.

Generative content is generally based on the prompt but is not deterministically selected from pre-generated content and is, instead, generated using the prompt as a starting point. In some embodiments, pre-existing content (e.g., audio, text, and/or visual content) is used as part of the prompt for creating generative content (e.g., the pre-existing content is used as a starting point for creating the generative content). For example, a prompt could request that a block of text be summarized or rewritten in a different tone, and the output would be generative text that is summarized or written in the different tone. Similarly a prompt could request that visual content be modified to include or exclude content specified by a prompt (e.g., removing an identified feature in the visual content, adding a feature to the visual content that is described in a prompt, changing a visual style of the visual content, and/or creating additional visual elements outside of a spatial or temporal boundary of the visual content that are based on the visual content). In some embodiments, a random or pseudo-random seed is used as part of the prompt for creating generative content (e.g., the random or pseudo-random seed content is used as a starting point for creating the generative content). For example, when generating an image from a diffusion model, a random noise pattern is iteratively denoised based on the prompt to generate an image that is based on the prompt. While specific types of AI processes have been described herein, it should be understood that a variety of different AI processes could be used to generate generative content based on a prompt.

Some embodiments described herein can include use of artificial intelligence and/or machine learning systems (sometimes referred to herein as the AI/ML systems). The use can include collecting, processing, labeling, organizing, analyzing, recommending and/or generating data. Entities that collect, share, and/or otherwise utilize user data should provide transparency and/or obtain user consent when collecting such data. The present disclosure recognizes that the use of the data in the AI/ML systems can be used to benefit users. For example, the data can be used to train models that can be deployed to improve performance, accuracy, and/or functionality of applications and/or services. Accordingly, the use of the data enables the AI/ML systems to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the AI/ML systems are also contemplated by the present disclosure.

The present disclosure contemplates that, in some embodiments, data used by AI/ML systems includes publicly available data. To protect user privacy, data may be anonymized, aggregated, and/or otherwise processed to remove or to the degree possible limit any individual identification. As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with AI/ML systems, should attempt to comply with well-established privacy policies and/or privacy practices.

For example, such entities may implement and consistently follow policies and practices recognized as meeting or exceeding industry standards and regulatory requirements for developing and/or training AI/ML systems. In doing so, attempts should be made to ensure all intellectual property rights and privacy considerations are maintained. Training should include practices safeguarding training data, such as personal information, through sufficient protections against misuse or exploitation. Such policies and practices should cover all stages of the AI/ML systems development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data being collected and/or accessed and tailored to a specific use case and applicable laws and standards, including jurisdiction-specific considerations.

In some embodiments, AI/ML systems may utilize ML models that may be trained (e.g., supervised learning or unsupervised learning) using various training data, including data collected using a user device. Such use of user-collected data may be limited to operations on the user device. For example, the training of the ML models can be done locally on the user device so no part of the data is sent to another device. In other implementations, the training of the ML models can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained ML models can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML models. Accordingly, user-collected data can be protected. In some implementations, data from multiple devices can be combined in a privacy-preserving manner to train the ML models.

In some embodiments, the present disclosure contemplates that data used for AI/ML systems may be kept strictly separated from platforms where the AI/ML systems are deployed and/or used to interact with users and/or process data. In such embodiments, data used for offline training of the AI/ML systems may be maintained in secured datastores with restricted access and/or not be retained beyond the duration necessary for training purposes. In some embodiments, the AI/ML systems may utilize a local memory cache to store data temporarily during a user session. The local memory cache may be used to improve performance of the AI/ML systems. However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the AI/ML systems. The AI/ML systems should be monitored for changes in underlying data distribution such as concept drift or data skew that can degrade performance of the AI/ML systems over time.

In some embodiments, the AI/ML systems are trained using a combination of offline and online training. Offline training can use curated datasets to establish baseline model performance, while online training can allow the AI/ML systems to continually adapt and/or improve. The present disclosure recognizes the importance of maintaining strict data governance practices throughout this process to ensure user privacy is protected.

In some embodiments, the AI/ML systems may be designed with safeguards to maintain adherence to originally intended purposes, even as the AI/ML systems adapt based on new data. Any significant changes in data collection and/or applications of an AI/ML system use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the AI/ML systems and/or for use as input during the inference stage of such systems. In yet another example, the present technology should be configured to allow users to be able to select to limit the length of time data is maintained or entirely prohibit the use of their data for use by the AI/ML systems. In addition to providing "opt in" and "opt out" options, the present disclosure contemplates providing notifications relating to the access or use of personal information. For instance, a user can be notified when their data is being input into the AI/ML systems for training or inference purposes, and/or reminded when the AI/ML systems generate outputs or make decisions based on their data.

The present disclosure recognizes AI/ML systems should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to third-party products and/or services in the outputs should not be construed as endorsements or affiliations by the entities providing the AI/ML systems. Generated content can be filtered for potentially inappropriate or dangerous material prior to being presented to users, while human oversight and/or ability to override or correct erroneous or undesirable outputs can be maintained as a failsafe.

The present disclosure further contemplates that users of the AI/ML systems should refrain from using the services in any manner that infringes upon, misappropriates, or violates the rights of any party. Furthermore, the AI/ML systems should not be used for any unlawful or illegal activity, nor to develop any application or use case that would commit or facilitate the commission of a crime, or other tortious, unlawful, or illegal act. The AI/ML systems should not violate, misappropriate, or infringe any copyrights, trademarks, rights of privacy and publicity, trade secrets, patents, or other proprietary or legal rights of any party, and appropriately attribute content as required. Further, the AI/ML systems should not interfere with any security, digital signing, digital rights management, content protection, verification, or authentication mechanisms. The AI/ML systems should not misrepresent machine-generated outputs as being human-generated.

Aspects of the invention are disclosed in the following numbered clauses:
1. A method, comprising:
   at a system process of a device:
   receiving, from a first application, a request to synthesize a representation of text;
   in response to receiving the request to synthesize a representation of the text:
      in accordance with a determination that a first set of one or more criteria is satisfied, synthesizing, using a diffusion model, a first representation of the text; and
      in accordance with a determination that a second set of one or more criteria, different from the first set of one or more criteria, is satisfied, synthesizing, using the diffusion model, a second representation of the text different from the first representation of the text;
   after synthesizing the first representation of the text, providing, to the first application, the first representation of the text; and
   after synthesizing the second representation of the text, providing, to the first application, the second representation of the text.
2. The method of clause 1, wherein the request to synthesize a representation of the text corresponds to a request to paste the text.
3. The method of clause 1, wherein the request to synthesize a representation of the text corresponds to a request to change an appearance of handwritten text.
4. The method of clause 3, wherein the device is in communication with one or more input devices, and wherein receiving the request to synthesize a representation of the text includes detecting, via the one or more input devices, a selection input corresponding to a user interface element.
5. The method of clause 3, wherein the device is in communication with one or more input devices, and wherein receiving the request to synthesize a representation of the text includes detecting, via the one or more input devices, a handwritten input corresponding to handwritten text.
6. The method of clause 1, wherein the request to synthesize a representation of the text corresponds to a request to generate handwritten text for a selected proofreading change to existing handwritten text.
7. The method of clause 1, wherein the request to synthesize a representation of the text includes an indication of a local style of handwriting.
8. The method of clause 1, wherein the text is first text, the method further comprising:
   receiving, from a second application different from the first application, a request to synthesize a representation of second text, wherein the request to synthesize a representation of the second text is separate from the request to synthesize a representation of the first text; and
   in response to receiving the request to synthesize a representation of the second text, synthesizing, using the diffusion model, a first representation of the second text; and
   after synthesizing the first representation of the second text, providing, to the second application, the first representation of the second text.
9. The method of clause 1, wherein the first representation of the text includes one or more individual computer-generated handwritten strokes.
10. The method of clause 9, wherein the first representation of the text includes a plurality of individual computer-generated handwritten strokes, and wherein each computer-generated handwritten stroke of the plurality of individual computer-generated handwritten strokes is independently selectable to perform an operation with respect to the computer-generated handwritten stroke.
11. The method of clause 1, wherein the request to synthesize a representation of the text includes the text.
12. The method of clause 1, wherein the request to synthesize a representation of the text includes a transcription of handwritten text.
13. The method of clause 12, wherein the first representation of the text is generated to not share a color, a size, or a combination thereof of the handwritten text, wherein the handwritten text is different from the text.
14. The method of clause 1, wherein the request to synthesize a representation of the text includes an image of content, the method further comprising:
   recognizing the text in the image.
15. The method of clause 1, wherein the text is first text, wherein the first set of one or more criteria includes a criterion that a representation of second text, different from the first representation of the first text, includes a first set of one or more visual characteristics, wherein the first representation of the text is generated to include the first set of one or more visual characteristics, wherein the second set of one or more criteria includes a criterion that the representation of the second text includes a second set of one or more visual characteristics different from the first set of one or more characteristics, and wherein the second representation of the text is generated to include the second set of one or more visual characteristics.
16. The method of clause 1, wherein the text is first text, wherein the first set of one or more criteria includes a criterion that a representation of second text, different from the first representation of the first text, includes a first set of one or more colors, wherein the first representation of the text is generated to include the first set of one or more colors, wherein the second set of one or more criteria includes a criterion that the representation of the second text includes a second set of one or more colors different from the first set of one or more colors, and wherein the second representation of the text is generated to include the second set of one or more colors.
17. The method of clause 1, wherein the text is first text, wherein the first set of one or more criteria includes a criterion that a representation of second text, different from the first representation of the first text, includes a first size, wherein the first representation of the text is generated to include the first size, wherein the second set of one or more criteria includes a criterion that the representation of the second text includes a second size different from the first size, and wherein the second representation of the text is generated to include the second size.
18. The method of clause 1, wherein the text is first text, wherein the first set of one or more criteria includes a criterion that a representation of second text, different from the first representation of the first text, includes a first style, wherein the first representation of the text is generated to include the first style, wherein the second set of one or more criteria includes a criterion that the representation of the second text includes a second style different from the first style, and wherein the second representation of the text is generated to include the second style.
19. The method of clause 1, wherein the text is first text, wherein the first set of one or more criteria includes a criterion that a representation of second text, different from the first representation of the first text, includes a first amount of kerning, wherein the first representation of the text is generated to include the first amount of kerning, wherein the second set of one or more criteria includes a criterion that the representation of the second text includes a second amount of kerning different from the first amount of kerning, and wherein the second representation of the text is generated to include the second amount of kerning.
20. The method of clause 1, further comprising:
   in response to receiving the request to synthesize a representation of the text, wherein the request to synthesize a representation of the text is a request to past copied content:
   in accordance with a determination that the copied content is handwritten text, synthesizing, using the diffusion model, a third representation of the text that is adapted to not include a set of one or more colors of the handwritten text; and
   in accordance with a determination that the copied content is typed text, synthesizing, using the diffusion model, a fourth representation of the text that is adapted to include a set of one or more colors of the typed text.
21. The method of clause 1, further comprising:
   in response to receiving the request to synthesize a representation of the text, wherein the request to synthesize a representation of the text is a request to past copied content and in accordance with a determination that the copied content includes a first set of one or more typographical emphasis and a second set of one or more typographical emphasis different from the first set of one or more typographical emphasis, synthesizing, using the diffusion model, a fifth representation of the text that is adapted to include the first set of one or more typographical emphasis without including the second set of one or more typographical emphasis.
22. The method of clause 1, wherein the text is first text, wherein the request to synthesize a representation of the text corresponds to a first document, wherein the first set of one or more criteria includes a criterion that a representation of second text of a second document includes a first set of one or more visual characteristics, wherein the first representation of the text is generated to include the first set of one or more visual characteristics, wherein the second set of one or more criteria includes a criterion that the representation of the second text includes a second set of one or more visual characteristics different from the first set of one or more characteristics, wherein the second representation of the text is generated to include the second set of one or more visual characteristics, wherein the representation of the second text is different from the first representation of the first text, and wherein the second document is separate from the first document.
23. The method of clause 1, further comprising:
   after synthesizing the first representation of the text, providing, to the first application, the first representation of the text for display by the first application.
24. The method of clause 23, further comprising:
   in conjunction with providing the first representation of the text for display by the first application, providing, to the first application, an identification of word segmentation, an identification of alignment, or a combination thereof of the first representation of the text.
25. A non-transitory computer-readable storage medium storing one or more programs configured to be executed by one or more processors of a device executing a system process, the one or more programs including instructions for:
   receiving, from a first application, a request to synthesize a representation of text;
   in response to receiving the request to synthesize a representation of the text:
      in accordance with a determination that a first set of one or more criteria is satisfied, synthesizing, using a diffusion model, a first representation of the text; and
      in accordance with a determination that a second set of one or more criteria, different from the first set of one or more criteria, is satisfied, synthesizing, using the diffusion model, a second representation of the text different from the first representation of the text;
   after synthesizing the first representation of the text, providing, to the first application, the first representation of the text; and
   after synthesizing the second representation of the text, providing, to the first application, the second representation of the text.
26. A device executing a system process, the device comprising:
   one or more processors; and
   memory storing one or more programs configured to be executed by the one or more processors, the one or more programs including instructions for:
      receiving, from a first application, a request to synthesize a representation of text;
      in response to receiving the request to synthesize a representation of the text:
         in accordance with a determination that a first set of one or more criteria is satisfied, synthesizing, using a diffusion model, a first representation of the text; and
         in accordance with a determination that a second set of one or more criteria, different from the first set of one or more criteria, is satisfied, synthesizing, using the diffusion model, a second representation of the text different from the first representation of the text;
      after synthesizing the first representation of the text, providing, to the first application, the first representation of the text; and
      after synthesizing the second representation of the text, providing, to the first application, the second representation of the text.

## Claims

1. A method, comprising:
at a system process of a device:
receiving, from a first application, a request to synthesize a representation of text;
in response to receiving the request to synthesize a representation of the text:
in accordance with a determination that a first set of one or more criteria is satisfied, synthesizing, using a diffusion model, a first representation of the text; and
in accordance with a determination that a second set of one or more criteria, different from the first set of one or more criteria, is satisfied, synthesizing, using the diffusion model, a second representation of the text different from the first representation of the text;
after synthesizing the first representation of the text, providing, to the first application, the first representation of the text; and
after synthesizing the second representation of the text, providing, to the first application, the second representation of the text.

2. The method of claim 1, wherein the text is first text, the method further comprising:
receiving, from a second application different from the first application, a request to synthesize a representation of second text, wherein the request to synthesize a representation of the second text is separate from the request to synthesize a representation of the first text; and
in response to receiving the request to synthesize a representation of the second text, synthesizing, using the diffusion model, a first representation of the second text; and
after synthesizing the first representation of the second text, providing, to the second application, the first representation of the second text.

3. The method of any one of claims 1-2, wherein the first representation of the text includes one or more individual computer-generated handwritten strokes.

4. The method of claim 3, wherein the first representation of the text includes a plurality of individual computer-generated handwritten strokes, and wherein each computer-generated handwritten stroke of the plurality of individual computer-generated handwritten strokes is independently selectable to perform an operation with respect to the computer-generated handwritten stroke.

5. The method of any one of claims 1-4, wherein the request to synthesize a representation of the text includes an image of content, the method further comprising:
recognizing the text in the image.

6. The method of any one of claims 1-5, wherein the text is first text, wherein the first set of one or more criteria includes a criterion that a representation of second text, different from the first representation of the first text, includes a first set of one or more visual characteristics, wherein the first representation of the text is generated to include the first set of one or more visual characteristics, wherein the second set of one or more criteria includes a criterion that the representation of the second text includes a second set of one or more visual characteristics different from the first set of one or more characteristics, and wherein the second representation of the text is generated to include the second set of one or more visual characteristics.

7. The method of any one of claims 1-6, wherein the text is first text, wherein the first set of one or more criteria includes a criterion that a representation of second text, different from the first representation of the first text, includes a first set of one or more colors, wherein the first representation of the text is generated to include the first set of one or more colors, wherein the second set of one or more criteria includes a criterion that the representation of the second text includes a second set of one or more colors different from the first set of one or more colors, and wherein the second representation of the text is generated to include the second set of one or more colors.

8. The method of any one of claims 1-7, wherein the text is first text, wherein the first set of one or more criteria includes a criterion that a representation of second text, different from the first representation of the first text, includes a first size, wherein the first representation of the text is generated to include the first size, wherein the second set of one or more criteria includes a criterion that the representation of the second text includes a second size different from the first size, and wherein the second representation of the text is generated to include the second size.

9. The method of any one of claims 1-8, wherein the text is first text, wherein the first set of one or more criteria includes a criterion that a representation of second text, different from the first representation of the first text, includes a first style, wherein the first representation of the text is generated to include the first style, wherein the second set of one or more criteria includes a criterion that the representation of the second text includes a second style different from the first style, and wherein the second representation of the text is generated to include the second style.

10. The method of any one of claims 1-9, wherein the text is first text, wherein the first set of one or more criteria includes a criterion that a representation of second text, different from the first representation of the first text, includes a first amount of kerning, wherein the first representation of the text is generated to include the first amount of kerning, wherein the second set of one or more criteria includes a criterion that the representation of the second text includes a second amount of kerning different from the first amount of kerning, and wherein the second representation of the text is generated to include the second amount of kerning.

11. The method of any one of claims 1-10, further comprising:
in response to receiving the request to synthesize a representation of the text, wherein the request to synthesize a representation of the text is a request to past copied content:
in accordance with a determination that the copied content is handwritten text, synthesizing, using the diffusion model, a third representation of the text that is adapted to not include a set of one or more colors of the handwritten text; and
in accordance with a determination that the copied content is typed text, synthesizing, using the diffusion model, a fourth representation of the text that is adapted to include a set of one or more colors of the typed text.

12. The method of any one of claims 1-11, further comprising:
in response to receiving the request to synthesize a representation of the text, wherein the request to synthesize a representation of the text is a request to past copied content and in accordance with a determination that the copied content includes a first set of one or more typographical emphasis and a second set of one or more typographical emphasis different from the first set of one or more typographical emphasis, synthesizing, using the diffusion model, a fifth representation of the text that is adapted to include the first set of one or more typographical emphasis without including the second set of one or more typographical emphasis.

13. The method of any one of claims 1-12, wherein the text is first text, wherein the request to synthesize a representation of the text corresponds to a first document, wherein the first set of one or more criteria includes a criterion that a representation of second text of a second document includes a first set of one or more visual characteristics, wherein the first representation of the text is generated to include the first set of one or more visual characteristics, wherein the second set of one or more criteria includes a criterion that the representation of the second text includes a second set of one or more visual characteristics different from the first set of one or more characteristics, wherein the second representation of the text is generated to include the second set of one or more visual characteristics, wherein the representation of the second text is different from the first representation of the first text, and wherein the second document is separate from the first document.

14. A non-transitory computer-readable medium storing one or more programs configured to be executed by one or more processors of a device executing a system process, the one or more programs including instructions for performing the method of any one of claims 1-13.

15. A device executing a system process, the device comprising:
one or more processors; and
memory storing one or more programs configured to be executed by the one or more processors, the one or more programs including instructions for performing the method of any one of claims 1-14.
